(19) Europäisches Patentamt
European Patent Office
Office européen des brevets

(11) EP 1 771 071 B1

(12) EUROPÄISCHE PATENTSCHRIFT

(45) Veröffentlichungstag und Bekanntmachung des Hinweises auf die Patenterteilung:
**27.02.2008 Patentblatt 2008/09**

(21) Anmeldenummer: **05756429.6**

(22) Anmeldetag: **30.06.2005**

(51) Int Cl.:
***A01N 43/68*** *(2006.01)*

(86) Internationale Anmeldenummer:
**PCT/EP2005/007041**

(87) Internationale Veröffentlichungsnummer:
**WO 2006/007947 (26.01.2006 Gazette 2006/04)**

(54) **HERBIZIDE MITTEL**

HERBICIDAL AGENTS

AGENTS HERBICIDES

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **17.07.2004 DE 102004034571**

(43) Veröffentlichungstag der Anmeldung:
**11.04.2007 Patentblatt 2007/15**

(73) Patentinhaber: **Bayer CropScience AG**
**40789 Monheim (DE)**

(72) Erfinder:
- **HACKER, Erwin**
**65239 Hochheim (DE)**
- **ROSE, Eckhard**
**65835 Liederbach (DE)**
- **DIETRICH, Hansjörg**
**65719 Hofheim (DE)**

(56) Entgegenhaltungen:
**EP-A- 0 464 518**
**EP-A- 0 471 284**
**WO-A-00/16627**
**WO-A-97/31904**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung liegt auf dem technischen Gebiet der Pflanzenschutzmittel, die gegen unerwünschten Pflanzenwuchs in Nichtkulturland, zur Saatvorbereitung oder in Pflanzenkulturen eingesetzt werden können und als Herbizidwirkstoffe eine Kombination von mindestens zwei Herbiziden enthalten, wobei eine Herbizidkomponente aus der Gruppe bestimmter bicyclisch substituierter Azine ausgewählt ist.

Verbindungen aus der Strukturklasse N-substituierter Amino-s-triazine, die an der Aminogruppe bicyclische Reste aufweisen, sind als Herbizide bekannt (siehe z. B. WO-A-97/31904 oder US-A-6069114). Die Verbindungen sind wirksam gegen ein breites Spektrum von Schadpflanzen im Vorauflauf als auch im Nachauflaufapplikationsverfahren, wobei ein nichtselektiver Einsatz zur Bekämpfung von unerwünschtem Pflanzenwuchs oder ein selektiver Einsatz, gegebenenfalls in Kombination mit Safenern, in Pflanzenkulturen möglich ist.

Die Wirksamkeit dieser Herbizide gegen Schadpflanzen liegt auf einem hohen Niveau, hängt jedoch im allgemeinen von der Aufwandmenge, der jeweiligen Zubereitungsform, dem Schadpflanzenspektrum, den jeweils zu bekämpfenden Schadpflanzen, den Klima- und Bodenverhältnissen, etc. ab. Ein weiteres Kriterium ist die Dauer der Wirkung bzw. die Abbaugeschwindigkeit des Herbizids. Zu berücksichtigen sind gegebenenfalls auch Veränderungen in der Empfindlichkeit von Schadpflanzen, die bei längerer Anwendung der Herbizide oder geographisch begrenzt auftreten können. Wirkungsverluste bei einzelnen Pflanzen lassen sich nur bedingt durch höhere Aufwandmengen der Herbizide ausgleichen, z. B. weil damit häufig die Selektivität der Herbizide verschlechtert wird oder eine Wirkungsverbesserung auch bei höherer Aufwandmenge nicht eintritt. Teilweise kann die Selektivität in Kulturen durch Zusatz von Safenern verbessert werden.

Generell besteht jedoch Bedarf für Methoden, die Herbizidwirkung mit geringerer Aufwandmenge an Wirkstoffen zu erreichen. Eine geringere Aufwandmenge reduziert nicht nur die für die Applikation erforderliche Menge eines Wirkstoffs, sondern reduziert in der Regel auch die Menge an nötigen Formulierungshilfsmitteln. Beides verringert den wirtschaftlichen Aufwand und verbessert die ökologische Verträglichkeit der Herbizidbehandlung.

Eine Möglichkeit zur Verbesserung des Anwendungsprofils eines Herbizids kann in der Kombination des Wirkstoffs mit einem oder mehreren anderen Wirkstoffen bestehen, welche die gewünschten zusätzlichen Eigenschaften beisteuern. Allerdings treten bei der kombinierten Anwendung mehrerer Wirkstoffe nicht selten Phänomene der physikalischen und biologischen Unverträglichkeit auf, z. B. mangelnde Stabilität in einer Coformulierung, Zersetzung eines Wirkstoffes bzw. Antagonismus der Wirkstoffe. Erwünscht dagegen sind Kombinationen von Wirkstoffen mit günstigem Wirkungsprofil, hoher Stabilität und möglichst unerwartet synergistisch verstärkter Wirkung, welche eine Reduzierung der Aufwandmenge im Vergleich zur Einzelapplikation der zu kombinierenden Wirkstoffe erlaubt.

Es ist bereits bekannt, dass die Kombination von Herbiziden aus der breit definierten Klasse der Amino-s-triazine, welche mit Arylalkylresten N-substituiert sind, mit anderen Herbiziden synergistische Wirkung ergeben können (siehe WO-A-00/16627). Beispiele für Kombinationen von Amino-s-triazinen, welche bicyclische Reste an der Aminogruppe aufweisen, mit anderen Herbiziden sind darin konkret nicht beschrieben. Wegen der vergleichsweise starken Unterschiede zwischen den Amino-s-triazinen mit Arylalkylresten an der Aminogruppe einerseits und mit bicyclischen Resten andererseits, wobei sich die Unterschiede neben der veränderten Struktur auch an einer veränderten Wirkungscharakteristik beobachten lassen, sind synergistische Effekte für die bicyclisch substituierten Verbindungen, insbesondere einzelner Stereoisomere davon, nicht gleichermaßen zu erwarten.

Überraschenderweise wurde nun gefunden, daß Wirkstoffe des genannten Herbizidtyps in besonders günstiger Weise gegen unterwünschten Pflanzenwuchs wirken, wenn sie in Kombination mit bestimmten strukturell anderen Herbiziden eingesetzt werden. Der Einsatz gilt vorzugsweise für Nichtkulturland, Plantagenkulturen und Kulturen, die gegen die Anwendung der Herbizide, gegebenenfalls unter Zusatz von Safenern, weitgehend tolerant sind.

Gegenstand der Erfindung sind somit Herbizid-Kombinationen mit einem wirksamen Gehalt an Komponenten (A) und (B), wobei Komponente (A) ein oder mehrere Herbizide der Formel (I) oder deren Salze [Herbizide (A)],

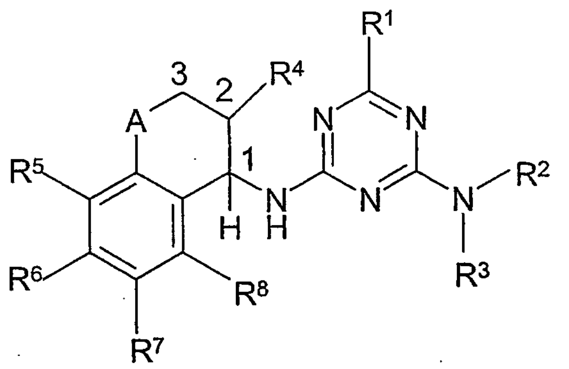

(I)

worin

| | |
|---|---|
| $R^1$ | H oder eine Gruppe der Formel $CZ^1Z^2Z^3$, wobei<br>$Z^1$ H, Halogen, $(C_1-C_6)$Alkyl, $(C_1-C_6)$Haloalkyl, $[(C_1-C_4)$Alkoxy$]-(C_1-C_6)$alkyl, $(C_3-C_6)$Cycloalkyl, das unsubstituiert oder durch einen oder mehrere Reste aus der Gruppe Halogen, $(C_1-C_4)$ Alkyl und $(C_1-C_4)$Haloalkyl substituiert ist, oder $(C_2-C_6)$Alkenyl, $(C_2-C_6)$Alkinyl, $(C_2-C_6)$Haloalkenyl, $(C_4-C_6)$Cycloalkenyl, $(C_4-C_6)$Halocycloalkenyl, $(C_1-C_6)$Alkoxy oder $(C_1-C_6)$Haloalkoxy,<br>$Z^2$ H, Halogen, $(C_1-C_6)$Alkyl oder $(C_1-C_4)$Alkoxy; oder<br>$Z^1$ und $Z^2$ zusammen mit dem Kohlenstoffatom der Gruppe $CZ^1Z^2Z^3$ einen $(C_3-C_6)$Cycloalkylrest oder $(C_4-C_6)$Cycloalkenylrest; wobei jeder der beiden letztgenannten Reste unsubstituiert oder durch einen oder mehrere Reste aus der Gruppe $(C_1-C_4)$Alkyl substituiert ist, und<br>$Z^3$ H, $(C_1-C_6)$Alkyl, $(C_1-C_4)$Alkoxy oder Halogenbedeuten, |
| $R^2$ und $R^3$ | jeweils unabhängig voneinander H, $(C_1-C_4)$Alkyl, $(C_1-C_4)$Haloalkyl, $(C_3-C_4)$Alkenyl, $(C_3-C_4)$ Haloalkenyl, $(C_3-C_4)$Alkinyl, $(C_3-C_4)$Haloalkinyl oder einen Acylrest, |
| $R^4$ | H, $(C_1-C_6)$Alkyl oder $(C_1-C_6)$Alkoxy, |
| $R^5$, $R^6$, und $R^7$ und $R^8$ | jeweils unabhängig voneinander H, $(C_1-C_4)$Alkyl, $(C_1-C_3)$Haloalkyl, Halogen, $(C_1-C_3)$Alkoxy, $(C_1-C_3)$Haloalkoxy oder Cyano und |
| A | eine divalente Gruppe der Formel $CH_2$ oder O oder eine direkte Bindung |

bedeuten,
und
Komponente (B) ein oder mehrere strukturell zu den jeweils enthaltenen Herbiziden (A) unterschiedliche Herbizide (B) aus der Gruppe der Verbindungen, welche aus

(B1) bodenwirksamen Herbiziden, welche besonders für die preemergente Applikation gegen monokotyle oder dikotyle Schadpflanzen geeignet sind,
(B2) blattwirksamen Herbiziden, welche besonders für die postemergente Applikation gegen monokotyle oder dikotyle Schadpflanzen geeignet sind, und
(B3) boden- und blattwirksamen Herbiziden, welche für die pre- oder postemergente Applikation gegen monokotyle oder dikotyle Schadpflanzen geeignet sind,

besteht,
bedeuten.

Die erfindungsgemäßen Herbizid-Kombinationen können weitere Komponenten enthalten, z. B. andere Wirkstoffe gegen Schadorganismen wie Schadpflanzen, pflanzenschädliche Tiere oder pflanzenschädliche Pilze, insbesondere dabei Wirkstoffe aus der Gruppe Herbizide, Fungizide, Insektizide, Akarizide, Nematizide und Mitizide und verwandte Stoffe, oder auch Pflanzenschutzmittelwirkstoffe anderer Art (z. B. Safener, Resistenzinduktoren), Pflanzenwachstumsregulatoren und/oder im Pflanzenschutz übliche Zusatzstoffe und/oder Formulierungshilfsmittel. Die Komponenten können dabei gemeinsam formuliert (Fertigformulierung) und angewendet werden oder sie können getrennt formuliert und gemeinsam angewendet werden, z. B. im Tank-Mix oder in sequentieller Applikation.

Die als Komponente (A) enthaltenen einzelnen Herbizide der Formel (I) werden im Folgenden auch als Verbindungen (A) oder Wirkstoffe (A) bezeichnet. Entsprechend werden die als Komponente (B) enthaltenen einzelnen Herbizide im Folgenden auch als Verbindungen (B) oder Wirkstoffe (B) bezeichnet.

Die synergistischen Wirkungen werden bei gemeinsamer Ausbringung der Wirkstoffe (A) und (B) beobachtet, können jedoch auch häufig bei zeitlich versetzter Anwendung (Splitting) auftreten. Möglich ist auch die Anwendung der Herbizide oder der Herbizid-Kombinationen in mehreren Portionen (Sequenzanwendung), z. B. nach einer oder mehreren Anwendungen im Vorauflauf kann eine Nachauflauf-Applikation erfolgen, oder nach einer frühen Nachauflaufanwendung folgt eine Applikationen im mittleren oder späten Nachauflauf. Bevorzugt ist dabei die gemeinsame oder die zeitnahe Anwendung der Wirkstoffe der jeweiligen Kombination, gegebenenfalls in mehreren Portionen. Aber auch die zeitversetzte Anwendung der Einzelwirkstoffe einer Kombination ist möglich und kann im Einzelfall vorteilhaft sein. In diese Systemanwendung können auch andere Pflanzenschutzmittel wie die erwähnten Wirkstoffe (Fungizide, Insektizide, Akarizide etc.) und/oder verschiedene Hilfsstoffe, Adjuvantien und/oder Düngergaben integriert werden.

Unter Anwendung im Vorauflauf- oder Nachauflaufverfahren ist je nach Zusammenhang, in dem die Bezeichnungen verwendet werden, die Anwendung der Wirkstoffe vor dem bzw. nach dem obererdig sichtbaren Erscheinen der Schadpflanzen zu verstehen oder die Anwendung der Wirkstoffe gegen die Schadpflanzen vor Auflauf der Kulturpflanzen bzw. nach Auflauf der Kulturpflanzen zu verstehen.

Mit dem kombinierten Einsatz der Herbizide (A) und (B) werden anwendungstechnische Eigenschaften erreicht, die über das hinausgehen, was aufgrund der bekannten Eigenschaften der Einzelherbizide für deren Kombination zu erwarten war. Die synergistischen Effekte erlauben beispielsweise eine Reduktion der Aufwandmengen der Einzelwirkstoffe, eine höhere Wirkungsstärke bei gleicher Aufwandmenge, die Kontrolle bislang nicht erfasster Arten von Schadpflanzen (Lücken), eine erhöhte Residualwirkung, eine erhöhte Langzeitwirkung, eine erhöhte Wirkungsgeschwindingkeit, eine Ausdehnung des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.

In der Formel (I) für Verbindungen der herbiziden Wirkkomponente (A) und allen nachfolgenden Formeln gelten folgende Definitionen:

Die Formel (I) umfasst auch alle Stereoisomere der Verbindungen, deren spezifische stereochemische Konfiguration durch die Formel nicht explizit ausgedrückt wird, und deren Gemische. Solche Verbindungen der Formel (I) enthalten ein oder mehrere asymmetrische C-Atome oder auch Doppelbindungen, die in den allgemeinen Formeln (I) nicht gesondert angegeben sind. Die durch ihre spezifische Raumform definierten möglichen Stereoisomere, wie Enantiomere, Diastereomere, Z- und E-Isomere sind alle von der Formel (I) umfaßt und können nach üblichen Methoden aus Gemischen der Stereoisomere erhalten werden oder auch durch stereoselektive Reaktionen in Kombination mit dem Einsatz von stereochemisch reinen Ausgangsstoffen hergestellt werden.

Die Verbindungen der Formel (I) können durch Anlagerung einer geeigneten anorganischen oder organischen Säure, wie beispielsweise HCl, HBr, $H_2SO_4$ oder $HNO_3$ aber auch Oxalsäure oder Sulfonsäuren an eine basische Gruppe, wie z.B. Amino oder Alkylamino, Salze bilden. Geeignete Substituenten, die in deprotonierter Form, wie z.B. Sulfonsäuren oder Carbonsäuren, vorliegen, können innere Salze mit ihrerseits protonierbaren Gruppen, wie Aminogruppen bilden.

Salze können ebenfalls dadurch gebildet werden, daß bei geeigneten Substituenten, wie z.B. Sulfonsäuren oder Carbonsäuren, der Wasserstoff durch ein für die Landwirtschaft geeignetes Kation ersetzt wird. Diese Salze sind beispielsweise Metallsalze, insbesondere Alkalimetallsalze oder Erdalkalimetallsalze, insbesondere Natrium- und Kaliumsalze, oder auch Ammoniumsalze, Salze mit organischen Aminen oder quartäre (quaternäre) Ammoniumsalze.

Der Ausdruck "$(C_1-C_4)$Alkyl" bedeutet eine Kurzschreibweise für offenkettiges Alkyl mit einem bis 4 Kohlenstoffatomen, d. h. umfasst die Reste Methyl, Ethyl, 1-Propyl, 2-Propyl, 1-Butyl, 2-Butyl, 2-Methylpropyl oder tert-Butyl. Allgemeine Alkylreste mit einem größeren angegebenen Bereich von C-Atomen, z. B. "$(C_1-C_6)$Alkyl" umfassen entsprechend auch gradkettige oder verzweigte Alkylreste mit einer größeren Zahl von C-Atomen, d. h. gemäß Beispiel auch die Alkylreste mit 5 und 6 C-Atomen. Wenn nicht speziell angegeben, sind bei den Kohlenwasserstoffresten wie Alkyl-, Alkenyl- und Alkinylresten, auch in zusammengesetzten Resten, die niederen Kohlenstoffgerüste, z.B. mit 1 bis 6 C-Atomen bzw. bei ungesättigten Gruppen mit 2 bis 6 C-Atomen, bevorzugt. Alkylreste, auch in den zusammengesetzten Bedeutungen wie Alkoxy, Haloalkyl usw., bedeuten z.B. Methyl, Ethyl, n- oder i-Propyl, n-, i-, t- oder 2-Butyl, Pentyle, Hexyle, wie n-Hexyl, i-Hexyl und 1,3-Dimethylbutyl, Heptyle, wie n-Heptyl, 1-Methylhexyl und 1,4-Dimethylpentyl; Alkenyl- und Alkinylreste haben die Bedeutung der den Alkylresten entsprechenden möglichen ungesättigten Reste; Alkenyl bedeutet z.B. Vinyl, Allyl, 1-Methyl-2-propenyl, 2-Methyl-2-propenyl, 2-Butenyl, Pentenyl, 2-Methylpentenyl oder Hexenyl group, vorzugsweise Allyl, 1-Methylprop-2-en-1-yl, 2-Methyl-prop-2-en-1-yl, But-2-en-1-yl, But-3-en-1-yl, 1-Methyl-but-3-en-1-yl oder 1-Methyl-but-2-en-1-yl. $(C_2-C_6)$Alkinyl bedeutet beispielsweise Ethinyl, Propargyl, 1-Methyl-2-propinyl, 2-Methyl-2-propinyl, 2-Butinyl, 2-Pentinyl oder 2-Hexinyl, vorzugsweise Propargyl, But-2-in-1-yl, But-3-in-1-yl oder 1-Methyl-but-3-in-1-yl.

Cycloalkyl bedeutet ein carbocyclisches, gesättigtes Ringsystem mit vorzugsweise 3-8 C-Atomen, z.B. Cyclopropyl, Cyclobutyl, Cyclopentyl oder Cyclohexyl.

Cycloalkenyl bedeutet ein carbocyclisches, nicht aromatisches, partiell ungesättigtes Ringsystem mit vorzugsweise 4-8 C-Atomen, z.B. 1-Cyclobutenyl, 2-Cyclobutenyl, 1-Cyclopentenyl, 2-Cyclopentenyl, 3-Cyclopentenyl, oder 1-Cyclohexenyl, 2-Cyclohexenyl, 3-Cyclohexenyl, 1,3-Cyclohexadienyl oder 1,4-Cyclohexadienyl.

Halogen bedeutet beispielsweise Fluor, Chlor, Brom oder Iod. Haloalkyl, -alkenyl und -alkinyl bedeuten durch gleiche oder verschiedene Halogenatome, vorzugsweise aus der Gruppe Fluor, Chlor und Brom, insbesondere aus der Gruppe Fluor und Chlor, teilweise oder vollständig substituiertes Alkyl, Alkenyl bzw. Alkinyl, z.B. Monohaloalkyl (= Monohalogenalkyl), Perhaloalkyl, $CF_3$, $CHF_2$, $CH_2F$, $CF_3CF_2$, $CH_2FCHCl$, $CCl_3$, $CHCl_2$, $CH_2CH_2Cl$; Haloalkoxy ist z.B. $OCF_3$, $OCHF_2$, $OCH_2F$, $CF_3CF_2O$ $OCH_2CF_3$ und $OCH_2CH_2Cl$; Entsprechendes gilt für Haloalkenyl und andere durch Halogen substituierte Reste.

Bei Resten mit C-Atomen sind solche mit 1 bis 4 C-Atomen, vorzugsweise 1 oder 2 C-Atomen bevorzugt. Bevorzugt sind in der Regel Substituenten aus der Gruppe Halogen, z.B. Fluor und Chlor, $(C_1-C_4)$Alkyl, vorzugsweise Methyl oder Ethyl, $(C_1-C_4)$Haloalkyl, vorzugsweise Trifluormethyl, $(C_1-C_4)$Alkoxy, vorzugsweise Methoxy oder Ethoxy, $(C_1-C_4)$Haloalkoxy, Nitro und Cyano. Besonders bevorzugt sind dabei die Substituenten Methyl, Methoxy, Fluor und Chlor.

Acyl bedeutet einen Rest einer organischen Säure, der formal durch Abtrennen einer Hydroxygruppe an der Säurefunktion entsteht, wobei der organische Rest in der Säure auch über ein Heteroatom mit der Säurefunktion verbunden sein kann. Beispiele für Acyl sind der Rest -CO-R einer Carbonsäure HO-CO-R und Reste davon abgeleiteter Säuren wie der Thiocarbonsäure, gegebenenfalls N-substituierten Iminocarbonsäuren oder der Rest von Kohlensäuremonoestern, N-substituierter Carbaminsäure, Sulfonsäuren, Sulfinsäuren, N-substituierter Sulfonamidsäuren, Phosphonsäuren, Phosphinsäuren.

Acyl bedeutet beispielsweise Formyl, Alkylcarbonyl wie $[(C_1-C_4)$Alkyl]-carbonyl, Phenylcarbonyl, Alkyloxycarbonyl, Phenyloxycarbonyl, Benzyloxycarbonyl, Alkylsulfonyl, Alkylsulfinyl, N-Alkyl-1-iminoalkyl und andere Reste von organischen Säuren. Dabei können die Reste jeweils im Alkyl- oder Phenylteil noch weiter substituiert sein, beispielsweise im Alkylteil durch ein oder mehrere Reste aus der Gruppe Halogen, Alkoxy, Phenyl und Phenoxy; Beispiele für Substituenten im Phenylteil sind die bereits weiter oben allgemein für substituiertes Phenyl erwähnten Substituenten.

Acyl bedeutet vorzugsweise einen Acylrest im engeren Sinne, d. h. einen Rest einer organischen Säure, bei der die Säuregruppe direkt mit dem C-Atom eines organischen Restes verbunden ist, beispielsweise Formyl, Alkylcarbonyl wie Acetyl oder $[(C_1-C_4)$Alkyl]-carbonyl, Phenylcarbonyl, Alkylsulfonyl, Alkylsulfinyl und andere Reste von organischen Säuren.

Wenn ein allgemeiner Rest mit "Wasserstoff" bezeichnet (definiert) ist, bedeutet dies ein gebundenes Wasserstoffatom.

Mit "yl-Position" eines Restes (z. B. eines Alkylrestes) ist dessen Bindungstelle bezeichnet.

Im Folgenden werden erfindungsgemäß einsetzbare Verbindungen der Formel (I) und deren Salze auch kurz als "erfindungsgemäße Verbindungen (I)" bezeichnet.

Die Verbindungen der Formel (I) sind im Prinzip aus WO 97/31904 bekannt oder können nach den dort beschriebenen Verfahren hergestellt werden. Von besonderem Interesse sind dabei Verbindungen der Formel (1) oder deren Salze,

worin

| | |
|---|---|
| $R^1$ | H oder eine Gruppe der Formel $CZ^1Z^2Z^3$, worin<br>$Z^1$ H, Halogen, $(C_1-C_4)$Alkyl, $(C_1-C_4)$Haloalkyl, $[(C_1-C_4)$AlkoXy]-$(C_1-C_6)$alkyl, $(C_3-C_6)$Cycloalkyl, das unsubstitutiert oder durch einen oder mehrere Reste aus der Gruppe $(C_1-C_4)$Alkyl substituiert ist, oder<br>$(C_2-C_4)$alkenyl, $(C_2-C_4)$alkinyl, $(C_1-C_4)$Alkoxy oder $(C_1-C_4)$Haloalkoxy;<br>$Z^2$ H, Halogen, $(C_1-C_4)$Alkyl oder<br>$Z^1$ und $Z^2$ zusammen mit dem an die Reste gebundenen Kohlenstoffatom einen $(C_3-C_6)$ Cycloalkylrest und<br>$Z^3$ H, $(C_1-C_4)$Alkyl, $(C_1-C_2)$Alkoxy oder Halogen,bedeuten, |
| $R^2$ | H, $(C_1-C_4)$Alkyl, $(C_1-C_4)$Haloalkyl, $(C_3-C_4)$Alkenyl, $(C_3-C_4)$Haloalkenyl, $(C_3-C_4)$Alkinyl, $(C_3-C_4)$Haloalkinyl oder einen Acylrest mit 1 bis 12 C-Atomen (vorzugsweise für Acyl Reste aus der Gruppe Formyl, Phenylcarbonyl, Phenoxycarbonyl, wobei Phenyl in den beiden letztgenannten Resten unsubstituiert oder durch einen oder mehrere Reste aus der Gruppe Halogen, $(C_1-C_2)$Alkyl, $(C_1-C_2)$Haloalkyl, $(C_1-C_2)$Alkoxy, $(C_1-C_2)$Haloalkoxy und Nitro substituiert ist, oder $(C_1-C_6)$Alkyl-carbonyl, $(C_1-C_6)$Alkoxy-carbonyl oder $(C_1-C_6)$Alkyl-sulfonyl), |
| $R^3$ | H, $(C_1-C_4)$Alkyl oder $(C_1-C_4)$Haloalkyl, |
| $R^4$ | H, $(C_1-C_3)$Alkyl oder $(C_1-C_3)$Alkoxy, |
| $R^5$, $R^6$, und $R^7$ und $R^8$ | jeweils unabhängig voneinander H, $(C_1-C_3)$Alkyl, Halogen, $(C_1-C_3)$Alkoxy und |
| A | eine divalente Gruppe der Formel $CH_2$ oder O oder eine direkte Bindung, vorzugsweise $CH_2$ oder eine direkte Bindung, insbesondere eine direkte Bindung, |

bedeuten.

Bevorzugt sind optisch aktive Verbindungen der Formel (1) und deren Salze, worin die stereochemische Konfiguration an dem in Formel (1) mit 1 markierten C-Atom die (R)-Konfiguration mit einer stereochemischen Reinheit von 60 bis 100 % (R), vorzugsweise 70-100 % (R), insbesondere 80 bis 100 % (R), jeweils bezogen auf den Gehalt an Stereoisomeren mit (R)- und (S)-Konfiguration an dieser Position, ist. Es wird davon ausgegangen, dass die Konfiguration nach dem Cahn-Ingold-Prelog-System bestimmt ist, wobei die folgende Rangfolge der Substituenten an der Position 1 gilt:

1. Priorität hat substituiertes NH; 2. Priorität hat die Bindung zum Phenylring; 3. Priorität hat das andere Ring C-Atom, 4. Priorität hat das Wasserstoffatom. Weiter bevorzugt sind optisch aktive Verbindungen der Formel (1) und deren Salze, worin $R^1$ eine Gruppe der Formel $CZ^1Z^2Z^3$ ist, wobei $CZ^1Z^2Z^3$ wie vorstehend definiert ist, insbesondere solche Verbindungen, worin die stereochemische Konfiguration an dem C-Atom der Gruppe $CZ^1Z^2Z^3$ die (R,S)-Konfiguration ist oder die (R)-Konfiguration mit einer stereochemischen Reinheit von 60 bis 100 % (R), vorzugsweise 70-100 % (R), insbesondere 80 bis 100 % (R), jeweils bezogen auf den Gehalt an Stereoisomeren mit (R)- und (S)-Konfiguration an dieser Position, ist.

Als Kombinationspartner (A) kommen beispielsweise bestimmte Verbindungen der Formel (I) aus der unten stehenden Tabelle 1 in Betracht.

Anmerkungen vor Tabelle 1:

In der Tabelle 1 sind die Verbindungen durch die chemische Formel der Hauptkomponente bezeichnet, wobei diese Komponente in einer chemischen Reinheit von mindestens 95 Gewichtsprozent der Verbindung vorliegt. Naturgemäß können die Verbindungen auch mit niedrigeren Reinheiten eingesetzt werden. Insbesondere wenn Nebenkomponenten der Verbindungen überwiegend oder ganz aus wirksamen Stereoisomeren der jeweiligen Verbindungen (A) bestehen, werden bei der Anwendung ähnliche Wirksamkeiten erreicht. Bevorzugt sind als Herbizide (A) deshalb auch Mischungen von zwei oder mehreren Verbindungen (A) aus der Tabelle 1. Aus Gründen der einfacheren Herstellbarkeit sind praktisch vor allem auch Herbizide (A) bevorzugt, welche als Hauptkomponente eine Verbindung (A) aus der Tabelle 1 und als Nebenkomponenten Stereoisomere der Verbindung (A), vorzugsweise solche, welche auch in der Tabelle 1 erwähnt sind, enthalten.

Wenn in der jeweiligen chemischen Formel in Tabelle 1 die stereochemische Orientierung an einem C-Atom angezeigt wird und zusätzlich die stereochemische Orientierung nach dem System von Cahn, Ingold und Prelog bezeichnet ist, so handelt es sich bei der Hauptkomponente der Verbindung um ein Stereoisomer oder Stereoisomerengemisch, das an dem bezeichneten C-Atom die R- oder S-Konfiguration aufweist; die Verbindung (A) ist somit optisch aktiv.

Ist die Stereochemie nicht mit R- oder S-Konfiguration bezeichnet, so handelt es sich bei der Hauptkomponente um eine Verbindung, die an dem betreffenden C-Atom die RS-Konfiguration (racemisch) aufweist.

Sind mehrere Stereozentren vorhanden und jeweils die Konfiguration mit R oder S bezeichnet, handelt es sich um optisch aktive Verbindungen mit der genannten Stereochemie an den bezeichneten Zentren.

Ist bei mehreren Zentren keine Konfiguration mit R oder S angegeben, handelt es sich um racemische Gemische, d. h. darin enthaltene spiegelbildliche Stereoisomere (Enantiomere eines Enantiomerenpaars) sind in gleichen Anteilen im Gemisch enthalten. Wenn nicht näher angegeben, sind in Tabelle 1 bei racemischen Verbindungen (A) mit mehreren Stereozentren die diastereomeren Komponenten näherungsweise in gleichen Anteilen enthalten. Für die praktische Anwendung kommen aber bei racemischen Verbindungen mit mehreren Stereozentren Gemische von Diastereomeren (jeweils in racemischer Form) mit unterschiedlichen Anteilen der diastereomeren Komponenten in Frage.

Das an die Aminogruppe gebundene C-Atom des bicyclischen Restes ist C-Atom 1. Das direkt am Triazinring gebundene C-Atom der Seitengruppe (falls der Rest nicht H bedeutet), ist mit 1 * bezeichnet.

Tabelle 1: Verbindungen der Formel (I) (Herbizid (A)):

| Verbindung Nr. | Chemische Formel oder chemische Bezeichnung |
| --- | --- |
| A1 | 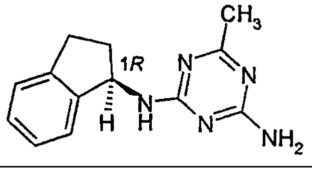 |

(fortgesetzt)

| Verbindung Nr. | Chemische Formel oder chemische Bezeichnung |
|---|---|
| A2 | 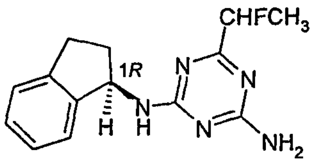 |
| A3 | 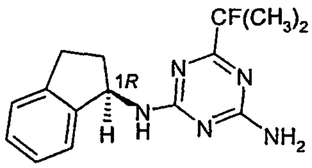 |
| A4 | 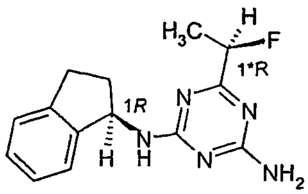 |
| A5 | 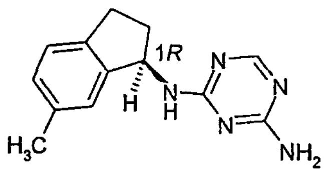 |
| A6 | 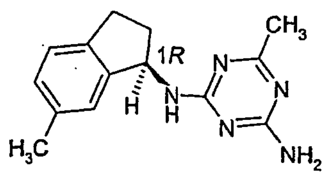 |
| A7 | 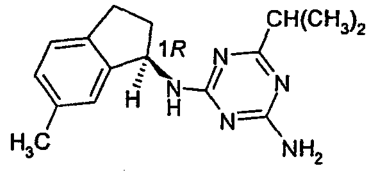 |
| A8 | 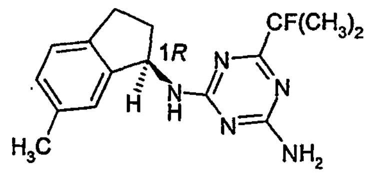 |
| A9 | 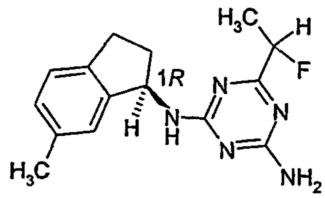 |

(fortgesetzt)

| Verbindung Nr. | Chemische Formel oder chemische Bezeichnung |
|---|---|
| A10 | 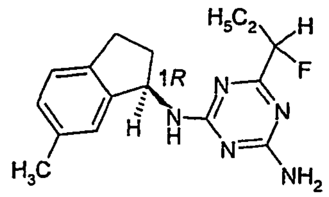 |
| A11 | 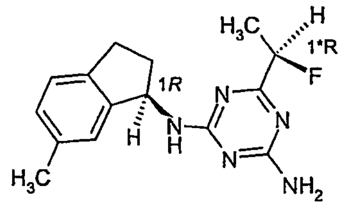 |
| A12 | 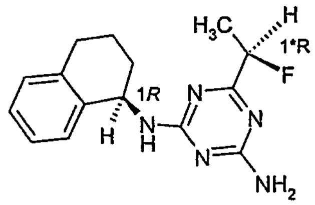 |
| A13 | 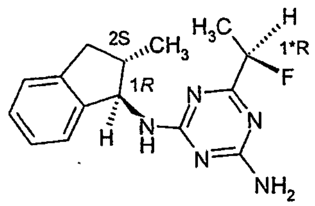 |
| A14 | 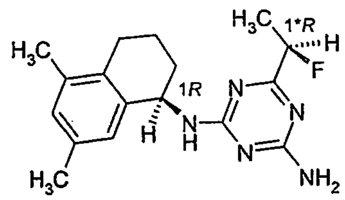 |
| A15 | 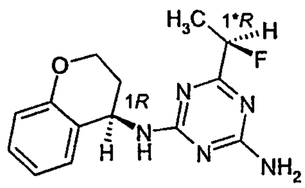 |
| A16 | 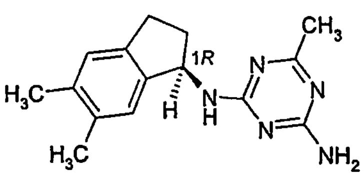 |

(fortgesetzt)

| Verbindung Nr. | Chemische Formel oder chemische Bezeichnung |
|---|---|
| A17 | 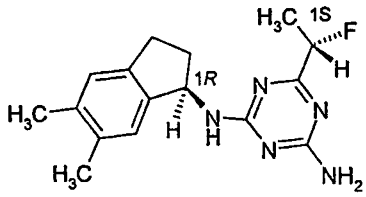 |
| A18 | 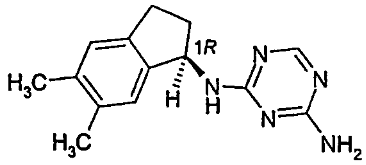 |
| A19 | 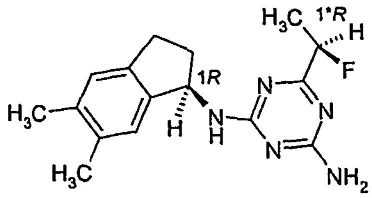 |
| A20 | 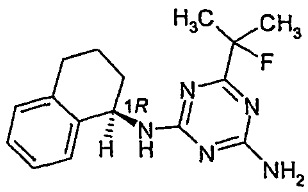 |
| A21 | 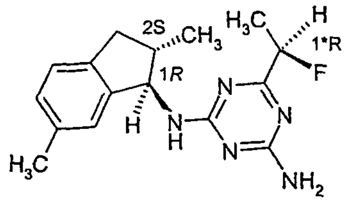 |
| A22 | 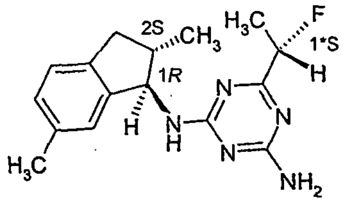 |
| A23 | 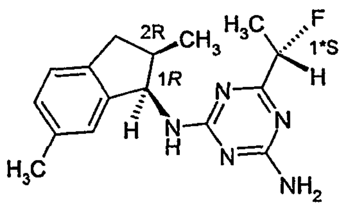 |

(fortgesetzt)

| Verbindung Nr. | Chemische Formel oder chemische Bezeichnung |
|---|---|
| A24 | 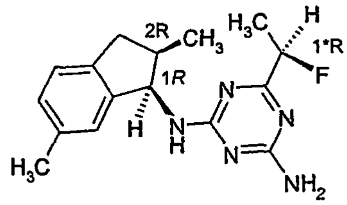 |
| A25 | 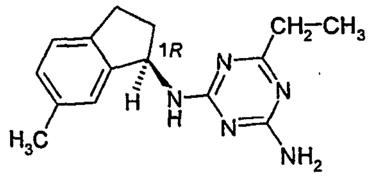 |
| A26 | 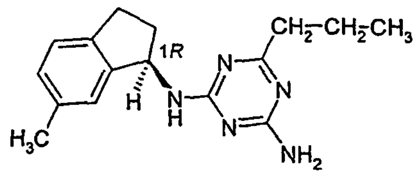 |
| A27 | 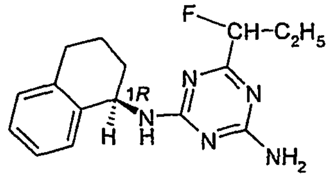 |
| A28 | 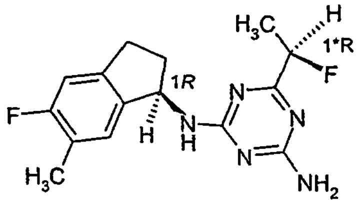 |
| A29 | 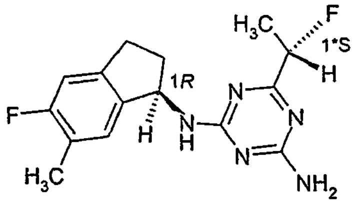 |
| A30 | 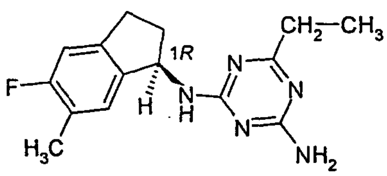 |
| A31 | 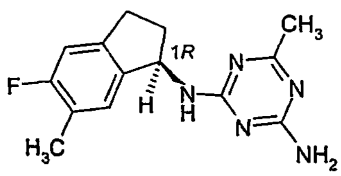 |

(fortgesetzt)

| Verbindung Nr. | Chemische Formel oder chemische Bezeichnung |
|---|---|
| A32 | 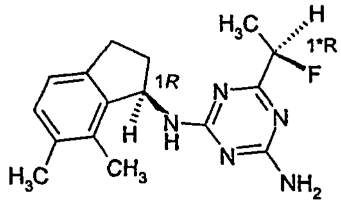 |
| A33 | 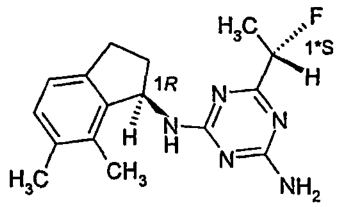 |
| A34 | 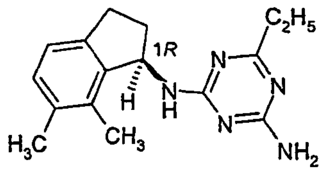 |
| A35 | 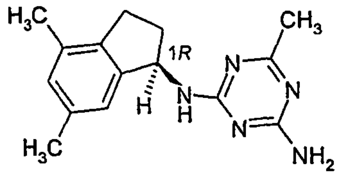 |
| A36 | 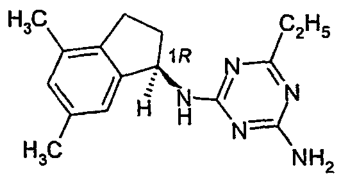 |
| A37 | 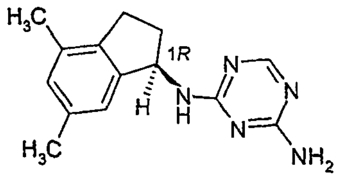 |
| A38 | 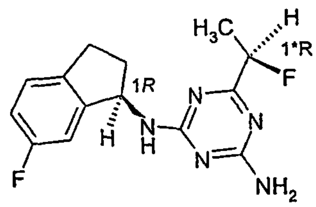 |
| A39 | 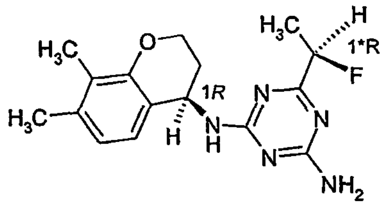 |

(fortgesetzt)

| Verbindung Nr. | Chemische Formel oder chemische Bezeichnung |
|---|---|
| A40 | 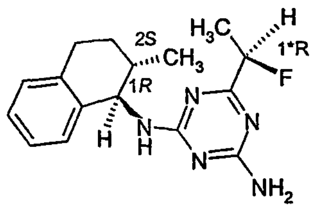 |
| A41 | 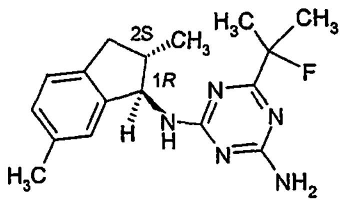 |
| A42 | 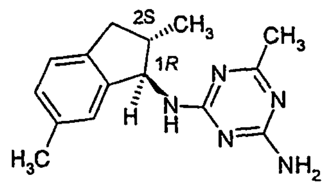 |
| A43 | 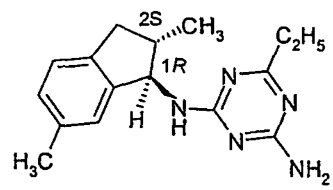 |
| A44 | 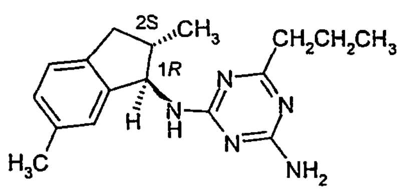 |
| A45 | 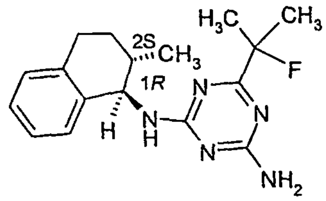 |
| A46 | 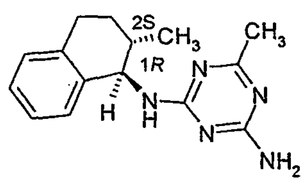 |
| A47 | 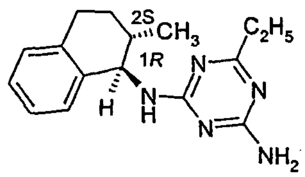 |

(fortgesetzt)

| Verbindung Nr. | Chemische Formel oder chemische Bezeichnung |
|---|---|
| A48 | 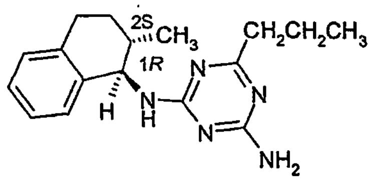 |
| A49 | 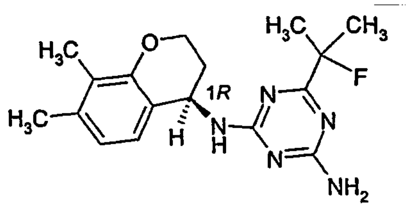 |
| A50 | 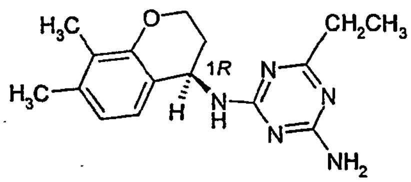 |
| A51 | 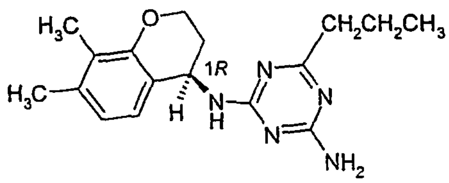 |
| A52 | 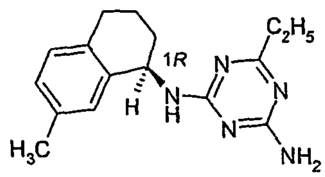 |
| A53 | 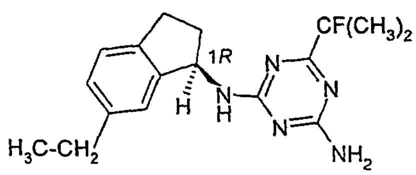 |
| A54 | 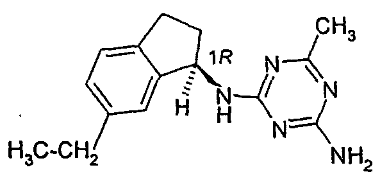 |
| A55 | 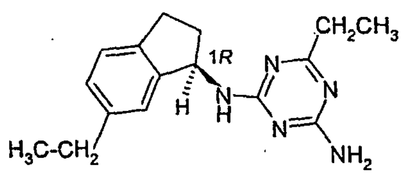 |

(fortgesetzt)

| Verbindung Nr. | Chemische Formel oder chemische Bezeichnung |
|---|---|
| A56 | 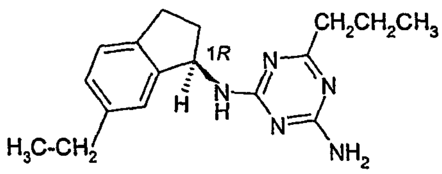 |
| A57 | 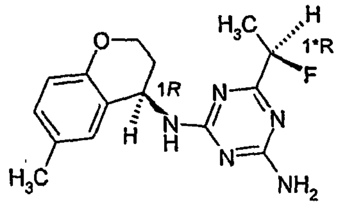 |
| A58 | 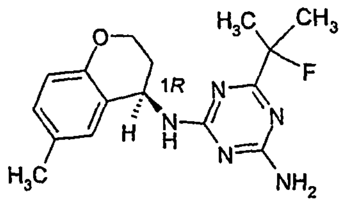 |
| A59 | 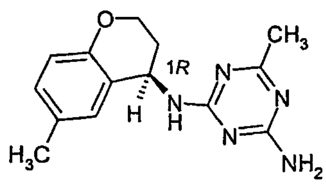 |
| A60 | 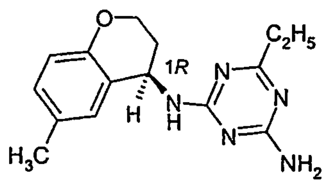 |
| A61 | 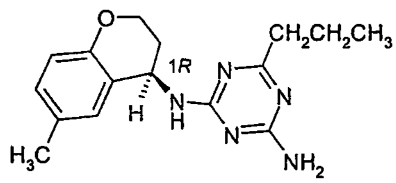 |
| A62 | 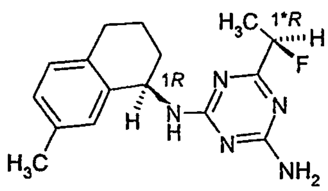 |
| A63 | 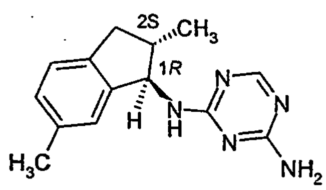 |

(fortgesetzt)

| Verbindung Nr. | Chemische Formel oder chemische Bezeichnung |
|---|---|
| A64 | 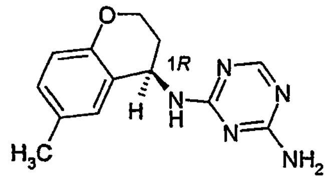 |
| A65 | 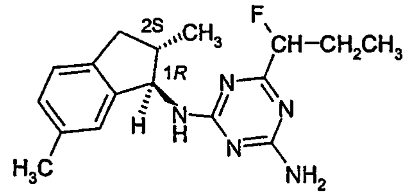 |
| A66 | 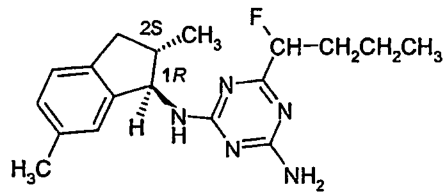 |
| A67 | 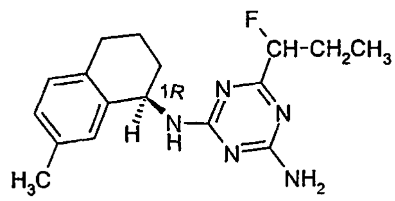 |
| A68 | 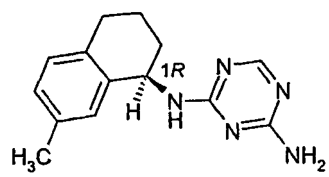 |
| A69 | 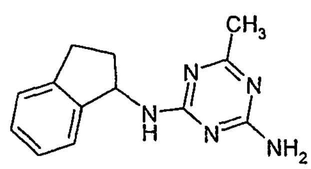 |
| A70 | 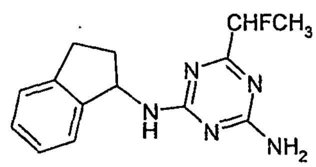 |
| A71 | 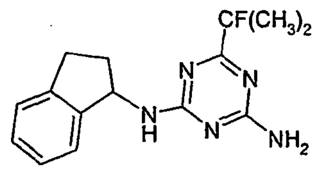 |

(fortgesetzt)

| Verbindung Nr. | Chemische Formel oder chemische Bezeichnung |
|---|---|
| A72 | 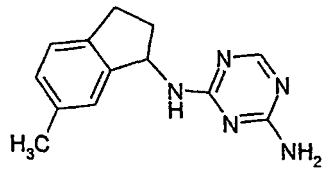 |
| A73 | 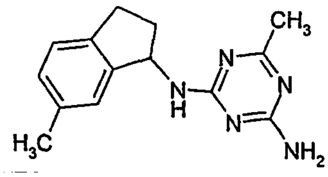 |
| A74 | 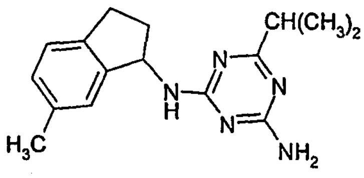 |
| A75 | 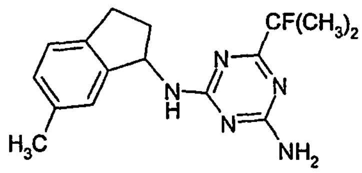 |
| A76 | 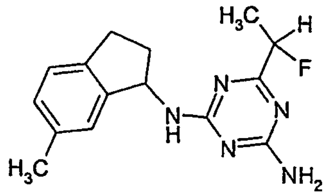 |
| A77 | 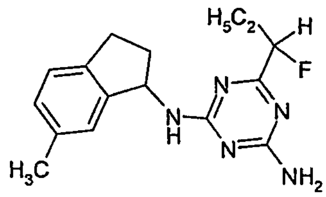 |
| A78 | 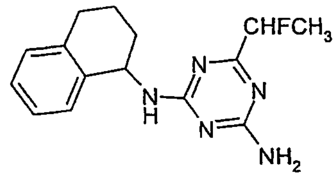 |
| A79 | 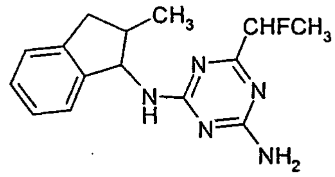 |

(fortgesetzt)

| Verbindung Nr. | Chemische Formel oder chemische Bezeichnung |
|---|---|
| A80 | 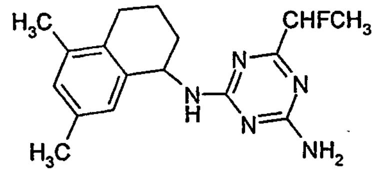 |
| A81 | 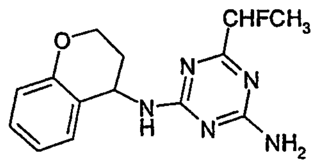 |
| A82 | 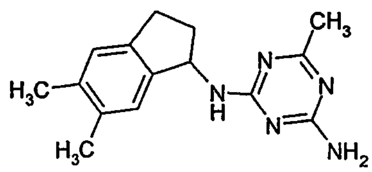 |
| A83 | 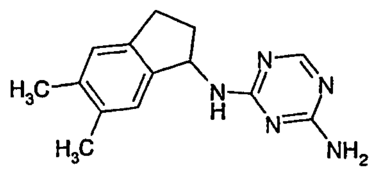 |
| A84 | 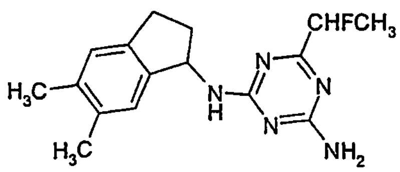 |
| A85 | 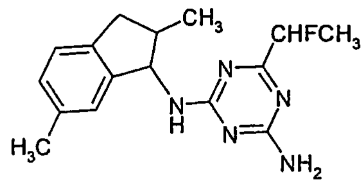 |
| A86 | 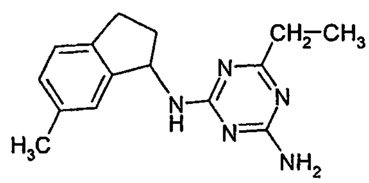 |
| A87 | 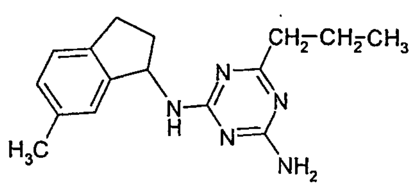 |

(fortgesetzt)

| Verbindung Nr. | Chemische Formel oder chemische Bezeichnung |
|---|---|
| A88 | 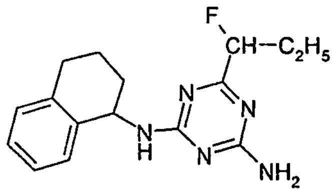 |
| A89 | 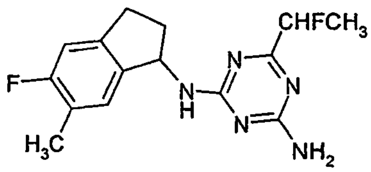 |
| A90 | 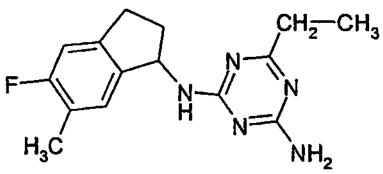 |
| A91 | 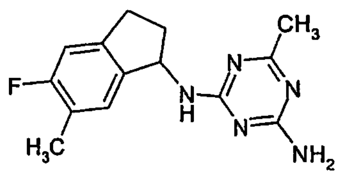 |
| A92 | 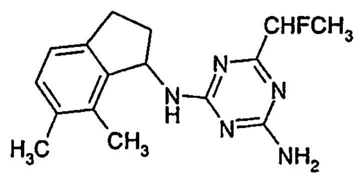 |
| A93 | 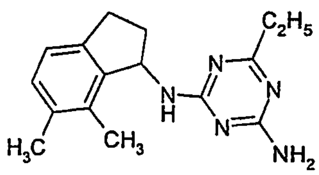 |
| A94 | 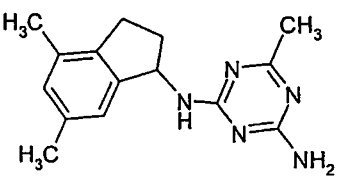 |
| A95 | 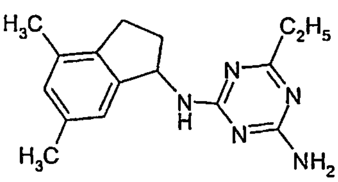 |

(fortgesetzt)

| Verbindung Nr. | Chemische Formel oder chemische Bezeichnung |
|---|---|
| A96 | 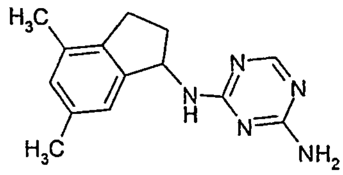 |
| A97 | 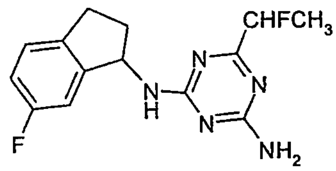 |
| A98 | 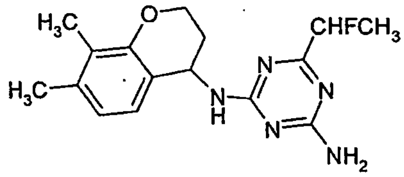 |
| A99 | 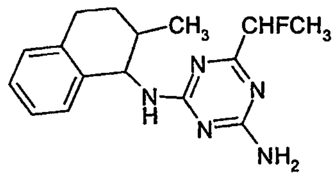 |
| A100 | 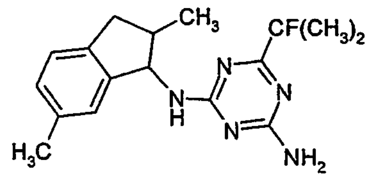 |
| A101 | 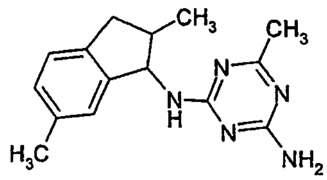 |
| A102 | 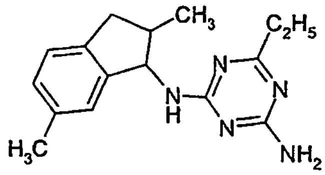 |
| A103 | 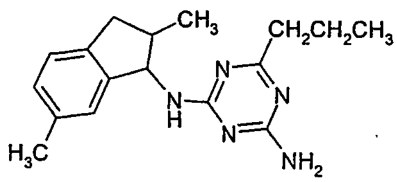 |

(fortgesetzt)

| Verbindung Nr. | Chemische Formel oder chemische Bezeichnung |
|---|---|
| A104 | 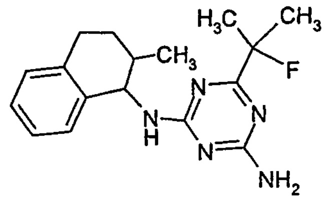 |
| A105 | 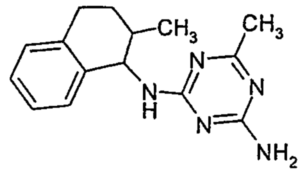 |
| A106 | 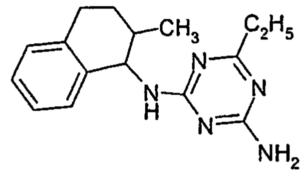 |
| A107 | 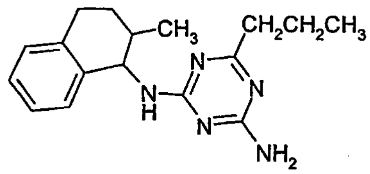 |
| A108 | 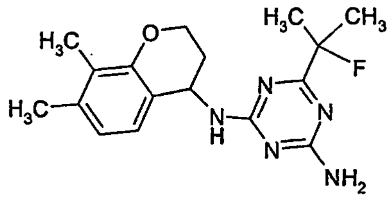 |
| A109 | 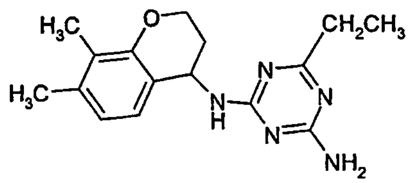 |
| A110 | 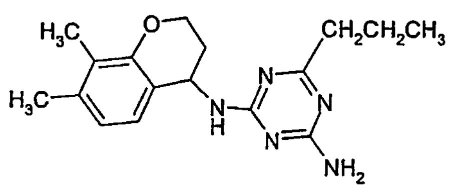 |
| A111 | 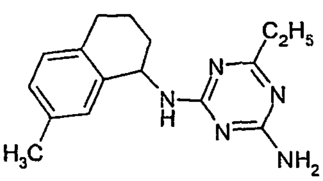 |

(fortgesetzt)

| Verbindung Nr. | Chemische Formel oder chemische Bezeichnung |
|---|---|
| A112 | 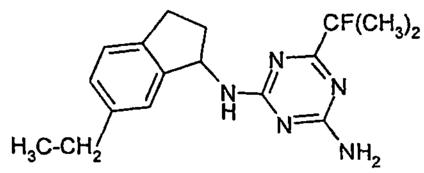 |
| A113 | 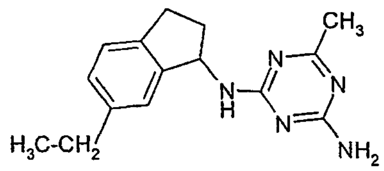 |
| A114 | 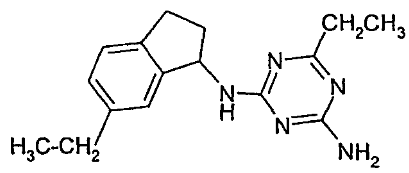 |
| A115 | 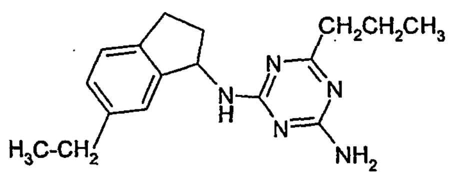 |
| A116 | 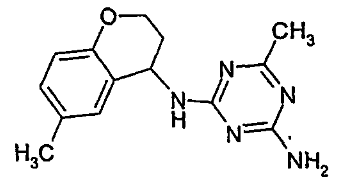 |
| A117 | 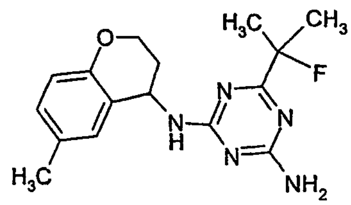 |
| A118 | 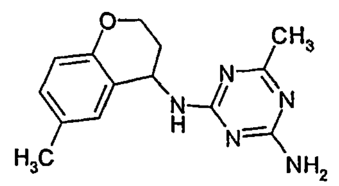 |
| A119 | 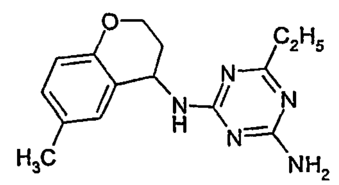 |

(fortgesetzt)

| Verbindung Nr. | Chemische Formel oder chemische Bezeichnung |
|---|---|
| A120 | 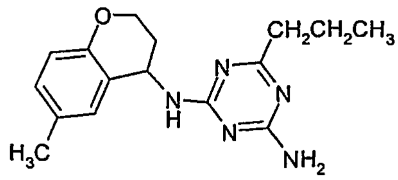 |
| A121 | 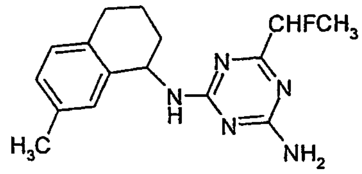 |
| A122 | 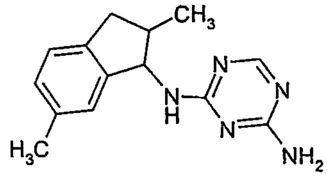 |
| A123 | 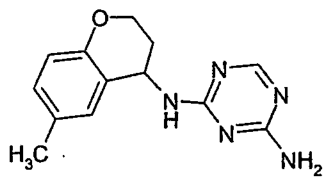 |
| A124 | 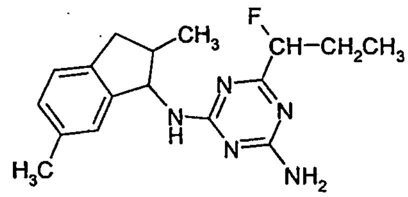 |
| A125 | 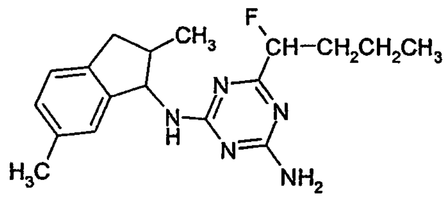 |
| A126 | 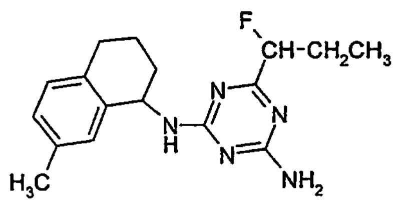 |
| A127 | 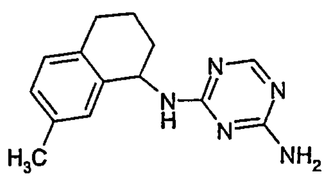 |

Die Aufwandmengen der Herbizide (A) sind im Prinzip bekannt und liegen im Bereich von 0,5 g bis 2000 g Aktivsubstanz pro Hektar, vorzugsweise 1 bis 800 g Aktivsubstanz pro Hektar, insbesondere 5 bis 500 g Aktivsubstanz

pro Hektar. In den erfindungsgemäßen Kombinationen werden im Rahmen der genannten Aufwandmengen im Vergleich zur Einzelapplikation niedrigere Aufwandmengen des jeweiligen Wirkstoffs benötigt.

Als Kombinationspartner (B) [= Komponente (B)] kommen beispielsweise folgende von den Verbindungen (A) unterschiedliche Verbindungen der Untergruppen (B1) bis (B3) in Frage, wobei die Bezeichnung der Herbizide weitgehend mit dem "common name" (in der Englischen Schreibweise) nach der Referenzstelle "The Pesticide Manual" 13th Ed., British Crop Protection Council 2003, abgekürzt "PM" erfolgt:

(B1) bodenwirksame Herbizide, welche besonders für die preemergente Applikation gegen monokotyle oder dikotyle Schadpflanzen geeignet sind,
z. B. eine oder mehrere Verbindungen aus der Gruppe

(B1.1) bodenwirksame Herbizide, welche besonders für die preemergente Applikation gegen monokotyle und dikotyle Schadpflanzen geeignet sind, z. B. eine oder mehrere Verbindungen aus der Gruppe

(B1.1.1) Tebuthiuron (PM, S. 929-930), d. h. 1-(5-*tert*-Butyl-1,3,4-thiadiazol-2-yl)-1,3-dimethylhamstoff,

(B1.1.2) Sulfometuron(-methyl) (PM, S. 929-930), d. h. 2-(4,6-Dimethylpyrimidin-2-yl-carbamoylsulfamoyl)-benzoesäure(methylester),

(B1.1.3) Flumioxazine (PM, S. 461-462), d. h. 2-(7-Fluor-3,4-dihydro-3-oxo-4-prop-2-ynyl-2*H*-1,4-benzoxazin-6-yl)-4,5,6,7-tetrahydro-1 *H*-isoindol-1,3(2*H*)-dion

(B1.1.4) Simazine (PM, S. 891-892), d. h. 6-Chlor-*N*,*N*'-diethyl-1,3,5-triazin-2,4-diamin,

(B1.1.5) Dichlobenil (PM, S. 281-282), d. h. 2,6-Dichlorbenzonitril,

(B1.1.6) Trifluralin (PM, S. 1012-1014), d. h. $\alpha,\alpha,\alpha$-Trifluor 2,6-dinitro-*N,N* dipropyl-*p*-toluidin,

(B1.1.7) Pendimethalin (PM, S. 752-753), d. h. *N*-(1-Ethylpropyl)-2,6-dinitro-3,4-xylidin,

(B1.1.8) Oxadiargyl (PM, S. 725-726), d. h. 5-*tert*-Butyl-3-[2,4-dichlor-5-(prop-2-ynyloxy)-phenyl]-1,3,4-oxadiazol-2 (3H)-on,

(B1.1.9) Thiazopyr (PM, S. 961-962), d. h. 2-Difluormethyl-5-(4,5-dihydro-1,3-thiazol-2-yl)-4-isobutyl-6-trifluormethylnicotinsäuremethylester,

(B1.1.10) Oryzalin (PM, S. 723-724), d. h. 4-(Dipropylamino)-3,5-dinitrobenzolsulfonamid,

(B1.1.11) Propyzamide (PM, S. 833-834), d. h. 3,5-Dichlor-*N*-(1,1-dimethylpropynyl)-benzamid,

(B1.1.12) Terbacil (PM, S. 937-938), d. h. 3-*tert*-Butyl-5-chlor-6-methyluracil,

und

(B1.2) bodenwirksame Herbizide, welche besonders für die preemergente Applikation gegen dikotyle Schadpflanzen geeignet sind, z. B. eine oder mehrere Verbindungen aus der Gruppe

(B1.2.1) Isoxaben (PM, S. 587-588), d. h. N-[3-(1-ethyl-1-methylpropyl)isoxazol-5-yl]-2,6-dimethoxybenzamid und

(B1.2.2) Flazasulfuron (PM, S. 437-438), d. h. 1-(4,6-Dimethoxypyrimidin-2-yl)-3-(3-trifluormethyl-2-pyridylsulfonyl)-harnstoff,

und

(B2) blattwirksame Herbizide, welche besonders für die postemergente Applikation gegen monokotyle oder dikotyle Schadpflanzen geeignet sind, z. B. eine oder mehrere Verbindungen aus der Gruppe

(B2.1) Applikation z. B. eine blattwirksame Herbizide, welche besonders für die postemergente gegen monokotyle und dikotyle Schadpflanzen geeignet sind, oder mehrere Verbindungen aus der Gruppe

(B2.1.1) Glufosinate (PM, S. 511-512), d. h. 4-[Hydroxy(methyl)phosphinoyl]-DL-homoalanin und dessen Salze, vorzugsweise das Ammoniumsalz (B2.1.1.1), das Natriumsalz (B2.1.1.2), und das wirksame L-Isomer und dessen Salze (B2.1.1.3) und das Tripeptid Bilanafos und dessen Salze (B2.1.1.4), d. h. 4-[Hydroxy(methyl) phosphinoyl]-L-homoalanyl-L-alanyl-L-alanin und dessen Salze,

(B2.1.2) Glyphosate (PM, S. 513-516), d. h. N-(Phosphonomethyl)glycin und dessen Salze, vorzugsweise das Isopropylammoniumsalz (B2.1.2.1), das Natriumsalz (B2.1.2.2), das Ammoniumsalz (B2.1.2.3) und das Trimesiumsalz (B2.1.3) = Sulfosate (siehe unten),

(B2.1.3) Sulfosate (PM, S. 513-516), d, h. N-(Phosphonomethyl)glycintrimesiumsalz (vgl. Glyphosate),

(B2.1.4) Methylarsonsäure und deren Salze (PM, S. 656-658) wie das Mononatriumsalz (B2.1.4.1) = MSMA (Natriumhydrogenmethylarsonat), aber auch andere Salze wie das Calciumhydrogen-methylarsonat (B2.1.4.2), das Dinatriumsalz (DSMA) (B2.1.4.3), das Monoammoniumsalz (MAMA) (B2.1.4.4), das Calciumbis(hydrogenmethylarsonat) (CMA) (B2.1.4.5);

(B2.1.5) Foramsulfuron (PM, S. 494-495), d. h. 1-(4,6-Dimethoxypyrimidin-2-yl)-3-[2-(dimethylcarbamoyl)-5-formamidophenylsulfonyl]-harnstoff,

(B2.1.6) Iodosulfuron und dessen Ester und Salze (PM, S. 573-574), d. h. 4-Iodo-2-[3-(4-methoxy-6-methyl-1,3,5-triazin-2-yl)-ureidosulfonyl]-benzoesäure und deren Ester und Salze, vorzugsweise der Methylester Iodosulfuron-methyl und dessen Salze (B2.1.6.1), insbesondere davon das Natriumsalz Iodosulfuron-methyl-natrium (B2.1.6.2)

(B2.1.7) Amicarbazone (PM, S. 26-27), d. h. 4-Amino-*N*-*tert*-butyl-4,5-dihydro-3-isopropyl-5-oxo-1,2,4-1 H-triazol-1-carboxamid,

(B2.1.8) Propoxycarbazone und dessen Salze (PM, S. 831-832), d. h. (4,5-Dihydro-4-methyl-5-oxo-3-propoxy-1*H*-1,2,4-triazol-1-ylcarbonyl)(2-methoxycarbonyl-phenytsutfonyl)-azanid und dessen Salze, vorzugsweise dessen Natriumsalz (B2.1.8.1),

(B2.1.9) Metribuzin (PM, S. 675-676), d. h. 4-Amino-6-*tert*-butyl-4,5-dihydro-3-methylthio-1 ,2,4-triazin-5-one;

(B2.1.10) Metsulfuron und dessen Ester und Salze (PM, S. 677-678), d. h. 2-(4-Methoxy-6-methyl-1,3,5-triazin-2-ylcarbamoylsulfamoyl)benzoesäure, vorzugsweise deren Methylester Metsulfuron-methyl (B2.1.10.1),

(B2.1.11) Naproanilide (PM, S. 695-697), d. h. 2-(2-Naphthyloxy)-*N*-phenylpropionamid,

(B2.1.12) Imazapyr und dessen Salze (PM, S. 555-556), d. h. 2-(4-Isopropyl-4-methyl-5-oxo-2-imidazolin-2-yl)-nicotinsäure und deren Salze, vorzugsweise die freie Säure (B2.1.12.1) und deren Isopropylammoniumsalz (B2.1.12.2),

(B2.1.13) Paraquat-salze (PM, S. 742-743), d. h. 1,1'-Dimethyl-4,4'-bipyridylium-salze, vorzugsweise das Dichlorid Paraquat-dichlorid (B2.1.13.1),

(B2.1.14) Diquat-salze (PM, S. 341-342), d. h. 1,1'-Ethylen-2,2'-bipyridyldiylium-salze, vorzugsweise das Dibromid Diquat-dibromid (B2.1.14.1),

und

(B2.2) Applikation z. B. eine blattwirksame Herbizide, welche besonders für die postemergente gegen dikotyle Schadpflanzen geeignet sind, oder mehrere Verbindungen aus der Gruppe

(B2.2.1) 2,4-D und dessen Ester und Salze (PM, S. 254-258), d. h. 2,4-Dichlorphenoxyessigsäure und deren Ester und Salze,

(B2.2.2) Dicamba und dessen Salze (PM, S. 278-280), d. h. 3,6-Dichlor-2-methoxybenzoesäure und deren Salze,

(B2.2.3) Triclopyr und dessen Salze und Ester (PM, S. 1001-1002), d. h. 3,5,6-Trichlor-2-pyridyloxyessigsäure und deren Salze und Ester, wie z. B. die freie Säure (B2.2.3.1), das Triethylammoniumsalz (B2.2.3.2) und der Butotylester (Butyl-ethylester) (B2.2.3.3),

(B2.2.4) Diflufenzopyr und dessen Salze und Ester (PM, S. 311-312), d. h 2-{1-[4-(3,5-Difluorphenyl)-semicarbazono]-ethyl}-nicotinsäure und deren Salze und Ester, wie z. B. die freie Säure (B2.2.4.1) und das Natriumsalz (B2.2.4.2),

(B2.2.5) Fluroxypyr und dessen Salze und Ester (PM, S. 478-481), d. h. 4-Amino-3,5-dichlor-6-fluor-2-pyridyloxyessigsäure und deren Salze und Ester, wie beispielsweise die freie Säure (B2.2.5.1), der 2-Butoxy-1-methylethyl-Ester (B2.2.5.2) und der Meptylester (= 1-Methylheptylester) (B2.2.5.3),

(B2.2.6) Thifensulfuron-methyl (PM, S. 963-965), d. h. 3-(4-Methoxy-6-methyl-1,3,5-triazin-2-ylcarbamoylsulfamoyl)-thiophen-2-carbonsäuremethylester und auch die freie Säure Thifensulfuron (B2.2.6.1),

(B2.2.7) Amidosulfuron (PM, S. 27-28), d. h. 1-(4,6-Dimethoxypyrimidin-2-yl)-3-mesyl(methyl)sulfamoylharnstoff und dessen Salze,

(B2.2.8) Tribenuron und dessen Ester und Salze (PM, S. 996-998), d. h. 2-[4-Methoxy-6-methyl-1,3,5-triazin-2-yl (methyl)carbamoylsulfamoyl]-benzoesäure und deren Ester und Salze, vorzugsweise der Methylester Tribenuron-methyl (B2.2.8.1),

(B2.2.9) Triasulfuron (PM, S. 990-991), d. h. 1-[2-(2-Chlorethoxy)phenylsulfonyl]-3-(4-methoxy-6-methyl-1,3,5-triazin-2-yl)-hamstoff,

(B2.2.10) Picloram und dessen Ester und Salze (PM, S. 782-785), d. h. 4-Amino-3,5,6-trichlorpyridin-2-carbonsäure (= 4-Amino-3,5,6-trichlorpicolinsäure) und deren Ester und Salze, vorzugsweise die freie Säure (B2.2.10.1), deren Kaliumsalz (B2.2.10.2), deren Dimethylammoniumsalz (B2.2.10.3), deren Tris(2-hydroxypropyl)ammoniumsalz (B2.2.10.4), deren Tris(2-hydroxethyl)ammoniumsalz (B2.2.10.5) und deren Isooctylester (B2.2.10.6),

(B2.2.11) Carfentrazone und dessen Ester und Salze (PM, S. 143-144), d. h. (RS)-2-Chlor-3-[2-chlor-5-(4-difluormethyl-4,5-dihydro-3-methyl-5-oxo-1 *H*-1,2,4-triazol-1-yl)-4-fluorphenyl]-propionsäure und deren Ester und Salze, vorzugsweise deren Ethylester Carfentrazone-ethyl (B2.2.11.1),

(B2.2.12) Clopyralid und dessen Ester und Salze (PM, S. 194-195), d. h. 3,6-Dichloropyridin-2-carbonsäure und deren Ester und Salze, vorzugsweise die freie Säure (B2.2.12.1) und der Ethanolaminester Clopyralid-olamin (B2.2.12.2),

(B2.2.13) Butafenacil (PM, S. 120-121), d. h. 2-Chlor-5-[1,2,3,6-tetrahydro-3-methyl-2,6-dioxo-4-(trifluormethyl)-pyrimidin-1-yl]-benzoesäure-1-(allyloxycarbonyl)-1-methylethylester,
(B2.2.14) Amitrole (PM, S. 30-32), d. h. 1*H*-1,2,4-Triazol-3-ylamin,

und

(B2.3) blattwirksame Herbizide, welche besonders für die postemergente Applikation gegen monokotyle Schadpflanzen geeignet sind, z. B. die Verbindung
(B2.3.1) Quinclorac (PM, S. 869-870), d. h. 3,7-Dichlorchinolin-8-carbonsäure,

und

(B3) boden- und blattwirksame Herbizide, welche für die pre- oder postemergente Applikation gegen monokotyle oder dikotyle Schadpflanzen geeignet sind,
z. B. eine oder mehrere Verbindungen aus der Gruppe
(B3.1) boden- und blattwirksame Herbizide, welche besonders für die postemergente Applikation gegen monokotyle und dikotyle Schadpflanzen geeignet sind, z. B. eine oder mehrere Verbindungen aus der Gruppe
(B3.1.1) Oxyfluorfen (PM, S. 738-739) (= 2-Chlor-1-(3-ethoxy-4-nitrophenoxy)-4-(trifluormethyl)-benzol),
(B3.1.2) Diuron (PM, S. 347-348), d. h. 3-(3,4-Dichlorphenyl)-1,1-dimethylharnstoff,
(B3.1.3) Bromacil (PM, S. 106-107), d. h. 5-Brom-3-sec-butyl-6-methyluracil,
(B3.1.4) Norflurazon (PM, S. 869-870), d. h. 4-Chlor-5-methylamino-2-($\alpha,\alpha,\alpha$-trifluor-*m*-tolyl)pyridazin-3(2*H*)-on,
(B3.1.5) Azafenidin (PM, S. 1043), d. h. 2-(2,4-Dichlor-5-prop-2-ynyloxyphenyl)-5,6,7,8-tetrahydro-1,2,4-triazolo [4,3-a]pyridin-3(2*H*)-on,
(B3.1.6) Chlorsulfuron (PM, S. 176-177), d. h. 1-(2-Chlorphenylsulfonyl)-3-(4-methoxy-6-methyl-1,3,5-triazin-2-yl)-harnstoff,
(B3.1.7) Imazapic (PM, S. 554-555), d. h. (*RS*)-2-(4-isopropyl-4-methyl-5-oxo-2-imidazolin-2-yl)-5-methylnicotinsäure,
(B3.1.8) Oxadiazon (PM, S. 727-728), d. h. 5-tert-Butyl-3-(2,4-dichlor-5-isopropoxyphenyl)-1,3,4-oxadiazol-2 (3*H*)-on,
(B3.1.9) Diflufenican (PM, S. 427-311), d. h. 2',4'-Difluor-2-($\alpha,\alpha,\alpha$-trifluor-*m*-tolyloxy)-nicotinanilid,
(B3.1.10) Ametryn (PM, S. 25-26), $N^2$-Ethyl-$N^4$-isopropyl-6-methylthio-1,3,5-triazin-2,4-diamin,
(B3.1.11) Rimsulfuron (PM, S. 881-882), 1-(4,6-Dimethoxypyrimidin-2-yl)-3-(3-ethylsulfonyl-2-pyridylsulfonyl)-harnstoff, und dessen Salze,
(B3.1.12) Trifloxysulfuron (PM, S. 1008-1009), 1-(4,6-Dimethoxypyrimidin-2-yl)-3-[3-(2,2,2-trifluorethoxy)-2-pyridyisulfonyl]-hamstoff, und dessen Salze, vorzugsweise dessen Natriumsalz (B3.1.12.1),
(B3.1.13) Nicosulfuron (PM, S. 702-703), 1-(4,6-Dimethoxypyrimidin-2-yl)-3-(3-dimethylcarbamoyl-2-pyridylsulfonyl)-harnstoff, und dessen Salze,
(B3.1.14) Asulam und dessen Salze (PM, S. 38-39), vorzugsweise Asulam, d. h. Sulfanilylcarbaminsäuremethylester (B3.1.14.1) und dessen Natriumsalz (B3.1.14.2),
(B3.1.15) Isoxaflutole (PM, S. 589-590), (5-Cyclopropyl-4-isoxazolyl)-[2-(methylsulfonyl)-4-(trifluoromethyl)phenyl]-methanon,

und

(B3.2) boden- und blattwirksame Herbizide, welche besonders für postemergente Applikation gegen dikotyle Schadpflanzen geeignet sind, z. B. eine oder mehrere Verbindungen aus der Gruppe
(B3.2.1) Hexazinone (PM, S. 539-540), d. h. 3-Cyclohexyl-6-dimethylamino-1-methyl-1,3,5-triazin-2,4-(1*H*,3*H*)-dion,
(B3.2.2) Sulfentrazone (PM, S. 910-911), d. h. 2',4'-Dichlor-5'-(4-difluormethyl-4,5-dihydro-3-methyl-5-oxo-1*H*-1,2,4-triazol-1-yl)-methanesulfonanilid,
(B3.2.3) Prometon (PM, S. 810-811), d. h. $N^2$,$N^4$-Di-isopropyl-6-methoxy-1,3,5-triazin-2,4-diamin.

Bevorzugt sind bei den oben definierten Kombinationen solche, in denen ein Herbizid aus der Gruppe (A) und ein Herbizid aus der Gruppe (B) enthalten sind. Weiterhin können die erfindungsgemäßen Kombinationen zusammen mit anderen Wirkstoffen wie die erwähnten Wirkstoffe (Herbizide, Fungizide, Insektizide, Akarizide etc.) und/oder Pflanzenwachstumsregulatoren oder Hilfstoffe aus der Gruppe der im Pflanzenschutz üblichen Zusatzstoffe und Formulierungshilfsmittel eingesetzt werden.
Gegenstand der Erfindung sind deshalb auch die herbiziden Mittel, welche die erfindungsgemäßen Wirkstoffkombinationen mit Formulierungshilfsmitteln, gegebenenfalls weiteren Zusatzstoffen und gegebenenfalls weiteren Pflanzenschutzmittelwirkstoffen enthalten.
Gegenstand der Erfindung ist auch die Verwendung der bzw. das Anwendungsverfahren unter Verwendung der erfindungsgemäßen Wirkstoffkombinationen als Herbizide und Pflanzenwachstumsregulatoren, vorzugsweise als Herbizide und Pflanzenwachstumsregulatoren mit einem synergistisch wirksamen Gehalt an der jeweils enthaltenen Wirkstoffkombination.

Spezifische Herbizidkombinationen (Aa)+(Bb) werden im Folgenden mit dem Ausdruck Ka.b bezeichnet, wobei a die jeweilige Kennziffer aus der Nummer des Herbizids (A) aus der Tabelle 1 bedeutet [Kennziffern 1 bis 127 der Verbindungen (A1) bis (A127)] und b die jeweilige Kennziffer der Herbizid-Komponente (B) gemäß der folgenden Tabelle 2 bedeutet [Kennziffern 1 bis 103 zu den Verbindungen (B1.1.1) bis (B3.2.3)]:

Tabelle 2: Kennziffer für Herbizid-Komponente B (siehe Subtabellen 2a bis 2i)

Tabelle 2a

| Kennziffer | Komponente B |
|---|---|
| 1 | (B1.1.1) |
| 2 | (B1.1.2) |
| 3 | (B1.1.3) |
| 4 | (B1.1.4) |
| 5 | (B1.1.5) |

Tabelle 2b

| Kennziffer | Komponente B |
|---|---|
| 6 | (B1.1.6) |
| 7 | (B1.1.7) |
| 8 | (B1.1.8) |
| 9 | (B1.1.9) |
| 10 | (B1.1.10) |

Tabelle 2c

| Kennziffer | Komponente B |
|---|---|
| 11 1 | (81.1.11) |
| 12 | (B1.1.12) |
| 13 | (B1.2.1) |
| 14 | (B1.2.2) |
| | |

Tabelle 2d

| Kennziffer | Komponente B |
|---|---|
| 15 | (B2.1.1) |
| 16 | (B2.1.1.1) |
| 17 | (B2.1.1.2) |

(fortgesetzt)

| Kennziffer | Komponente B |
|---|---|
| 18 | (B2.1.1.3) |
| 19 | (B2.1.1.4) |
| 20 | (B2.1.2) |
| 21 | (B2.1.2.1) |
| 22 | (B2.1.2.2) |
| 23 | (B2.1.2.3) |
| 24 | (B2.1.3) |
| 25 | (B2.1.4) |
| 26 | (B2.1.4.1) |
| 27 | (B2.1.4.2) |
| 28 | (B2.1.4.3) |
| 29 | (B2.1.4.4) |
| 30 | (B2.1.4.5) |
| 31 | (B2.1.5) |
| 32 | (B2.1.6) |
| 33 | (B2.1.6.1) |
| 34 | (B2.1.6.2) |
| 35 | (B2.1.7) |
| 36 | (B2.1.8) |
| 37 | (B2.1.8.1) |
| 38 | (B2.1.9) |

Tabelle 2e

| Kennziffer | Komponente B |
|---|---|
| 39 | (B2.1.10) |
| 40 | (B2.1.10.1) |
| 41 | (B2.1.11) |
| 42 | (B2.1.12) |
| 43 | (B2.1.12.1) |
| 44 | (B2.1.12.2) |
| 45 | (B2.1.13) |
| 46 | (B2.1.13.1) |
| 47 | (B2.1.14) |
| 48 | (B2.1.14.1) |
| 49 | (B2.2.1) |
| 50 | (B2.2.2) |
| 51 | (B2.2.3) |
| 52 | (B2.2.3.1) |

(fortgesetzt)

| Kennziffer | Komponente B |
|---|---|
| 53 | (B2.2.3.2) |
| 54 | (B2.2.3.3) |
| 55 | (B2.2.4) |
| 56 | (B2.2.4.1) |
| 57 | (B2.2.4.2) |
| 58 | (B2.2.5) |
| 59 | (B2.2.5.1) |
| 60 | (B2.2.5.2) |
| 61 | (B2.2.5.3) |
| 62 | (B2.2.6) |

Tabelle 2f

| Kennziffer | Komponente B |
|---|---|
| 63 | (B2.2.6.1) |
| 64 | (B2.2.7) |
| 65 | (B2.2.8) |
| 66 | (B2.2.8.1) |
| 67 | (B2.2.9) |
| 68 | (B2.2.10) |
| 69 | (B2.2.10.1) |
| 70 | (B2.2.10.2) |
| 71 | (B2.2.10.3) |
| 72 | (B2.2.10.4) |
| 73 | (B2.2.10.5) |
| 74 | (B2.2.10.6) |
| 75 | (B2.2.11) |
| 76 | (B2.2.11.1) |
| 77 | (B2.2.12) |
| 78 | (B2.2.12.1) |
| 79 | (B2.2.12.2) |
| 80 | (B2.2.13) |
| 81 | (B2.2.14) |
| 82 | (B2.3.1) |
| | |
| | |
| | |
| | |

Tabelle 2g

| Kennziffer | Komponente B |
|---|---|
| 83 | (B3.1.1) |
| 84 | (B3.1.2) |
| 85 | (B3.1.3) |
| 86 | (B3.1.4) |
| 87 | (B3.1.5) |
| 88 | (B3.1.6) |
| 89 | (B3.1.7) |
| 90 | (B3.1.8) |
| 91 | (B3.1.9) |

Tabelle 2h

| Kennziffer | Komponente B |
|---|---|
| 92 | (B3.1.10) |
| 93 | (B3.1.11) |
| 94 | (B3.1.12) |
| 95 | (B3.1.12.1) |
| 96 | (B3.1.13) |
| 97 | (B3.1.14) |
| 98 | (B3.1.14.1) |
| 99 | (B3.1.14.2) |
| 100 | (B3.1.15) |

Tabelle 2i

| Kennziffer | Komponente B |
|---|---|
| 101 | (B3.2.1) |
| 102 | (B3.2.2) |
| 103 | (B3.2.3) |
| | |
| | |
| | |
| | |
| | |
| | |

Beispiel: Eine Kombination der Herbizide (A5) und (B2.1.2.3) wird in Kurzschreibweise somit als K5.23 angegeben.

Beispiele für bevorzugte Kombinationen sind:

Ein Herbizid aus der Gruppe der Herbizide (A1) bis (A127) und Herbizide aus der Gruppe (B1) oder (B2) oder

(B3), beispielsweise ein Herbizid aus der Gruppe der Herbizide (A1) bis (A127) und Herbizide aus der Gruppe (B1.1), (B1.2), (B2.1), (B2.2), (B2.3), (B3.1) oder (B3.2), speziell eine der Kombinationen K1.1, K1.2, K1.3, K1.4, K1.5, K1.6, K1.7, K1.8, K1.9, K1.10, K1.11, K1.12, K1.13, K1.14, K1.15, K1.16, K1.17, K1.18, K1.19, K1.20, K1.21, K1.22, K1.23, K1.24, K1.25, K1.26, K1.27, K1.28, K1.29, K1.30, K1.31, K1.32, K1.33, K1.34, K1.35, K1.36, K1.37, K1.38, K1.39, K1.40, K1.41, K1.42, K1.43, K1.44, K1.45, K1.46, K1.47, K1.48, K1.49, K1.50, K1.51, K1.52, K1.53, K1.54, K1.55, K1.56, K1.57, K1.58, K1.59, K1.60, K1.61, K1.62, K1.63, K1.64, K1.65, K1.66, K1.67, K1.68, K1.69, K1.70, K1.71, K1.72, K1.73, K1.74, K1.75, K1.76, K1.77, K1.78, K1.79, K1.80, K1.81, K1.82, K1.83, K1.84, K1.85, K1.86, K1.87, K1.88, K1.89, K1.90, K1.91, K1.92, K1.93, K1.94, K1.95, K1.96, K1.97, K1.98, K1.99, K1.100, K1.101, K1.102, K1.103, K2.1, K2.2, K2.3, K2.4, K2.5, K2.6, K2.7, K2.8, K2.9, K2.10, K2.11, K2.12, K2.13, K2.14, K2.15, K2.16, K2.17, K2.18, K2.19, K2.20, K2.21, K2.22, K2.23, K2.24, K2.25, K2.26, K2.27, K2.28, K2.29, K2.30, K2.31, K2.32, K2.33, K2.34, K2.35, K2.36, K2.37, K2.38, K2.39, K2.40, K2.41, K2.42, K2.43, K2.44, K2.45, K2.46, K2.47, K2.48, K2.49, K2.50, K2.51, K2.52, K2.53, K2.54, K2.55, K2.56, K2.57, K2.58, K2.59, K2.60, K2.61, K2.62, K2.63, K2.64, K2.65, K2.66, K2.67, K2.68, K2.69, K2.70, K2.71, K2.72, K2.73, K2.74, K2.75, K2.76, K2.77, K2.78, K2.79, K2.80, K2.81, K2.82, K2.83, K2.84, K2.85, K2.86, K2.87, K2.88, K2.89, K2.90, K2.91, K2.92, K2.93, K2.94, K2.95, K2.96, K2.97, K2.98, K2.99, K2.100, K2.101, K2.102, K2.103,

K3.1, K3.2, K3.3, K3.4, K3.5, K3.6, K3.7, K3.8, K3.9, K3.10, K3.11, K3.12, K3.13, K3.14, K3.15, K3.16, K3.17, K3.18, K3.19, K3.20, K3.21, K3.22, K3.23, K3.24, K3.25, K3.26, K3.27, K3.28, K3.29, K3.30, K3.31, K3.32, K3.33, K3.34, K3.35, K3.36, K3.37, K3.38, K3.39, K3.40, K3.41, K3.42, K3.43, K3.44, K3.45, K3.46, K3.47, K3.48, K3.49, K3.50, K3.51, K3.52, K3.53, K3.54, K3.55, K3.56, K3.57, K3.58, K3.59, K3.60, K3.61, K3.62, K3.63, K3.64, K3.65, K3.66, K3.67, K3.68, K3.69, K3.70, K3.71, K3.72, K3.73, K3.74, K3.75, K3.76, K3.77, K3.78, K3.79, K3.80, K3.81, K3.82, K3.83, K3.84, K3.85, K3.86, K3.87, K3.88, K3.89, K3.90, K3.91, K3.92, K3.93, K3.94, K3.95, K3.96, K3.97, K3.98, K3.99, K3.100, K3.101, K3.102, K3.103,

K4.1, K4.2, K4.3, K4.4, K4.5, K4.6, K4.7, K4.8, K4.9, K4.10, K4.11, K4.12, K4.13, K4.14, K4.15, K4.16, K4.17, K4.18, K4.19, K4.20, K4.21, K4.22, K4.23, K4.24, K4.25, K4.26, K4.27, K4.28, K4.29, K4.30, K4.31, K4.32, K4.33, K4.34, K4.35, K4.36, K4.37, K4.38, K4.39, K4.40, K4.41, K4.42, K4.43, K4.44, K4.45, K4.46, K4.47, K4.48, K4.49, K4.50, K4.51, K4.52, K4.53, K4.54, K4.55, K4.56, K4.57, K4.58, K4.59, K4.60, K4.61, K4.62, K4.63, K4.64, K4.65, K4.66, K4.67, K4.68, K4.69, K4.70, K4.71, K4.72, K4.73, K4.74, K4.75, K4.76, K4.77, K4.78, K4.79, K4.80, K4.81, K4.82, K4.83, K4.84, K4.85, K4.86, K4.87, K4.88, K4.89, K4.90, K4.91, K4.92, K4.93, K4.94, K4.95, K4.96, K4.97, K4.98, K4.99, K4.100, K4.101, K4.102, K4.103,

K5.1, K5.2, K5.3, K5.4, K5.5, K5.6, K5.7, K5.8, K5.9, K5.10, K5.11, K5.12, K5.13, K5.14, K5.15, K5.16, K5.17, K5.18, K5.19, K5.20, K5.21, K5.22, K5.23, K5.24, K5.25, K5.26, K5.27, K5.28, K5.29, K5.30, K5.31, K5.32, K5.33, K5.34, K5.35, K5.36, K5.37, K5.38, K5.39, K5.40, K5.41, K5.42, K5.43, K5.44, K5.45, K5.46, K5.47, K5.48, K5.49, K5.50, K5.51, K5.52, K5.53, K5.54, K5.55, K5.56, K5.57, K5.58, K5.59, K5.60, K5.61, K5.62, K5.63, K5.64, K5.65, K5.66, K5.67, K5.68, K5.69, K5.70, K5.71, K5.72, K5.73, K5.74, K5.75, K5.76, K5.77, K5.78, K5.79, K5.80, K5.81, K5.82, K5.83, K5.84, K5.85, K5.86, K5.87, K5.88, K5.89, K5.90, K5.91, K5.92, K5.93, K5.94, K5.95, K5.96, K5.97, K5.98, K5.99, K5.100, K5.101, K5.102, K5.103,

K6.1, K6.2, K6.3, K6.4, K6.5, K6.6, K6.7, K6.8, K6.9, K6.10, K6.11, K6.12, K6.13, K6.14, K6.15, K6.16, K6.17, K6.18, K6.19, K6.20, K6.21, K6.22, K6.23, K6.24, K6.25, K6.26, K6.27, K6.28, K6.29, K6.30, K6.31, K6.32, K6.33, K6.34, K6.35, K6.36, K6.37, K6.38, K6.39, K6.40, K6.41, K6.42, K6.43, K6.44, K6.45, K6.46, K6.47, K6.48, K6.49, K6.50, K6.51, K6.52, K6.53, K6.54, K6.55, K6.56, K6.57, K6.58, K6.59, K6.60, K6.61, K6.62, K6.63, K6.64, K6.65, K6.66, K6.67, K6.68, K6.69, K6.70, K6.71, K6.72, K6.73, K6.74, K6.75, K6.76, K6.77, K6.78, K6.79, K6.80, K6.81, K6.82, K6.83, K6.84, K6.85, K6.86, K6.87, K6.88, K6.89, K6.90, K6.91, K6.92, K6.93, K6.94, K6.95, K6.96, K6.97, K6.98, K6.99, K6.100, K6.101, K6.102, K6.103,

K7.1, K7.2, K7.3, K7.4, K7.5, K7.6, K7.7, K7.8, K7.9, K7.10, K7.11, K7.12, K7.13, K7.14, K7.15, K7.16, K7.17, K7.18, K7.19, K7.20, K7.21, K7.22, K7.23, K7.24, K7.25, K7.26, K7.27, K7.28, K7.29, K7.30, K7.31, K7.32, K7.33, K7.34, K7.35, K7.36, K7.37, K7.38, K7.39, K7.40, K7.41, K7.42, K7.43, K7.44, K7.45, K7.46, K7.47, K7.48, K7.49, K7.50, K7.51, K7.52, K7.53, K7.54, K7.55, K7.56, K7.57, K7.58, K7.59, K7.60, K7.61, K7.62, K7.63, K7.64, K7.65, K7.66, K7.67, K7.68, K7.69, K7.70, K7.71, K7.72, K7.73, K7.74, K7.75, K7.76, K7.77, K7.78, K7.79, K7.80, K7.81, K7.82, K7.83, K7.84, K7.85, K7.86, K7.87, K7.88, K7.91, K7.92, K7.93, K7.94, K7.95, K7.96, K7.97, K7.98, K7.99, K7.100, K7.101, K7.102, K7.103, K8.1, K8.2, K8.3, K8.4, K8.5, K8.6, K8.7, K8.8, K8.9, K8.10, K8.11, K8.12, K8.13, K8.14, K8.15, K8.16, K8.17, K8.18, K8.19, K8.20, K8.21, K8.22, K8.23, K8.24, K8.25, K8.26, K8.27, K8.28, K8.29, K8.30, K8.31, K8.32, K8.33, K8.34, K8.35, K8.36, K8.37, K8.38, K8.39, K8.40, K8.41, K8.42, K8.43, K8.44, K8.45, K8.46, K8.47, K8.48, K8.49, K8.50, K8.51, K8.52, K8.53, K8.54, K8.55, K8.56, K8.57, K8.58, K8.59, K8.60, K8.61, K8.62, K8.63, K8.64, K8.65, K8.66, K8.67, K8.68, K8.69, K8.70, K8.71, K8.72, K8.73, K8.74, K8.75, K8.76, K8.77, K8.78, K8.79, K8.80, K8.81, K8.82, K8.83, K8.84, K8.85, K8.86, K8.87, K8.88, K8.89, K8.90, K8.91, K8.92, K8.93, K8.94, K8.95, K8.96, K8.97, K8.98, K8.99, K8.100, K8.101, K8.102, K8.103,

K9.1, K9.2, K9.3, K9.4, K9.5, K9.6, K9.7, K9.8, K9.9, K9.10, K9.11, K9.12, K9.13, K9.14, K9.15, K9.16, K9.17, K9.18, K9.19, K9.20, K9.21, K9.22, K9.23, K9.24, K9.25, K9.26, K9.27, K9.28, K9.29, K9.30, K9.31, K9.32, K9.33, K9.34,

K9.35, K9.36, K9.37, K9.38, K9.39, K9.40, K9.41, K9.42, K9.43, K9.44, K9.45, K9.46, K9.47, K9.48, K9.49, K9.50, K9.51, K9.52, K9.53, K9.54, K9.55, K9.56, K9.57, K9.58, K9.59, K9.60, K9.61, K9.62, K9.63, K9.64, K9.65, K9.66, K9.67, K9.68, K9.69, K9.70, K9.71, K9.72, K9.73, K9.74, K9.75, K9.76, K9.77, K9.78, K9.79, K9.80, K9.81, K9.82, K9.83, K9.84, K9.85, K9.86, K9.87, K9.88, K9.89, K9.90, K9.91, K9.92, K9.93, K9.94, K9.95, K9.96, K9.97, K9.98, K9.99, K9.100, K9.101, K9.102, K9.103,

K10.1, K10.2. K10.3, K10.4, K10.5, K10.6, K10.7, K10.8, K10.9, K10.10, K10.11, K10.12, K10.13, K10.14, K10.15, K10.16, K10.17, K10.18, K10.19, K10.20, K10.21, K10.22, K10.23, K10.24, K10.25, K10.26, K10.27, K10.28, K10.29, K10.30, K10.31, K10.32, K10.33, K10.34, K10.35, K10.36, K10.37, K10.38, K10.39, K10.40, K10.41, K10.42, K10.43, K10.44, K10.45, K10.46, K10.47, K10.48, K10.49, K10.50, K10.51, K10.52, K10.53, K10.54, K10.55, K10.56, K10.57, K10.58, K10.59, K10.60, K10.61, K10.62, K10.63, K10.64, K10.65, K10.66, K10.67, K10.68, K10.69, K10.70, K10.71, K10.72, K10.73, K10.74, K10.75, K10.76, K10.77, K10.78, K10.79, K10.80, K10.81, K10.82, K10.83, K10.84, K10.85, K10.86, K10.87, K10.88, K10.89, K10.90, K10.91, K10.92, K10.93, K10.94, K10.95, K10.96, K10.97, K10.98, K10.99, K10.100, K10.101, K10.102, K10.103,

K11.1, K11.2, K11.3, K11.4, K11.5, K11.6, K11.7, K11.8, K11.9, K11.10, K11.11, K11.12, K11.13, K11.14, K11.15, K11.16, K11.17, K11.18, K11.19, K11.20, K11.21, K11.22, K11.23, K11.24, K11.25, K11.26, K11.27, K11.28, K11.29, K11.30, K11.31, K11.32, K11.33, K11.34, K11.35, K11.36, K11.37, K11.38, K11.39, K11.40, K11.41, K11.42, K11.43, K11.44, K11.45, K11.46, K11.47, K11.48, K11.49, K11.50, K11.51, K11.52, K11.53, K11.54, K11.55, K11.56, K11.57, K11.58, K11.59, K11-.60, K11.61, K11.62, K11.63, K11.64, K11.65, K11.66, K11.67, K11.68, K11.69, K11.70, K11.71, K11.72, K11.73, K11.74, K11.75, K11.76, K11.77, K11.78, K11.79, K11.80, K11.81, K11.82, K11.83, K11.84, K11.85, K11.86, K11.87, K11.88, K11.89, K11.90, K11.91, K11.92, K11.93, K11.94, K11.95, K11.96, K11.97, K11.98, K11.99, K11.100, K11.101, K11.102, K11.103,

K12.1, K12.2, K12.3, K12.4, K12.5, K12.6, K12.7, K12.8, K12.9, K12.10, K12.11, K12.12, K12.13, K12.14, K12.15, K12.16, K12.17, K12.18, K12.19, K12.20, K12.21, K12.22, K12.23, K12.24, K12.25, K12.26, K12.27, K12.28, K12.29, K12.30, K12.31, K12.32, K12.33, K12.34, K12.35, K12.36, K12.37, K12.38, K12.39, K12.40, K12.41, K12.42, K12.43, K12.44, K12.45, K12.46, K12.47, K12.48, K12.49, K12.50, K12.51, K12.52, K12.53, K12.54, K12.55, K12.56, K12.57, K12.58, K12.59, K12.60, K12.61, K12.62, K12.63, K12.64, K12.65, K12.66, K12.67, K12.68, K12.69, K12.70, K12.71, K12.72, K12.73, K12.74, K12.75, K12.76, K12.77, K12.78, K12.79, K12.80, K12.81, K12.82, K12.83, K12.84, K12.85, K12.86, K12.87, K12.88, K12.89, K12.90, K12.91, K12.92, K12.93, K12.94, K12.95, K12.96, K12.97, K12.98, K12.99, K12.100, K12.101, K12.102, K12.103,

K13.1, K13.2, K13.3, K13.4, K13.5, K13.6, K13.7, K13.8, K13.9, K13.10, K13.11, K13.12, K13.13, K13.14, K13.15, K13.16, K13.17, K13.18, K13.19, K13.20, K13.21, K13.22, K13.23, K13.24, K13.25, K13.26, K13.27, K13.28, K13.29, K13.30, K13.31, K13.32, K13.33, K13.34, K13.35, K13.36, K13.37, K13.38, K13.39, K13.40, K13.41, K13.42, K13.43, K13.44, K13.45, K13.46, K13.47, K13.48, K13.49, K13.50, K13.51, K13.52, K13.53, K13.54, K13.55, K13.56, K13.57, K13.58, K13.59, K13.60, K13.61, K13.62, K13.63, K13.64, K13.65, K13.66, K13.67, K13.68, K13.69, K13.70, K13.71, K13.72, K13.73, K13.74, K13.75, K13.76, K13.77, K13.78, K13.79, K13.80, K13.81, K13.82, K13.83, K13.84, K13.85, K13.86, K13.87, K13.88, K13.89, K13.90, K13.91, K13.92, K13.93, K13.94, K13.95, K13.96, K13.97, K13.98, K13.99, K13.100, K13.101, K13.102, K13.103,

K14.1, K14.2, K14.3, K14.4, K14.5, K14.6, K14.7, K14.8, K14.9, K14.10, K14.11, K14.12, K14.13, K14.14, K14.15, K14.16, K14.17, K14.18, K14.19, K14.20, K14.21, K14.22, K14.23, K14.24, K14.25, K14.26, K14.27, K14.28, K14.29, K14.30, K14.31, K14.32, K14.33, K14.34, K14.35, K14.36, K14.37, K14.38, K14.39, K14.40, K14.41, K14.42, K14.43, K14.44, K14.45, K14.46, K14.47, K14.48, K14.49, K14.50, K14.51, K14.52, K14.53, K14.54, K14.55, K14.56, K14.57, K14.58, K14.59, K14.60, K14.61, K14.62, K14.63, K14.64, K14.65, K14.66, K14.67, K14.68, K14.69, K14.70, K14.71, K14.72, K14.73, K14.74, K14.75, K14.76, K14.77, K14.78, K14.79, K14.80, K14.81, K14.82, K14.83, K14.84, K14.85, K14.86, K14.87, K14.88, K14.89, K14.90, K14.91, K14.92, K14.93, K14.94, K14.95, K14.96, K14.97, K14.98, K14.99, K14.100, K14.101, K14.102, K14.103,

K15.1, K15.2, K15.3, K15.4, K15.5, K15.6, K15.7, K15.8, K15.9, K15.10, K15.11, K15.12, K15.13, K15.14, K15.15, K15.16, K15.17, K15.18, K15.19, K15.20, K15.21, K15.22, K15.23, K15.24, K15.25, K15.26, K15.27, K15.28, K15.29, K15.30, K15.31, K15.32, K15.33, K15.34, K15.35, K15.36, K15.37, K15.38, K15.39, K15.40, K15.41, K15.42, K15.43, K15.44, K15.45, K15.46, K15.47, K15.48, K15.49, K15.50, K15.51, K15.52, K15.53, K15.54, K15.55, K15.56, K15.57, K15.58, K15.59, K15.60, K15.61, K15.62, K15.63, K15.64, K15.65, K15.66, K15.67, K15.68, K15.69, K15.70, K15.71, K15.72, K15.73, K15.74, K15.75, K15.76, K15.77, K15.78, K15.79, K15.80, K15.81, K15.82, K15.83, K15.84, K15.85, K15.86, K15.87, K15.88, K15.89, K15.90, K15.91, K15.92, K15.93, K15.94, K15.95, K15.96, K15.97, K15.98, K15.99, K15.100, K15.101, K15.102, K15.103,

K16.1, K16.2, K16.3, K16.4, K16.5, K16.6, K16.7, K16.8, K16.9, K16.10, K16.11, K16.12, K16.13, K16.14, K16.15, K16.16, K16.17, K16.18, K16.19, K16.20, K16.21, K16.22, K16.23, K16.24, K16.25, K16.26, K16.27, K16.28, K16.29, K16.30, K16.31, K16.32, K16.33, K16.34, K16.35, K16.36, K16.37, K16.38, K16.39, K16.40, K16.41, K16.42, K16.43, K16.44, K16.45, K16.46, K16.47, K16.48, K16.49, K16.50, K16.51, K16.52, K16.53, K16.54, K16.55, K16.56, K16.57, K16.58, K16.59, K16.60, K16.61, K16.62, K16.63, K16.64, K16.65, K16.66, K16.67, K16.68, K16.69, K16.70, K16.71,

K16.72, K16.73, K16.74, K16.75, K16.76, K16.77, K16.78, K16.79, K16.80, K16.81, K16.82, K16.83, K16.84, K16.85, K16.86, K16.87, K16.88, K16.89, K16.90, K16.91, K16.92, K16.93, K16.94, K16.95, K16.96, K16.97, K16.98, K16.99, K16.100, K16.101, K16.102, K16.103,

K17.1, K17.2, K17.3, K17.4, K17.5, K17.6, K17.7, K17.8, K17.9, K17.10, K17.11, K17.12, K17.13, K17.14, K17.15, K17.16, K17.17, K17.18, K17.19, K17.20, K17.21, K17.22, K17.23, K17.24, K17.25, K17.26, K17.27, K17.28, K17.29, K17.30, K17.31, K17.32, K17.33, K17.34, K17.35, K17.36, K17.37, K17.38, K17.39, K17.40, K17.41, K17.42, K17.43, K17.44, K17.45, K17.46, K17.47, K17.48, K17.49, K17.50, K17.51, K17.52, K17.53, K17.54, K17.55, K17.56, K17.57, K17.58, K17.59, K17.60, K17.61, K17.62, K17.63, K17.64, K17.65, K17.66, K17.67, K17.68, K17.69, K17.70, K17.71, K17.72, K17.73, K17.74, K17.75, K17.76, K17.77, K17.78, K17.79, K17.80, K17.81, K17.82, K17.83, K17.84, K17.85, K17.86, K17.87, K17.88, K17.89, K17.90, K17.91, K17.92, K17.93, K17.94, K17.95, K17.89, K17.90, K17.91, K17.92, K17.93, K17.94, K17.95, K17.96, K17.97, K17.98, K17.99, K17.100, K17.101, K17.102, K17.103, K18.1, K18.2, K18.3, K18.4, K18.5, K18.6, K18.7, K18.8, K18.9, K18.10, K18.11, K18.12, K18.13, K18.14, K18.15, K18.16, K18.17, K18.18, K18.19, K18.20, K18.21, K18.22, K18.23, K18.24, K18.25, K18.26, K18.27, K18.28, K18.29, K18.30, K18.31, K18.32, K18.33, K18.34, K18.35, K18.36, K18.37, K18.38, K18.39, K18.40, K18.41, K18.42, K18.43, K18.44, K18.45, K18.46, K18.47, K18.48, K18.49, K18.50, K18.51, K18.52, K18.53, K18.54, K18.55, K18.56, K18.57, K18.58, K18.59, K18.60, K18.61, K18.62, K18.63, K18.64, K18.65, K18.66, K18.67, K18.68, K18.69, K18.70, K18.71, K18.72, K18.73, K18.74, K18.75, K18.76, K18.77, K18.78, K18.79, K18.80, K18.81, K18.82, K18.83, K18.84, K18.85, K18.86; K18.87, K18.88, K18.89, K18.90, K18.91, K18.92, K18.93, K18.94, K18.95, K18.96, K18.97, K18.98, K18.99, K18.100, K18.101, K18.102, K18.103,

K19.1, K19.2, K19.3, K19.4, K19.5, K19.6, K19.7, K19.8, K19.9, K19.10, K19.11, K19.12, K19.13, K19.14, K19.15, K19.16, K19.17, K19.18, K19.19, K19.20, K19.21, K19.22, K19.23, K19.24, K19.25, K19.26, K19.27, K19.28, K19.29, K19.30, K19.31, K19.32, K19.33, K19.34, K19.35, K19.36, K19.37, K19.38, K19.39, K19.40, K19.41, K19.42, K19.43, K19.44, K19.45, K19.46, K19.47, K19.48, K19.49, K19.50, K19.51, K19.52, K19.53, K19.54, K19.55, K19.56, K19.57, K19.58, K19.59, K19.60, K19.61, K19.62, K19.63, K19.64, K19.65, K19.66, K19.67, K19.68, K19.69, K19.70, K19.71, K19.72, K19.73, K19.74, K19.75, K19.76, K19.77, K19.78, K19.79, K19.80, K19.81, K19.82, K19.83, K19.84, K19.85, K19.86, K19.87, K19.88, K19.89, K19.90, K19.91, K19.92, K19.93, K19.94, K19.95, K19.96, K19.97, K19.98, K19.99, K19.100, K19.101, K19.102, K19.103,

K20.1, K20.2, K20.3, K20.4, K20.5, K20.6, K20.7, K20.8, K20.9, K20.10, K20.11, K20.12, K20.13, K20.14, K20.15, K20.16, K20.17, K20.18, K20.19, K20.20, K20.21, K20.22, K20.23, K20.24, K20.25, K20.26, K20.27, K20.28, K20.29, K20.30, K20.31, K20.32, K20.33, K20.34, K20.35, K20.36, K20.37, K20.38, K20.39, K20.40, K20.41, K20.42, K20.43, K20.44, K20.45, K20.46, K20.47, K20.48, K20.49, K20.50, K20.51, K20.52, K20.53, K20.54, K20.55, K20.56, K20.57, K20.58, K20.59, K20.60, K20.61, K20.62, K20.63, K20.64, K20.65, K20.66, K20.67, K20.68, K20.69, K20.70, K20.71, K20.72, K20.73, K20.74, K20.75, K20.76, K20.77, K20.78, K20.79, K20.80, K20.81, K20.82, K20.83, K20.84, K20.85, K20.86, K20.87, K20.88, K20.89, K20.90, K20.91, K20.92, K20.93, K20.94, K20.95, K20.96, K20.97, K20.98, K20.99, K20.100, K20.101, K20.102, K20.103,

K21.1, K21.2, K21.3, K21.4, K21.5, K21.6, K21.7, K21.8, K21.9, K21.10, K21.11, K21.12, K21.13, K21.14, K21.15, K21.16, K21.17, K21.18, K21.19, K21.20, K21.21, K21.22, K21.23, K21.24, K21.25, K21.26, K21.27, K21.28, K21.29, K21.30, K21.31, K21.32, K21.33, K21.34, K21.35, K21.36, K21.37, K21.38, K21.39, K21.40, K21.41, K21.42, K21.43, K21.44, K21.45, K21.46, K21.47, K21.48, K21.49, K21.50, K21.51, K21.52, K21.53, K21.54, K21.55, K21.56, K21.57, K21.58, K21.59, K21.60, K21.61, K21.62, K21.63, K21.64, K21.65, K21.66, K21.67, K21.68, K21.69, K21.70, K21.71, K21.72, K21.73, K21.74, K21.75, K21.76, K21.77, K21.78, K21.79, K21.80, K21.81, K21.82, K21.83, K21.84, K21.85, K21.86, K21.87, K21.88, K21.89, K21.90, K21.91, K21.92, K21.93, K21.94, K21.95, K21.96, K21.97, K21.98, K21.99, K21.100, K21.101, K21.102, K21.103,

K22.1, K22.2, K22.3, K22.4, K22.5, K22.6, K22.7, K22.8, K22.9, K22.1 0, K22.11, K22.12, K22.13, K22.14, K22.15, K22.16, K22.17, K22.18, K22.19, K22.20, K22.21, K22.22, K22.23, K22.24, K22.25, K22.26, K22.27, K22.28, K22.29, K22.30, K22.31, K22.32, K22.33, K22.34, K22.35, K22.36, K22.37, K22.38, K22.39, K22.40, K22.41, K22.42, K22.43, K22.44, K22.45, K22.46, K22.47, K22.48, K22.49, K22.50, K22.51, K22.52, K22.53, K22.54, K22.55, K22.56, K22.57, K22.58, K22.59, K22.60, K22.61, K22.62, K22.63, K22.64, K22.65, K22.66, K22.67, K22.68, K22.69, K22.70, K22.71, K22.72, K22.73, K22.74, K22.75, K22.76, K22.77, K22.78, K22.79, K22.80, K22.81, K22.82, K22.83, K22.84, K22.85, K22.86, K22.87, K22.88, K22.89, K22.90, K22.91, K22.92, K22.93, K22.94, K22.95, K22.96, K22.97, K22.98, K22.99, K22.100, K22.101, K22.102, K22.103,

K23.1, K23.2, K23.3, K23.4, K23.5, K23.6, K23.7, K23.8, K23.9, K23.10, K23.11, K23.12, K23.13, K23.14, K23.15, K23.16, K23.17, K23.18, K23.19, K23.20, K23.21, K23.22, K23.23, K23.24, K23.25, K23.26, K23.27, K23.28, K23.29, K23.30, K23.31, K23.32, K23.33, K23.34, K23.35, K23.36, K23.37, K23.38, K23.39, K23.40, K23.41, K23.42, K23.43, K23.44, K23.45, K23.46, K23.47, K23.48, K23.49, K23.50, K23.51, K23.52, K23.53, K23.54, K23.55, K23.56, K23.57, K23.58, K23.59, K23.60, K23.61, K23.62, K23.63, K23.64, K23.65, K23.66, K23.67, K23.68, K23.69, K23.70, K23.71, K23.72, K23.73, K23.74, K23.75, K23.76, K23.77, K23.78, K23.79, K23.80, K23.81, K23.82, K23.83, K23.84, K23.85, K23.86, K23.87, K23.88, K23.89, K23.90, K23.91, K23.92, K23.93, K23.94, K23.95, K23.96, K23.97, K23.98, K23.99,

K23.100, K23.101, K23.102, K23.103,

K24.1, K24.2, K24.3, K24.4, K24.5, K24.6, K24.7, K24.8, K24.9, K24.10, K24.11, K24.12, K24.13, K24.14, K24.15, K24.16, K24.17, K24.18, K24.19, K24.20, K24.21, K24.22, K24.23, K24.24, K24.25, K24.26, K24.27, K24.28, K24.29, K24.30, K24.31, K24.32, K24.33, K24.34, K24.35, K24.36, K24.37, K24.38, K24.39, K24.40, K24.41, K24.42, K24.43, K24.44, K24.45, K24.46, K24.47, K24.48, K24.49, K24.50, K24.51, K24.52, K24.53, K24.54, K24.55, K24.56, K24.57, K24.58, K24.59, K24.60, K24.61, K24.62, K24.63, K24.64, K24.65, K24.66, K24.67, K24.68, K24.69, K24.70, K24.71, K24.72, K24.73, K24.74, K24.75, K24.76, K24.77, K24.78, K24.79, K24.80, K24.81, K24.82, K24.83, K24.84, K24.85, K24.86, K24.87, K24.88, K24.89, K24.90, K24.91, K24.92, K24.93, K24.94, K24.95, K24.96, K24.97, K24.98, K24.99, K24.100, K24.101, K24.102, K24.103,

K25.1, K25.2, K25.3, K25.4, K25.5, K25.6, K25.7, K25.8, K25.9, K25.1 0, K25.11, K25.12, K25.13, K25.14, K25.15, K25.16, K25.17, K25.18, K25.19, K25.20, K25.21, K25.22, K25.23, K25.24, K25.25, K25.26, K25.27, K25.28, K25.29, K25.30, K25.31, K25.32, K25.33, K25.34, K25.35, K25.36, K25.37, K25.38, K25.39, K25.40, K25.41, K25.42, K25.43, K25.44, K25.45, K25.46, K25.47, K25.48, K25.49, K25.50, K25.51, K25.52, K25.53, K25.54, K25.55, K25.56, K25.57, K25.58, K25.59, K25.60, K25.61, K25.62, K25.63, K25.64, K25.65, K25.66, K25.67, K25.68, K25.69, K25.70, K25.71, K25.72, K25.73, K25.74, K25.75, K25.76, K25.77, K25.78, K25.79, K25.80, K25.81, K25.82, K25.83, K25.84, K25.85, K25.86, K25.87, K25.88, K25.89, K25.90, K25.91, K25.92, K25.93, K25.94, K25.95, K25.96, K25.97, K25.98, K25.99, K25.100, K25.101, K25.102, K25.103,

K26.1, K26.2, K26.3, K26.4, K26.5, K26.6, K26.7, K26.8, K26.9, K26.10, K26.11, K26.12, K26.13, K26.14, K26.15, K26.16, K26.17, K26.18, K26.19, K26.20, K26.21, K26.22, K26.23, K26.24, K26.25, K26.26, K26.27, K26.28, K26.29, K26.30, K26.31, K26.32, K26.33, K26.34, K26.35, K26.36, K26.37, K26.38, K26.39, K26.40, K26.41, K26.42, K26.43, K26.44, K26.45, K26.46, K26.47, K26.48, K26.49, K26.50, K26.51, K26.52, K26.53, K26.54, K26.55, K26.56, K26.57, K26.58, K26.59, K26.60, K26.61, K26:62, K26.63, K26.64, K26.65, K26.66, K26.67, K26.68, K26.69, K26.70, K26.71, K26.72, K26.73, K26.74, K26.75, K26.76, K26.77, K26.78, K26.79, K26.80, K26.81, K26.82, K26.83, K26.84, K26.85, K26.86, K26.87, K26.88, K26.89, K26.90, K26.91, K26.92, K26.93, K26.94, K26.95, K26.96, K26.97, K26.98, K26.99, K26.100, K26.101, K26.102, K26.103,

K27.1, K27.2, K27.3, K27.4, K27.5, K27.6, K27.7, K27.8, K27.9, K27.10, K27.11, K27.12, K27.13, K27.14, K27.15, K27.16, K27.17, K27.18, K27.19, K27.20, K27.21, K27.22, K27.23, K27.24, K27.25, K27.26, K27.27, K27.28, K27.29, K27.30, K27.31, K27.32, K27.33, K27.34, K27.35, K27.36, K27.37, K27.38, K27.39, K27.40, K27.41, K27.42, K27.43, K27.44, K27.45, K27.46, K27.47, K27.48, K27.49, K27.50, K27.51, K27.52, K27.53, K27.54, K27.55, K27.56, K27.57, K27.58, K27.59, K27.60, K27.61, K27.62, K27.63, K27.64, K27.65, K27.66, K27.67, K27.68, K27.69, K27.70, K27.71, K27.72, K27.73, K27.74, K27.75, K27.76, K27.77, K27.78, K27.79, K27.80, K27.81, K27.82, K27.83, K27.84, K27.85, K27.86, K27.87, K27.88, K27.89, K27.90, K27.91, K27.92, K27.93, K27.94, K27.95, K27.96, K27.97, K27.98, K27.99, K27.100, K27.101, K27.102, K27.103,

K28.1, K28.2, K28.3, K28.4, K28.5, K28.6, K28.7, K28.8, K28.9, K28.1 0, K28.11, K28.12, K28.13, K28.14, K28.15, K28.16, K28.17, K28.18, K28.19, K28.20, K28.21, K28.22, K28.23, K28.24, K28.25, K28.26, K28.27, K28.28, K28.29, K28.30, K28.31, K28.32, K28.33, K28.34, K28.35, K28.36, K28.37, K28.38, K28.39, K28.40, K28.41, K28.42, K28.43, K28.44, K28.45, K28.46, K28.47, K28.48, K28.49, K28.50, K28.51, K28.52, K28.53, K28.54, K28.55, K28.56, K28.57, K28.58, K28.59, K28.60, K28.61, K28.62, K28.63, K28.64, K28.65, K28.66, K28.67, K28.68, K28.69, K28.70, K28.71, K28.72, K28.73, K28.74, K28.75, K28.76, K28.77, K28.78, K28.79, K28.80, K28.81, K28.82, K28.83, K28.84, K28.85, K28.86, K28.87, K28.88, K28.89, K28.90, K28.91, K28.92, K28.93, K28.94, K28.95, K28.96, K28.97, K28.98, K28.99, K28.100, K28.101, K28.102, K28.103,

K29.1, K29.2, K29.3, K29.4, K29.5, K29.6, K29.7, K29.8, K29.9, K29.10, K29.11, K29.12, K29.13, K29.14, K29.15, K29.16, K29.17, K29.18, K29.19, K29.20, K29.21, K29.22, K29.23, K29.24, K29.25, K29.26, K29.27, K29.28, K29.29, K29.30, K29.31, K29.32, K29.33, K29.34, K29.35, K29.36, K29.37, K29.38, K29.39, K29.40, K29.41, K29.42, K29.43, K29.44, K29.45, K29.46, K29.47, K29.48, K29.49, K29.50, K29.51, K29.52, K29.53, K29.54, K29.55, K29.56, K29.57, K29.58, K29.59, K29.60, K29.61, K29.62, K29.63, K29.64, K29.65, K29.66, K29.67, K29.68, K29.69, K29.70, K29.71, K29.72, K29.73, K29.74, K29.75, K29.76, K29.77, K29.78, K29.79, K29.80, K29.81, K29.82, K29.83, K29.84, K29.85, K29.86, K29.87, K29.88, K29.89, K29.90, K29.91, K29.92, K29.93, K29.94, K29.95, K29.96, K29.97, K29.98, K29.99, K29.100, K29.101, K29.102, K29.103,

K30.1, K30.2, K30.3, K30.4, K30.5, K30.6, K30.7, K30.8, K30.9, K30.10, K30.11, K30.12, K30.13, K30.14, K30.15, K30.16, K30.17, K30.18, K30.19, K30.20, K30.21, K30.22, K30.23, K30.24, K30.25, K30.26, K30.27, K30.28, K30.29, K30.30, K30.31, K30.32, K30.33, K30.34, K30.35, K30.36, K30.37, K30.38, K30.39, K30.40, K30.41, K30.42, K30.43, K30.44, K30.45, K30.46, K30.47, K30.48, K30.49, K30.50, K30.51, K30.52, K30.53, K30.54, K30.55, K30.56, K30.57, K30.58, K30.59, K30.60, K30.61, K30.62, K30.63, K30.64, K30.65, K30.66, K30.67, K30.68, K30.69, K30.70, K30.71, K30.72, K30.73, K30.74, K30.75, K30.76, K30.77, K30.78, K30.79, K30.80, K30.81, K30.82, K30.83, K30.84, K30.85, K30.86, K30.87, K30.88, K30.89, K30.90, K30.91, K30.92, K30.93, K30.94, K30.95, K30.96, K30.97, K30.98, K30.99, K30.100, K30.101, K30.102, K30.103,

K31.1, K31.2, K31.3, K31.4, K31.5, K31.6, K31.7, K31.8, K31.9, K31.10, K31.11, K31.12, K31.13, K31.14, K31.15,

K31.16, K31.17, K31.18, K31.19, K31.20, K31.21, K31.22, K31.23, K31.24, K31.25, K31.26, K31.27, K31.28, K31.29, K31.30, K31.31, K31.32, K31.33, K31.34, K31.35, K31.36, K31.37, K31.38, K31.39, K31.40, K31.41, K31.42, K31.43, K31.44, K31.45, K31.46, K31.47, K31.48, K31.49, K31.50, K31.51, K31.52, K31.53, K31.54, K31.55, K31.56, K31.57, K31.58, K31.59, K31.60, K31.61, K31.62, K31.63, K31.64, K31.65, K31.66, K31.67, K31.68, K3.1.69, K31.70, K31.71, K31.72, K31.73, K31.74, K31.75, K31.76, K31.77, K31.78, K31.79, K31.80, K31.81, K31.82, K31.83, K31.84, K31.85, K31.86, K31.87, K31.88, K31.89, K31.90, K31.91, K31.92, K31.93, K31.94, K31.95, K31.96, K31.97, K31.98, K31.99, K31.100, K31.101, K31.102, K31.103,

K32.1, K32.2, K32.3, K32.4, K32.5, K32.6, K32.7, K32.8, K32.9, K32.10, K32.11, K32.12, K32.13, K32.14, K32.15, K32.16, K32.17, K32.18, K32.19, K32.20, K32.21, K32.22, K32.23, K32.24, K32.25, K32.26, K32.27, K32.28, K32.29, K32.30, K32.31, K32.32, K32.33, K32.34, K32.35, K32.36, K32.37, K32.38, K32.39, K32.40, K32.41, K32.42, K32.43, K32.44, K32.45, K32.46, K32.47, K32.48, K32.49, K32.50, K32.51, K32.52, K32.53, K32.54, K32.55, K32.56, K32.57, K32.58, K32.59, K32.60, K32.61, K32.62, K32.63, K32.64, K32.65, K32.66, K32.67, K32.68, K32.69, K32.70, K32.71, K32.72, K32.73, K32.74, K32.75, K32.76, K32.77, K32.78, K32.79, K32.80, K32.81, K32.82, K32.83, K32.84, K32.85, K32.86, K32.87, K32.88, K32.89, K32.90, K32.91, K32.92, K32.93, K32.94, K32.95, K32.96, K32.97, K32.98, K32.99, K32.100, K32.101, K32.102, K32.103,

K33.1, K33.2, K33.3, K33.4, K33.5, K33.6, K33.7, K33.8, K33.9, K33.10, K33.11, K33.12, K33.13, K33.14, K33.15, K33.16, K33.17, K33.18, K33.19, K33.20, K33.21, K33.22, K33.23, K33.24, K33.25, K33.26, K33.27, K33.28, K33.29, K33.30, K33.31, K33.32, K33.33, K33.34, K33.35, K33.36, K33.37, K33.38, K33.39, K33.40, K33.41, K33.42, K33.43, K33.44, K33.45, K33.46, K33.47, K33.48, K33.49, K33.50, K33.51, K33.52, K33.53, K33.54, K33.55, K33.56, K33.57, K33.58, K33.59, K33.60, K33.61, K33.62, K33.63, K33.64, K33.65, K33.66, K33.67, K33.68, K33.69, K33.70, K33.71, K33.72, K33.73, K33.74, K33.75, K33.76, K33.77, K33.78, K33.79, K33.80, K33.81, K33.82, K33.83, K33.84, K33.85, K33.86, K33.87, K33.88, K33.89, K33.90, K33.91, K33.92, K33.93, K33.94, K33.95, K33.96, K33.97, K33.98, K33.99, K33.100, K33.101, K33.102, K33.103,

K34.1, K34.2, K34.3, K34.4, K34.5, K34.6, K34.7, K34.8, K34.9, K34.10, K34.11, K34.12, K34.13, K34.14, K34.15, K34.16, K34.17, K34.18, K34.19, K34.20, K34.21, K34.22, K34.23, K34.24, K34.25, K34.26, K34.27, K34.28, K34.29, K34.30, K34.31, K34.32, K34.33, K34.34, K34.35, K34.36, K34.37, K34.38, K34.39, K34.40, K34.41, K34.42, K34.43, K34.44, K34.45, K34.46, K34.47, K34.48, K34.49, K34.50, K34.51, K34.52, K34.53, K34.54, K34.55, K34.56, K34.57, K34.58, K34.59, K34.60, K34.61, K34.62, K34.63, K34.64, K34.65, K34.66, K34.67, K34.68, K34.69, K34.70, K34.71, K34.72, K34.73, K34.74, K34.75, K34.76, K34.77, K34.78, K34.79, K34.80, K34.81, K34.82, K34.83, K34.84, K34.85, K34.86, K34.87, K34.88, K34.89, K34.90, K34.91, K34.92, K34.93, K34.94, K34.95, K34.96, K34.97, K34.98, K34.99, K34.100, K34.101, K34.102, K34.103,

K35.1, K35.2, K35.3, K35.4, K35.5, K35.6, K35.7, K35.8, K35.9, K35.10, K35.11, K35.12, K35.13, K35.14, K35.15, K35.16, K35.17, K35.18, K35.19, K35.20, K35.21, K35.22, K35.23, K35.24, K35.25, K35.26, K35.27, K35.28, K35.29, K35.30, K35.31, K35.32, K35.33, K35.34, K35.35, K35.36, K35.37, K35.38, K35.39, K35.40, K35.41, K35.42, K35.43, K35.44, K35.45, K35.46, K35.47, K35.48, K35.49, K35.50, K35.51, K35.52, K35.53, K35.54, K35.55, K35.56, K35.57, K35.58, K35.59, K35.60, K35.61, K35.62, K35.63, K35.64, K35.65, K35.66, K35.67, K35.68, K35.69, K35.70, K35.71, K35.72, K35.73, K35.74, K35.75, K35.76, K35.77, K35.78, K35.79, K35.80, K35.81, K35.82, K35.83, K35.84, K35.85, K35.86, K35.87, K35.88, K35.89, K35.90, K35.91, K35.92, K35.93, K35.94, K35.95, K35.96, K35.97, K35.98, K35.99, K35.100, K35.101, K35.102, K35.103,

K36.1, K36.2, K36.3, K36.4, K36.5, K36.6, K36.7, K36.8, K36.9, K36.10, K36.11, K36.12, K36.13, K36.14, K36.15, K36.16, K36.17, K36.18, K36.19, K36.20, K36.21, K36.22, K36.23, K36.24, K36.25, K36.26, K36.27, K36.28, K36.29, K36.30, K36.31, K36.32, K36.33, K36.34, K36.35, K36.36, K36.37, K36.38, K36.39, K36.40, K36.41, K36.42, K36.43, K36.44, K36.45, K36.46, K36.47, K36.48, K36.49, K36.50, K36.51, K36.52, K36.53, K36.54, K36.55, K36.56, K36.57, K36.58, K36.59, K36.60, K36.61, K36.62, K36.63, K36.64, K36.65, K36.66, K36.67, K36.68, K36.69, K36.70, K36.71, K36.72, K36.73, K36.74, K36.75, K36.76, K36.77, K36.78, K36.79, K36.80, K36.81, K36.82, K36.83, K36.84, K36.85, K36.86, K36.87, K36.88, K36.89, K36.90, K36.91, K36.92, K36.93, K36.94, K36.95, K36.96, K36.97, K36.98, K36.99, K36.100, K36.101, K36.102, K36.103,

K37.1, K37.2, K37.3, K37.4, K37.5, K37.6, K37.7, K37.8, K37.9, K37.10, K37.11, K37.12, K37.13, K37.14, K37.15, K37.16, K37.17, K37.18, K37.19, K37.20, K37.21, K37.22, K37.23, K37.24, K37.25, K37.26, K37.27, K37.28, K37.29, K37.30, K37.31, K37.32, K37.33, K37.34, K37.35, K37.36, K37.37, K37.38, K37.39, K37.40, K37.41, K37.42, K37.43, K37.44, K37.45, K37.46, K37.47, K37.48, K37.49, K37.50, K37.51, K37.52, K37.53, K37.54, K37.55, K37.56, K37.57, K37.58, K37.59, K37.60, K37.61, K37.62, K37.63, K37.64, K37.65, K37.66, K37.67, K37.68, K37.69, K37.70, K37.71, K37.72, K37.73, K37.74, K37.75, K37.76, K37.77, K37.78, K37.79, K37.80, K37.81, K37.82, K37.83, K37.84, K37.85, K37.86, K37.87, K37.88, K37.89, K37.90, K37.91, K37.92, K37.93, K37.94, K37.95, K37.96, K37.97, K37.98, K37.99, K37.100, K37.101, K37.102, K37.103,

K38.1, K38.2, K38.3, K38.4, K38.5, K38.6, K38.7, K38.8, K38.9, K38.10, K38.11, K38.12, K38.13, K38.14, K38.15, K38.16, K38.17, K38.18, K38.19, K38.20, K38.21, K38.22, K38.23, K38.24, K38.25, K38.26, K38.27, K38.28, K38.29, K38.30, K38.31, K38.32, K38.33, K38.34, K38.35, K38.36, K38.37, K38.38, K38.39, K38.40, K38.41, K38.42, K38.43,

K38.44, K38.45, K38.46, K38.47, K38.48, K38.49, K38.50, K38.51, K38.52, K38.53, K38.54, K38.55, K38.56, K38.57, K38.58, K38.59, K38.60, K38.61, K38.62, K38.63, K38.64, K38.65, K38.66, K38.67, K38.68, K38.69, K38.70, K38.71, K38.72, K38.73, K38.74, K38.75, K38.76, K38.77, K38.78, K38.79, K38.80, K38.81, K38.82, K38.83, K38.84, K38.85, K38.86, K38.87, K38.88, K38.89, K38.90, K38.91, K38.92, K38.93, K38.94, K38.95, K38.96, K38.97, K38.98, K38.99, K38.100, K38.101, K38.102, K38.103,

K39.1, K39.2, K39.3, K39.4, K39.5, K39.6, K39.7, K39.8, K39.9, K39.10, K39.11, K39.12, K39.13, K39.14, K39.15, K39.16, K39.17, K39.18, K39.19, K39.20, K39.21, K39.22, K39.23, K39.24, K39.25, K39.26, K39.27, K39.28, K39.29, K39.30, K39.31, K39.32, K39.33, K39.34, K39.35, K39.36, K39.37, K39.38, K39.39, K39.40, K39.41, K39.42, K39.43, K39.44, K39.45, K39.46, K39.47, K39.48, K39.49, K39.50, K39.51, K39.52, K39.53, K39.54, K39.55, K39.56, K39.57, K39.58, K39.59, K39.60, K39.61, K39.62, K39.63, K39.64, K39.65, K39.66, K39.67, K39.68, K39.69, K39.70, K39.71, K39.72, K39.73, K39.74, K39.75, K39.76, K39.77, K39.78, K39.79, K39.80, K39.81, K39.82, K39.83, K39.84, K39.85, K39.86, K39.87, K39.88, K39.89, K39.90, K39.91, K39.92, K39.93, K39.94, K39.95, K39.96, K39.97, K39.98, K39.99, K39.100, K39.101, K39.102, K39.103,

K40.1, K40.2, K40.3, K40.4, K40.5, K40.6, K40.7, K40.8, K40.9, K40.10, K40.11, K40.12, K40.13, K40.14, K40.15, K40.16, K40.17, K40.18, K40.19, K40.20, K40.21, K40.22, K40.23, K40.24, K40.25, K40.26, K40.27, K40.28, K40.29, K40.30, K40.31, K40.32, K40.33, K40.34, K40.35, K40.36, K40.37, K40.38, K40.39, K40.40, K40.41, K40.42, K40.43, K40.44, K40.45, K40.46, K40.47, K40.48, K40.49, K40.50, K40.51, K40.52, K40.53, K40.54, K40.55, K40.56, K40.57, K40.58, K40.59, K40.60, K40.61, K40.62, K40.63, K40.64, K40.65, K40.66, K40.67, K40.68, K40.69, K40.70, K40.71, K40.72, K40.73, K40.74, K40.75, K40.76, K40.77, K40.78, K40.79, K40.80, K40.81, K40.82, K40.83, K40.84, K40.85, K40.86, K40.87, K40.88, K40.89, K40.90, K40.91, K40.92, K40.93, K40.94, K40.95, K40.96, K40.97, K40.98, K40.99, K40.100, K40.101, K40.102, K40.103,

K41.1, K41.2, K41.3, K41.4, K41.5, K41.6, K41.7, K41.8, K41.9, K41.10, K41.11, K41.12, K41.13, K41.14, K41.15, K41.16, K41.17, K41.18, K41.19, K41.20, K41.21, K41.22, K41.23, K41.24, K41.25, K41.26, K41.27, K41.28, K41.29, K41.30, K41.31, K41.32, K41.33, K41.34, K41.35, K41.36, K41.37, K41.38, K41.39, K41.40, K41.41, K41.42, K41.43, K41.44, K41.45, K41.46, K41.47, K41.48, K41.49, K41.50, K41.51, K41.52, K41.53, K41.54, K41.55, K41.56, K41.57, K41.58, K41.59, K41.60, K41.61, K41.62, K41.63, K41.64, K41.65, K41.66, K41.67, K41.68, K41.69, K41.70, K41.71, K41.72, K41.73, K41.74, K41.75, K41.76, K41.77, K41.78, K41.79, K41.80, K41.81, K41.82, K41.83, K41.84, K41.85, K41.86, K41.87, K41.88, K41.89, K41.90, K41.91, K41.92, K41.93, K41.94, K41.95, K41.96, K41.97, K41.98, K41.99, K41.100, K41.101, K41.102, K41.103,

K42.1, K42.2, K42.3, K42.4, K42.5, K42.6, K42.7, K42.8, K42.9, K42.10, K42.11, K42.12, K42.13, K42.14, K42.15, K42.16, K42.17, K42.18, K42.19, K42.20, K42.21, K42.22, K42.23, K42.24, K42.25, K42.26, K42.27, K42.28, K42.29, K42.30, K42.31, K42.32, K42.33, K42.34, K42.35, K42.36, K42.37, K42.38, K42.39, K42.40, K42.41, K42.42, K42.43, K42.44, K42.45, K42.46, K42.47, K42.48, K42.49, K42.50, K42.51, K42.52, K42.53, K42.54, K42.55, K42.56, K42.57, K42.58, K42.59, K42.60, K42.61, K42.62, K42.63, K42.64, K42.65, K42.66, K42.67, K42.68, K42.69, K42.70, K42.71, K42.72, K42.73, K42.74, K42.75, K42.76, K42.77, K42.78, K42.79, K42.80, K42.81, K42.82, K42.83, K42.84, K42.85, K42.86, K42.87, K42.88, K42.89, K42.90, K42.91, K42.92, K42.93, K42.94, K42.95, K42.96, K42.97, K42.98, K42.99, K42.100, K42.101, K42.102, K42.103,

K43.1, K43.2, K43.3, K43.4, K43.5, K43.6, K43.7, K43.8, K43.9, K43.10, K43.11, K43.12, K43.13, K43.14, K43.15, K43.16, K43.17, K43.18, K43.19, K43.20, K43.21, K43.22, K43.23, K43.24, K43.25, K43.26, K43.27, K43.28, K43.29, K43.30, K43.31, K43.32, K43.33, K43.34, K43.35, K43.36, K43.37, K43.38, K43.39, K43.40, K43.41,
K43.42, K43.43, K43.44, K43.45, K43.46, K43.47, K43.48, K43.49, K43.50, K43.51, K43.52, K43.53, K43.54, K43.55, K43.56, K43.57, K43.58, K43.59, K43.60, K43.61, K43.62, K43.63, K43.64, K43.65, K43.66, K43.67, K43.68, K43.69, K43.70, K43.71, K43.72, K43.73, K43.74, K43.75, K43.76, K43.77, K43.78, K43.79, K43.80, K43.81, K43.82, K43.83, K43.84, K43.85, K43.86, K43.87, K43.88, K43.89, K43.90, K43.91, K43.92, K43.93, K43.94, K43.95, K43.96, K43.97, K43.98, K43.99, K43.100, K43.101, K43.102, K43.103,

K44.1, K44.2, K44.3, K44.4, K44.5, K44.6, K44.7, K44.8, K44.9, K44.10, K44.11, K44.12, K44.13, K44.14, K44.15, K44.16, K44.17, K44.18, K44.19, K44.20, K44.21, K44.22, K44.23, K44.24, K44.25, K44.26, K44.27, K44.28, K44.29, K44.30, K44.31, K44.32, K44.33, K44.34, K44.35, K44.36, K44.37, K44.38, K44.39, K44.40, K44.41, K44.42, K44.43, K44.44, K44.45, K44.46, K44.47, K44.48, K44.49, K44.50, K44.51, K44.52, K44.53, K44.54, K44.55, K44.56, K44.57, K44.58, K44.59, K44.60, K44.61, K44.62, K44.63, K44.64, K44.65, K44.66, K44.67, K44.68, K44.69, K44.70, K44.71, K44.72, K44.73, K44.74, K44.75, K44.76, K44.77, K44.78, K44.79, K44.80, K44.81, K44.82, K44.83, K44.84, K44.85, K44.86, K44.87, K44.88, K44.89, K44.90, K44.91, K44.92, K44.93, K44.94, K44.95, K44.96, K44.97, K44.98, K44.99, K44.100, K44.101, K44.102, K44.103,

K45.1, K45.2, K45.3, K45.4, K45.5, K45.6, K45.7, K45.8, K45.9, K45.10, K45.11, K45.12, K45.13, K45.14, K45.15, K45.16, K45.17, K45.18, K45.19, K45.20, K45.21, K45.22, K45.23, K45.24, K45.25, K45.26, K45.27, K45.28, K45.29, K45.30, K45.31, K45.32, K45.33, K45.34, K45.35, K45.36, K45.37, K45.38, K45.39, K45.40, K45.41, K45.42, K45.43, K45.44, K45.45, K45.46, K45.47, K45.48, K45.49, K45.50, K45.51, K45.52, K45.53, K45.54, K45.55, K45.56, K45.57, K45.58, K45.59, K45.60, K45.61, K45.62, K45.63, K45.64, K45.65, K45.66, K45.67, K45.68, K45.69, K45.70, K45.71,

K45.72, K45.73, K45.74, K45.75, K45.76, K45.77, K45.78, K45.79, K45.80, K45.81, K45.82, K45.83, K45.84, K45.85, K45.86, K45.87, K45.88, K45.89, K45.90, K45.91, K45.92, K45.93, K45.94, K45.95, K45.96, K45.97, K45.98, K45.99, K45.100, K45.101, K45.102, K45.103,

K46.1, K46.2, K46.3, K46.4, K46.5, K46.6, K46.7, K46.8, K46.9, K46.10, K46.11, K46.12, K46.13, K46.14, K46.15, K46.16, K46.17, K46.18, K46.19, K46.20, K46.21, K46.22, K46.23, K46.24, K46.25, K46.26, K46.27, K46.28, K46.29, K46.30, K46.31, K46.32, K46.33, K46.34, K46.35, K46.36, K46.37, K46.38, K46.39, K46.40, K46.41, K46.42, K46.43, K46.44, K46.45, K46.46, K46.47, K46.48, K46.49, K46.50, K46.51, K46.52, K46.53, K46.54, K46.55, K46.56, K46.57, K46.58, K46.59, K46.60, K46.61, K46.62, K46.63, K46.64, K46.65, K46.66, K46.67, K46.68, K46.69, K46.70, K46.71, K46.72, K46.73, K46.74, K46.75, K46.76, K46.77, K46.78, K46.79, K46.80, K46.81, K46.82, K46.83, K46.84, K46.85, K46.86, K46.87, K46.88, K46.89, K46.90, K46.91, K46.92, K46.93, K46.94, K46.95, K46.96, K46.97, K46.98, K46.99, K46.100, K46.101, K46.102, K46.103,

K47.1, K47.2, K47.3, K47.4, K47.5, K47.6, K47.7, K47.8, K47.9, K47.10, K47.11, K47.12, K47.13, K47.14, K47.15, K47.16, K47.17, K47.18, K47.19, K47.20, K47.21, K47.22, K47.23, K47.24, K47.25, K47.26, K47.27, K47.28, K47.29, K47.30, K47.31, K47.32, K47.33, K47.34, K47.35, K47.36, K47.37, K47.38, K47.39, K47.40, K47.41, K47.42, K47.43, K47.44, K47.45, K47.46, K47.47, K47.48, K47.49, K47.50, K47.51, K47.52, K47.53, K47.54, K47.55, K47.56, K47.57, K47.58, K47.59, K47.60, K47.61, K47.62, K47.63, K47.64, K47.65, K47.66, K47.67, K47.68, K47.69, K47.70, K47.71, K47.72, K47.73, K47.74, K47.75, K47.76, K47.77, K47.78, K47.79, K47.80, K47.81, K47.82, K47.83, K47.84, K47.85, K47.86, K47.87, K47.88, K47.89, K47.90, K47.91, K47.92, K47.93, K47.94, K47.95, K47.96, K47.97, K47.98, K47.99, K47.100, K47.101, K47.102, K47.103,

K48.1, K48.2, K48.3, K48.4, K48.5, K48.6, K48.7, K48.8, K48.9, K48.10, K48.11, K48.12, K48.13, K48.14, K48.15, K48.16, K48.17, K48.18, K48.19, K48.20, K48.21, K48.22, K48.23, K48.24, K48.25, K48.26, K48.27, K48.28, K48.29, K48.30, K48.31, K48.32, K48.33, K48.34, K48.35, K48.36, K48.37, K48.38, K48.39, K48.40, K48.41, K48.42, K48.43, K48.44, K48.45, K48.46, K48.47, K48.48, K48.49, K48.50, K48.51, K48.52, K48.53, K48.54, K48.55, K48.56, K48.57, K48.58, K48.59, K48.60, K48.61, K48.62, K48.63, K48.64, K48.65, K48.66, K48.67, K48.68, K48.69, K48.70, K48.71, K48.72, K48.73, K48.74, K48.75, K48.76, K48.77, K48.78, K48.79, K48.80, K48.81, K48.82, K48.83, K48.84, K48.85, K48.86, K48.87, K48.88, K48.89, K48.90, K48.91, K48.92, K48.93, K48.94, K48.95, K48.96, K48.97, K48.98, K48.99, K48.100, K48.101, K48.102, K48.103,

K49.1, K49.2, K49.3, K49.4, K49.5, K49.6, K49.7, K49.8, K49.9, K49.10, K49.11, K49.12, K49.13, K49.14, K49.15, K49.16, K49.17, K49.18, K49.19, K49.20, K49.21, K49.22, K49.23, K49.24, K49.25, K49.26, K49.27, K49.28, K49.29, K49.30, K49.31, K49.32, K49.33, K49.34, K49.35, K49.36, K49.37, K49.38, K49.39, K49.40, K49.41, K49.42, K49.43, K49.44, K49.45, K49.46, K49.47, K49.48, K49.49, K49.50, K49.51, K49.52, K49.53, K49.54, K49.55, K49.56, K49.57, K49.58, K49.59, K49.60, K49.61, K49.62, K49.63, K49.64, K49.65, K49.66, K49.67, K49.68, K49.69, K49.70, K49.71, K49.72, K49.73, K49.74, K49.75, K49.76, K49.77, K49.78, K49.79, K49.80, K49.81, K49.82, K49.83, K49.84, K49.85, K49.86, K49.87, K49.88, K49.89, K49.90, K49.91, K49.92, K49.93, K49.94, K49.95, K49.96, K49.97, K49.98, K49.99, K49.100, K49.101, K49.102, K49.103,

K50.1, K50.2, K50.3, K50.4, K50.5, K50.6, K50.7, K50.8, K50.9, K50.10, K50.11, K50.12, K50.13, K50.14, K50.15, K50.16, K50.17, K50.18, K50.19, K50.20, K50.21, K50.22, K50.23, K50.24, K50.25, K50.26, K50.27, K50.28, K50.29, K50.30, K50.31, K50.32, K50.33, K50.34, K50.35, K50.36, K50.37, K50.38, K50.39, K50.40, K50.41, K50.42, K50.43, K50.44, K50.45, K50.46, K50.47, K50.48, K50.49, K50.50, K50.51, K50.52, K50.53, K50.54, K50.55, K50.56, K50.57, K50.58, K50.59, K50.60, K50.61, K50.62, K50.63, K50.64, K50.65, K50.66, K50.67, K50.68, K50.69, K50.70, K50.71, K50.72, K50.73, K50.74, K50.75, K50.76, K50.77, K50.78, K50.79, K50.80, K50.81, K50.82, K50.83, K50.84, K50.85, K50.86, K50.87, K50.88, K50.89, K50.90, K50.91, K50.92, K50.93, K50.94, K50.95, K50.96, K50.97, K50.98, K50.99, K50.100, K50.101, K50.102, K50.103,

K51.1, K51.2, K51.3, K51.4, K51.5, K51.6, K51.7, K51.8, K51.9, K51.10, K51.11, K51.12, K51.13, K51.14, K51.15, K51.16, K51.17, K51.18, K51.19, K51.20, K51.21, K51.22, K51.23, K51.24, K51.25, K51.26, K51.27, K51.28, K51.29, K51.30, K51.31, K51.32, K51.33, K51.34, K51.35, K51.36, K51.37, K51.38, K51.39, K51.40, K51.41, K51.42, K51.43, K51.44, K51.45, K51.46, K51.47, K51.48, K51.49, K51.50, K51.51, K51.52, K51.53, K51.54, K51.55, K51.56, K51.57, K51.58, K51.59, K51.60, K51.61, K51.62, K51.63, K51.64, K51.65, K51.66, K51.67, K51.68, K51.69, K51.70, K51.71, K51.72, K51.73, K51.74, K51.75, K51.76, K51.77, K51.78, K51.79, K51.80, K51.81, K51.82, K51.83, K51.84, K51.85, K51.86, K51.87, K51.88, K51.89, K51.90, K51.91, K51.92, K51.93, K51.94, K51.95, K51.96, K51.97, K51.98, K51.99, K51.100, K51.101, K51.102, K51.103, K52.1, K52.2, K52.3, K52.4, K52.5, K52.6, K52.7, K52.8, K52.9, K52.10, K52.11, K52.12, K52.13, K52.14, K52.15, K52.16, K52.17, K52.18, K52.19, K52.20, K52.21, K52.22, K52.23, K52.24, K52.25, K52.26, K52.27, K52.28, K52.29, K52.30, K52.31, K52.32, K52.33, K52.34, K52.35, K52.36, K52.37, K52.38, K52.39, K52.40, K52.41, K52.42, K52.43, K52.44, K52.45, K52.46, K52.47, K52.48, K52.49, K52.50, K52.51, K52.52, K52.53, K52.54, K52.55, K52.56, K52.57, K52.58, K52.59, K52.60, K52.61, K52.62, K52.63, K52.64, K52.65, K52.66, K52.67, K52.68, K52.69, K52.70, K52.71, K52.72, K52.73, K52.74, K52.75, K52.76, K52.77, K52.78, K52.79, K52.80, K52.81, K52.82, K52.83, K52.84, K52.85, K52.86, K52.87, K52.88, K52.89, K52.90, K52.91, K52.92, K52.93, K52.94, K52.95, K52.96, K52.97, K52.98, K52.99, K52.100, K52.101, K52.102, K52.103,

K53.1, K53.2, K53.3, K53.4, K53.5, K53.6, K53.7, K53.8, K53.9, K53.10, K53.11, K53.12, K53.13, K53.14, K53.15, K53.16, K53.17, K53.18, K53.19, K53.20, K53.21, K53.22, K53.23, K53.24, K53.25, K53.26, K53.27, K53.28, K53.29, K53.30, K53.31, K53.32, K53.33, K53.34, K53.35, K53.36, K53.37, K53.38, K53.39, K53.40, K53.41, K53.42, K53.43, K53.44, K53.45, K53.46, K53.47, K53.48, K53.49, K53.50, K53.51, K53.52, K53.53, K53.54, K53.55, K53.56, K53.57, K53.58, K53.59, K53.60, K53.61, K53.62, K53.63, K53.64, K53.65, K53.66, K53.67, K53.68, K53.69, K53.70, K53.71, K53.72, K53.73, K53.74, K53.75, K53.76, K53.77, K53.78, K53.79, K53.80, K53.81, K53.82, K53.83, K53.84, K53.85, K53.86, K53.87, K53.88, K53.89, K53.90, K53.91, K53.92, K53.93, K53.94, K53.95, K53.96, K53.97, K53.98, K53.99, K53.100, K53.101, K53.102, K53.103,

K54.1, K54.2, K54.3, K54.4, K54.5, K54.6, K54.7, K54.8, K54.9, K54.10, K54.11, K54.12, K54.13, K54.14, K54.15, K54.16, K54.17, K54.18, K54.19, K54.20, K54.21, K54.22, K54.23, K54.24, K54.25, K54.26, K54.27, K54.28, K54.29, K54.30, K54.31, K54.32, K54.33, K54.34, K54.35, K54.36, K54.37, K54.38, K54.39, K54.40, K54.41, K54.42, K54.43, K54.44, K54.45, K54.46, K54.47, K54.48, K54.49, K54.50, K54.51, K54.52, K54.53, K54.54, K54.55, K54.56, K54.57, K54.58, K54.59, K54.60, K54.61, K54.62, K54.63, K54.64, K54.65, K54.66, K54.67, K54.68, K54.69, K54.70, K54.71, K54.72, K54.73, K54.74, K54.75, K54.76, K54.77, K54.78, K54.79, K54.80, K54.81, K54.82, K54.83, K54.84, K54.85, K54.86, K54.87, K54.88, K54.89, K54.90, K54.91,

K54.92, K54.93, K54.94, K54.95, K54.96, K54.97, K54.98, K54.99, K54.100, K54.101, K54.102, K54.103,

K55.1, K55.2, K55.3, K55.4, K55.5, K55.6, K55.7, K55.8, K55.9, K55.10, K55.11, K55.12, K55.13, K55.14, K55.15, K55.16, K55.17, K55.18, K55.19, K55.20, K55.21, K55.22, K55.23, K55.24, K55.25, K55.26, K55.27, K55.28, K55.29, K55.30, K55.31, K55.32, K55.33, K55.34, K55.35, K55.36, K55.37, K55.38, K55.39, K55.40, K55.41, K55.42, K55.43, K55.44, K55.45, K55.46, K55.47, K55.48, K55.49, K55.50, K55.51, K55.52, K55.53, K55.54, K55.55, K55.56, K55.57, K55.58, K55.59, K55.60, K55.61, K55.62, K55.63, K55.64, K55.65, K55.66, K55.67, K55.68, K55.69, K55.70, K55.71, K55.72, K55.73, K55.74, K55.75, K55.76, K55.77, K55.78, K55.79, K55.80, K55.81, K55.82, K55.83, K55.84, K55.85, K55.86, K55.87, K55.88, K55.89, K55.90, K55.91, K55.92, K55.93, K55.94, K55.95, K55.96, K55.97, K55.98, K55.99, K55.1 00, K55.101, K55.102, K55.103,

K56.1, K56.2, K56.3, K56.4, K56.5, K56.6, K56.7, K56.8, K56.9, K56.10, K56.11, K56.12, K56.13, K56.14, K56.15, K56.16, K56.17, K56.18, K56.19, K56.20, K56.21, K56.22, K56.23, K56.24, K56.25, K56.26, K56.27, K56.28, K56.29, K56.30, K56.31, K56.32, K56.33, K56.34, K56.35, K56.36, K56.37, K56.38, K56.39, K56.40, K56.41, K56.42, K56.43, K56.44, K56.45, K56.46, K56.47, K56.48, K56.49, K56.50, K56.51, K56.52, K56.53, K56.54, K56.55, K56.56, K56.57, K56.58, K56.59, K56.60, K56.61, K56.62, K56.63, K56.64, K56.65, K56.66, K56.67, K56.68, K56.69, K56.70, K56.71, K56.72, K56.73, K56.74, K56.75, K56.76, K56.77, K56.78, K56.79, K56.80, K56.81, K56.82, K56.83, K56.84, K56.85, K56.86, K56.87, K56.88, K56.89, K56.90, K56.91, K56.92, K56.93, K56.94, K56.95, K56.96, K56.97, K56.98, K56.99, K56.100, K56.101, K56.102, K56.103,

K57.1, K57.2, K57.3, K57.4, K57.5, K57.6, K57.7, K57.8, K57.9, K57.10, K57.11, K57.12, K57.13, K57.14, K57.15, K57.16, K57.17, K57.18, K57.19, K57.20, K57.21, K57.22, K57.23, K57.24, K57.25, K57.26, K57.27, K57.28, K57.29, K57.30, K57.31, K57.32, K57.33, K57.34, K57.35, K57.36, K57.37, K57.38, K57.39, K57.40, K57.41, K57.42, K57.43, K57.44, K57.45, K57.46, K57.47, K57.48, K57.49, K57.50, K57.51, K57.52, K57.53, K57.54, K57.55, K57.56, K57.57, K57.58, K57.59, K57.60, K57.61, K57.62, K57.63, K57.64, K57.65, K57.66, K57.67, K57.68, K57.69, K57.70, K57.71, K57.72, K57.73, K57.74, K57.75, K57.76, K57.77, K57.78, K57.79, K57.80, K57.81, K57.82, K57.83, K57.84, K57.85, K57.86, K57.87, K57.88, K57.89, K57.90, K57.91, K57.92, K57.93, K57.94, K57.95, K57.96, K57.97, K57.98, K57.99, K57.100, K57.101, K57.102, K57.103,

K58.1, K58.2, K58.3, K58.4, K58.5, K58.6, K58.7, K58.8, K58.9, K58.10, K58.11, K58.12, K58.13, K58.14, K58.15, K58.16, K58.17, K58.18, K58.19, K58.20, K58.21, K58.22, K58.23, K58.24, K58.25, K58.26, K58.27, K58.28, K58.29, K58.30, K58.31, K58.32, K58.33, K58.34, K58.35, K58.36, K58.37, K58.38, K58.39, K58.40, K58.41, K58.42, K58.43, K58.44, K58.45, K58.46, K58.47, K58.48, K58.49, K58.50, K58.51, K58.52, K58.53, K58.54, K58.55, K58.56, K58.57, K58.58, K58.59, K58.60, K58.61, K58.62, K58.63, K58.64, K58.65, K58.66, K58.67, K58.68, K58.69, K58.70, K58.71, K58.72, K58.73, K58.74, K58.75, K58.76, K58.77, K58.78, K58.79, K58.80, K58.81, K58.82, K58.83, K58.84, K58.85, K58.86, K58.87, K58.88, K58.89, K58.90, K58.91, K58.92, K58.93, K58.94, K58.95, K58.96, K58.97, K58.98, K58.99, K58.100, K58.101, K58.102, K58.103,

K59.1, K59.2, K59.3, K59.4, K59.5, K59.6, K59.7, K59.8, K59.9, K59.10, K59.11, K59.12, K59.13, K59.14, K59.15, K59.16; K59.17, K59.18, K59.19, K59.20, K59.21, K59.22, K59.23, K59.24, K59.25, K59.26, K59.27, K59.28, K59.29, K59.30, K59.31, K59.32, K59.33, K59.34, K59.35, K59.36, K59.37, K59.38, K59.39, K59.40, K59.41, K59.42, K59.43, K59.44, K59.45, K59.46, K59.47, K59.48, K59.49, K59.50, K59.51, K59.52, K59.53, K59.54, K59.55, K59.56, K59.57, K59.58, K59.59, K59.60, K59.61, K59.62, K59.63, K59.64, K59.65, K59.66, K59.67, K59.68, K59.69, K59.70, K59.71, K59.72, K59.73, K59.74, K59.75, K59.76, K59.77, K59.78, K59.79, K59.80, K59.81, K59.82, K59.83, K59.84, K59.85, K59.86, K59.87, K59.88, K59.89, K59.90, K59.91, K59.92, K59.93, K59.94, K59.95, K59.96, K59.97, K59.98, K59.99, K59.100, K59.101, K59.102, K59.103,

K60.1, K60.2, K60.3, K60.4, K60.5, K60.6, K60.7, K60.8, K60.9, K60.10, K60.11, K60.12, K60.13, K60.14, K60.15, K60.16, K60.17, K60.18, K60.19, K60.20, K60.21, K60.22, K60.23, K60.24, K60.25, K60.26, K60.27, K60.28, K60.29,

K60.30, K60.31, K60.32, K60.33, K60.34, K60.35, K60.36, K60.37, K60.38, K60.39, K60.40, K60.41, K60.42, K60.43, K60.44, K60.45, K60.46, K60.47, K60.48, K60.49, K60.50, K60.51, K60.52, K60.53, K60.54, K60.55, K60.56, K60.57, K60.58, K60.59, K60.60, K60.61, K60.62, K60.63, K60.64, K60.65, K60.66, K60.67, K60.68, K60.69, K60.70, K60.71, K60.72, K60.73, K60.74, K60.75, K60.76, K60.77, K60.78, K60.79, K60.80, K60.81, K60.82, K60.83, K60.84, K60.85, K60.86, K60.87, K60.88, K60.89, K60.90, K60.91, K60.92, K60.93, K60.94, K60.95, K60.96, K60.97, K60.98, K60.99, K60.100, K60.101, K60.102, K60.103,

K61.1, K61.2, K61.3, K61.4, K61.5, K61.6, K61.7, K61.8, K61.9, K61.10, K61.11, K61.12, K61.13, K61.14, K61.15, K61.16, K61.17, K61.18, K61.19, K61.20, K61.21, K61.22, K61.23, K61.24, K61.25, K61.26, K61.27, K61.28, K61.29, K61.30, K61.31, K61.32, K61.33, K61.34, K61.35, K61.36, K61.37, K61.38, K61.39, K61.40, K61.41, K61.42, K61.43, K61.44, K61.45, K61.46, K61.47, K61.48, K61.49, K61.50, K61.51, K61.52, K61.53, K61.54, K61.55, K61.56, K61.57, K61.58, K61.59, K61.60, K61.61, K61.62, K61.63, K61.64, K61.65, K61.66, K61.67, K61.68, K61.69, K61.70, K61.71, K61.72, K61.73, K61.74, K61.75, K61.76, K61.77, K61.78, K61.79, K61.80, K61.81, K61.82, K61.83, K61.84, K61.85, K61.86, K61.87, K61.88, K61.89, K61.90, K61.91, K61.92, K61.93, K61.94, K61.95, K61.96, K61.97, K61.98, K61.99, K61.100, K61.101, K61.102, K61.103,

K62.1, K62.2, K62.3, K62.4, K62.5, K62.6, K62.7, K62.8, K62.9, K62.10, K62.11, K62.12, K62.13, K62.14, K62.15, K62.16, K62.17, K62.18, K62.19, K62.20, K62.21, K62.22, K62.23, K62.24, K62.25, K62.26, K62.27, K62.28, K62.29, K62.30, K62.31, K62.32, K62.33, K62.34, K62.35, K62.36, K62.37, K62.38, K62.39, K62.40, K62.41, K62.42, K62.43, K62.44, K62.45, K62.46, K62.47, K62.48, K62.49, K62.50, K62.51, K62.52, K62.53, K62.54, K62.55, K62.56, K62.57, K62.58, K62.59, K62.60, K62.61, K62.62, K62.63, K62.64, K62.65, K62.66, K62.67, K62.68, K62.69, K62.70, K62.71, K62.72, K62.73, K62.74, K62.75, K62.76, K62.77, K62.78, K62.79, K62.80, K62.81, K62.82, K62.83, K62.84, K62.85, K62.86, K62.87, K62.88, K62.89, K62.90, K62.91, K62.92, K62.93, K62.94, K62.95, K62.96, K62.97, K62.98, K62.99, K62.100, K62.101, K62.102, K62.103,

K63.1, K63.2, K63.3, K63.4, K63.5, K63.6, K63.7, K63.8, K63.9, K63.10, K63.11, K63.12, K63.13, K63.14, K63.15, K63.16, K63.17, K63.18, K63.19, K63.20, K63.21, K63.22, K63.23, K63.24, K63.25, K63.26, K63.27, K63.28, K63.29, K63.30, K63.31, K63.32, K63.33, K63.34, K63.35, K63.36, K63.37, K63.38, K63.39, K63.40, K63.41, K63.42, K63.43, K63.44, K63.45, K63.46, K63.47, K63.48, K63.49, K63.50, K63.51, K63.52, K63.53, K63.54, K63.55, K63.56, K63.57, K63.58, K63.59, K63.60, K63.61, K63.62, K63.63, K63.64, K63.65, K63.66, K63.67, K63.68, K63.69, K63.70, K63.71, K63.72, K63.73, K63.74, K63.75, K63.76, K63.77, K63.78, K63.79, K63.80, K63.81, K63.82, K63.83, K63.84, K63.85, K63.86, K63.87, K63.88, K63.89, K63.90, K63.91, K63.92, K63.93, K63.94, K63.95, K63.96, K63.97, K63.98, K63.99, K63.100, K63.101, K63.102, K63.103,

K64.1, K64.2, K64.3, K64.4, K64.5, K64.6, K64.7, K64.8, K64.9, K64.10, K64.11, K64.12, K64.13, K64.14, K64.15, K64.16, K64.17, K64.18, K64.19, K64.20, K64.21, K64.22, K64.23, K64.24, K64.25, K64.26, K64.27, K64.28, K64.29, K64.30, K64.31, K64.32, K64.33, K64.34, K64.35, K64.36, K64.37, K64.38, K64.39, K64.40, K64.41, K64.42, K64.43, K64.44, K64.45, K64.46, K64.47, K64.48, K64.49, K64.50, K64.51, K64.52, K64.53, K64.54, K64.55, K64.56, K64.57, K64.58, K64.59, K64.60, K64.61, K64.62, K64.63, K64.64, K64.65, K64.66, K64.67, K64.68, K64.69, K64.70, K64.71, K64.72, K64.73, K64.74, K64.75, K64.76, K64.77, K64.78, K64.79, K64.80, K64.81, K64.82, K64.83, K64.84, K64.85, K64.86, K64.87, K64.88, K64.89, K64.90, K64.91, K64.92, K64.93, K64.94, K64.95, K64.96, K64.97, K64.98, K64.99, K64.100, K64.101, K64.102, K64.103,

K65.1, K65.2, K65.3, K65.4, K65.5, K65.6, K65.7, K65.8, K65.9, K65.10, K65.11, K65.12, K65.13, K65.14, K65.15, K65.16, K65.17, K65.18, K65.19, K65.20, K65.21, K65.22, K65.23, K65.24, K65.25, K65.26, K65.27, K65.28, K65.29, K65.30, K65.31, K65.32, K65.33, K65.34, K65.35, K65.36, K65.37, K65.38, K65.39, K65.40, K65.41, K65.42, K65.43, K65.44, K65.45, K65.46, K65.47, K65.48, K65.49, K65.50, K65.51, K65.52, K65.53, K65.54, K65.55, K65.56, K65.57, K65.58, K65.59, K65.60, K65.61, K65.62, K65.63, K65.64, K65.65, K65.66, K65.67, K65.68, K65.69, K65.70, K65.71, K65.7.2, K65.73, K65.74, K65.75, K65.76, K65.77, K65.78, K65.79, K65.80, K65.81, K65.82, K65.83, K65.84, K65.85, K65.86, K65.87, K65.88, K65.89, K65.90, K65.91, K65.92, K65.93, K65.94, K65.95, K65.96, K65.97, K65.98, K65.99, K65.100, K65.101, K65.102, K65.103,

K66.1, K66.2, K66.3, K66.4, K66.5, K66.6, K66.7, K66.8, K66.9, K66.10, K66.11, K66.12, K66.13, K66.14, K66.15, K66.16, K66.17, K66.18, K66.19, K66.20, K66.21, K66.22, K66.23, K66.24, K66.25, K66.26, K66.27, K66.28, K66.29, K66.30, K66.31, K66.32, K66.33, K66.34, K66.35, K66.36, K66.37, K66.38, K66.39, K66.40, K66.41, K66.42, K66.43, K66.44, K66.45, K66.46, K66.47, K66.48, K66.49, K66.50, K66.51, K66.52, K66.53, K66.54, K66.55, K66.56, K66.57, K66.58, K66.59, K66.60, K66.61, K66.62, K66.63, K66.64, K66.65, K66.66, K66.67, K66.68, K66.69, K66.70, K66.71, K66.72, K66.73, K66.74, K66.75, K66.76, K66.77, K66.78, K66.79, K66.80, K66.81, K66.82, K66.83, K66.84, K66.85, K66.86, K66.87, K66.88, K66.89, K66.90, K66.91, K66.92, K66.93, K66.94, K66.95, K66.96, K66.97, K66.98, K66.99, K66.100, K66.101, K66.102, K66.103,

K67.1, K67.2, K67.3, K67.4, K67.5, K67.6, K67.7, K67.8, K67.9, K67.10, K67.11, K67.12, K67.13, K67.14, K67.15, K67.16, K67.17, K67.18, K67.19, K67.20, K67.21, K67.22, K67.23, K67.24, K67.25, K67.26, K67.27, K67.28, K67.29, K67.30, K67.31, K67.32, K67.33, K67.34, K67.35, K67.36, K67.37, K67.38, K67.39, K67.40, K67.41, K67.42, K67.43, K67.44, K67.45, K67.46, K67.47, K67.48, K67.49, K67.50, K67.51, K67.52, K67.53, K67.54, K67.55, K67.56, K67.57,

K67.58, K67.59, K67.60, K67.61, K67.62, K67.63, K67.64, K67.65, K67.66, K67.67, K67.68, K67.69, K67.70, K67.71, K67.72, K67.73, K67.74, K67.75, K67.76, K67.77, K67.78, K67.79, K67.80, K67.81, K67.82, K67.83, K67.84, K67.85, K67.86, K67.87, K67.88, K67.89, K67.90, K67.91, K67.92, K67.93, K67.94, K67.95, K67.96, K67.97, K67.98, K67.99, K67.100, K67.101, K67.102, K67.103,

K68.1, K68.2, K68.3, K68.4, K68.5, K68.6, K68.7, K68.8, K68.9, K68.10, K68.11, K68.12, K68.13, K68.14, K68.15, K68.16, K68.17, K68.18, K68.19, K68.20, K68.21, K68.22, K68.23, K68.24, K68.25, K68.26, K68.27, K68.28, K68.29, K68.30, K68.31, K68.32, K68.33, K68.34, K68.35, K68.36, K68.37, K68.38, K68.39, K68.40, K68.41, K68.42, K68.43, K68.44, K68.45, K68.46, K68.47, K68.48, K68.49, K68.50, K68.51, K68.52, K68.53, K68.54, K68.55, K68.56, K68.57, K68.58, K68.59, K68.60, K68.61, K68.62, K68.63, K68.64, K68.65, K68.66, K68.67, K68.68, K68.69, K68.70, K68.71, K68.72, K68.73, K68.74, K68.75, K68.76, K68.77, K68.78, K68.79, K68.80, K68.81, K68.82, K68.83, K68.84, K68.85, K68.86, K68.87, K68.88, K68.89, K68.90, K68.91, K68.92, K68.93, K68.94, K68.95, K68.96, K68.97, K68.98, K68.99, K68.100, K68.101, K68.102, K68.103,

K69.1, K69.2, K69.3, K69.4, K69.5, K69.6, K69.7, K69.8, K69.9, K69.10, K69.11, K69.12, K69.13, K69.14, K69.15, K69.16, K69.17, K69.18, K69.19, K69.20, K69.21, K69.22, K69.23, K69.24, K69.25, K69.26, K69.27, K69.28, K69.29, K69.30, K69.31, K69.32, K69.33, K69.34, K69.35, K69.36, K69.37, K69.38, K69.39, K69.40, K69.41, K69.42, K69.43, K69.44, K69.45, K69.46, K69.47, K69.48, K69.49, K69.50, K69.51, K69.52, K69.53, K69.54, K69.55, K69.56, K69.57, K69.58, K69.59, K69.60, K69.61, K69.62, K69.63, K69.64, K69.65, K69.66, K69.67, K69.68, K69.69, K69.70, K69.71, K69.72, K69.73, K69.74, K69.75, K69.76, K69.77, K69.78, K69.79, K69.80, K69.81, K69.82, K69.83, K69.84, K69.85, K69.86, K69.87, K69.88, K69.89, K69.90, K69.91, K69.92, K69.93, K69.94, K69.95, K69.96, K69.97, K69.98, K69.99, K69.100, K69.101, K69.102, K69.103,

K70.1, K70.2, K70.3, K70.4, K70.5, K70.6, K70.7, K70.8, K70.9, K70.10, K70.11, K70.12, K70.13, K70.14, K70.15, K70.16, K70.17, K70.18, K70.19, K70.20, K70.21, K70.22, K70.23, K70.24, K70.25, K70.26, K70.27, K70.28, K70.29, K70.30, K70.31, K70.32, K70.33, K70.34, K70.35, K70.36, K70.37, K70.38, K70.39, K70.40, K70.41, K70.42, K70.43, K70.44, K70.45, K70.46, K70.47, K70.48, K70.49, K70.50, K70.51, K70.52, K70.53, K70.54, K70.55, K70.56, K70.57, K70.58, K70.59, K70.60, K70.61, K70.62, K70.63, K70.64, K70.65, K70.66, K70.67, K70.68, K70.69, K70.70, K70.71, K70.72, K70.73, K70.74, K70.75, K70.76, K70.77, K70.78, K70.79, K70.80, K70.81, K70.82, K70.83, K70..84, K70.85, K70.86, K70.87, K70.88, K70:89, K70.90, K70.91, K70.92, K70.93, K70.94, K70.95, K70.96, K70.97, K70.98, K70.99, K70.100, K70.101, K70.102, K70.103,

K71.1, K71.2, K71.3, K71.4, K71.5, K71.6, K71.7, K71.8, K71.9, K71.10, K71.11, K71.12, K71.13, K71.14, K71.15, K71.16, K71.17, K71.18, K71.19, K71.20, K71.21, K71.22, K71.23, K71.24, K71.25, K71.26, K71.27, K71.28, K71.29, K71.30, K71.31, K71.32, K71.33, K71.34, K71.35, K71.36, K71.37, K71.38, K71.39, K71.40, K71.41, K71.42, K71.43, K71.44, K71.45, K71.46, K71.47, K71.48, K71.49, K71.50, K71.51, K71.52, K71.53, K71.54, K71.55, K71.56, K71.57, K71.58, K71.59, K71.60, K71.61, K71.62, K71.63, K71.64, K71.65, K71.66, K71.67, K71.68, K71.69, K71.70, K71.71, K71.72, K71.73, K71.74, K71.75, K71.76, K71.77, K71.78, K71.79, K71.80, K71.81, K71.82, K71.83, K71.84, K71.85, K71.86, K71.87, K71.88, K71.89, K71.90, K71.91, K71.92, K71.93, K71.94, K71.95, K71.96, K71.97, K71.98, K71.99, K71.100, K71.101, K71.102, K71.103,

K72.1, K72.2, K72.3, K72.4, K72.5, K72.6, K72.7, K72.8, K72.9, K72.10, K72.11, K72.12, K72.13, K72.14, K72.15, K72.16, K72.17, K72.18, K72.19, K72.20, K72.21, K72.22, K72.23, K72.24, K72.25, K72.26, K72.27, K72.28, K72.29, K72.30, K72.31, K72.32, K72.33, K72.34, K72.35, K72.36, K72.37, K72.38, K72.39, K72.40, K72.41, K72.42, K72.43, K72.44, K72.45, K72.46, K72.47, K72.48, K72.49, K72.50, K72.51, K72.52, K72.53, K72.54, K72.55, K72.56, K72.57, K72.58, K72.59, K72.60, K72.61, K72.62, K72.63, K72.64, K72.65, K72.66, K72.67, K72.68, K72.69, K72.70, K72.71, K72.72, K72.73, K72.74, K72.75, K72.76, K72.77, K72.78, K72.79, K72.80, K72.81, K72.82, K72.83, K72.84, K72.85, K72.86, K72.87, K72.88, K72.89, K72.90, K72.91, K72.92, K72.93, K72.94, K72.95, K72.96, K72.97, K72.98, K72.99, K72.100, K72.101, K72.102, K72.103,

K73.1, K73.2, K73.3, K73.4, K73.5, K73.6, K73.7, K73.8, K73.9, K73.10, K73.11, K73.12, K73.13, K73.14, K73.15, K73.16, K73.17, K73.18, K73.19, K73.20, K73.21, K73.22, K73.23, K73.24, K73.25, K73.26, K73.27, K73.28, K73.29, K73.30, K73.31, K73.32, K73.33, K73.34, K73.35, K73.36, K73.37, K73.38, K73.39, K73.40, K73.41, K73.42, K73.43, K73.44, K73.45, K73.46, K73.47, K73.48, K73.49, K73.50, K73.51, K73.52, K73.53, K73.54, K73.55, K73.56, K73.57, K73.58, K73.59, K73.60, K73.61, K73.62, K73.63, K73.64, K73.65, K73.66, K73.67, K73.68, K73.69, K73.70, K73.71, K73.72, K73.73, K73.74, K73.75, K73.76, K73.77, K73.78, K73.79, K73.80, K73.81, K73.82, K73.83, K73.84, K73.85, K73.86, K73.87, K73.88, K73.89, K73.90, K73.91, K73.92, K73.93, K73.94, K73.95, K73.96, K73.97, K73.98, K73.99, K73.100, K73.101, K73.102, K73.103,

K74.1, K74.2, K74.3, K74.4, K74.5, K74.6, K74.7, K74.8, K74.9, K74.10, K74.11, K74.12, K74.13, K74.14, K74.15, K74.16, K74.17, K74.18, K74.19, K74.20, K74.21, K74.22, K74.23, K74.24, K74.25, K74.26, K74.27, K74.28, K74.29, K74.30, K74.31, K74.32, K74.33, K74.34, K74.35, K74.36, K74.37, K74.38, K74.39, K74.40, K74.41, K74.42, K74.43, K74.44, K74.45, K74.46, K74.47, K74.48, K74.49, K74.50, K74.51, K74.52, K74.53, K74.54, K74.55, K74.56, K74.57, K74.58, K74.59, K74.60, K74.61, K74.62, K74.63, K74.64, K74.65, K74.66, K74.67, K74.68, K74.69, K74.70, K74.71, K74.72, K74.73, K74.74, K74.75, K74.76, K74.77, K74.78, K74.79, K74.80, K74.81, K74.82, K74.83, K74.84, K74.85,

K74.86, K74.87, K74.88, K74.89, K74.90, K74.91, K74.92, K74.93, K74.94, K74.95, K74.96, K74.97, K74.98, K74.99, K74.100, K74.101, K74.102, K74.103,
K75.1, K75.2, K75.3, K75.4, K75.5, K75.6, K75.7, K75.8, K75.9, K75.10, K75.11, K75.12, K75.13, K75.14, K75.15, K75.16, K75.17, K75.18, K75.19, K75.20, K75.21, K75.22, K75.23, K75.24, K75.25, K75.26, K75.27, K75.28, K75.29, K75.30, K75.31, K75.32, K75.33, K75.34, K75.35, K75.36, K75.37, K75.38, K75.39, K75.40, K75.41, K75.42, K75.43, K75.44, K75.45, K75.46, K75.47, K75.48, K75.49, K75.50, K75.51, K75.52, K75.53, K75.54, K75.55, K75.56, K75.57, K75.58, K75.59, K75.60, K75.61, K75.62, K75.63, K75.64, K75.65, K75.66, K75.67, K75.68, K75.69, K75.70, K75.71, K75.72, K75.73, K75.74, K75.75, K75.76, K75.77, K75.78, K75.79, K75.80, K75.81, K75.82, K75.83, K75.84, K75.85, K75.86, K75.87, K75.88, K75.89, K75.90, K75.91, K75.92, K75.93, K75.94, K75.95, K75.96, K75.97, K75.98, K75.99, K75.1 00, K75.101, K75.102, K75.103,
K76.1, K76.2, K76.3, K76.4, K76.5, K76.6, K76.7, K76.8, K76.9, K76.1 0, K76.11, K76.12, K76.13, K76.14, K76.15, K76.16, K76.17, K76.18, K76.19, K76.20, K76.21, K76.22, K76.23, K76.24, K76.25, K76.26, K76.27, K76.28, K76.29, K76.30, K76.31, K76.32, K76.33, K76.34, K76.35, K76.36; K76.37, K76.38, K76.39, K76.40, K76.41, K76.42, K76.43, K76.44, K76.45, K76.46, K76.47, K76.48, K76.49, K76.50, K76.51, K76.52, K76.53, K76.54, K76.55, K76.56, K76.57, K76.58, K76.59, K76.60, K76.61, K76.62, K76.63, K76.64, K76.65, K76.66, K76.67, K76.68, K76.69, K76.70, K76.71, K76.72, K76.73, K76.74, K76.75, K76.76, K76.77, K76.78, K76.79, K76.80, K76.81, K76.82, K76.83, K76.84, K76.85, K76.86, K76.87, K76.88, K76.89, K76.90, K76.91, K76.92, K76.93, K76.94, K76.95, K76.96, K76.97, K76.98, K76.99, K76.100, K76.101, K76.102, K76.103,
K77.1, K77.2, K77.3, K77.4, K77.5, K77.6, K77.7, K77.8, K77.9, K77.10, K77.11, K77.12, K77.13, K77.14, K77.15, K77.16, K77.17, K77.18, K77.19, K77.20, K77.21, K77.22, K77.23, K77.24, K77.25, K77.26, K77.27, K77.28, K77.29, K77.30, K77.31, K77.32, K77.33, K77.34, K77.35, K77.36, K77.37, K77.38, K77.39, K77.40, K77.41, K77.42, K77.43, K77.44, K77.45, K77.46, K77.47, K77.48, K77.49, K77.50, K77.51, K77.52, K77.53, K77.54, K77.55, K77.56, K77.57, K77.58, K77.59, K77.60, K77.61, K77.62, K77.63, K77.64, K77.65, K77.66, K77.67, K77.68, K77.69, K77.70, K77.71, K77.72, K77.73, K77.74, K77.75, K77.76, K77.77, K77.78, K77.79, K77.80, K77.81, K77.82, K77.83, K77.84, K77.85, K77.86, K77.87, K77.88, K77.89, K77.90, K77.91, K77.92, K77.93, K77.94, K77.95, K77.96, K77.97, K77.98, K77.99, K77.100, K77.101, K77.102, K77.103, K78.1, K78.2, K78.3, K78.4, K78.5, K78.6, K78.7, K78.8, K78.9, K78.10, K78.11, K78.12, K78.13, K78.14, K78.15, K78.16, K78.17, K78.18, K78.19, K78.20, K78.21, K78.22, K78.23, K78.24, K78.25, K78.26, K78.27, K78.28, K78.29, K78.30, K78.31, K78.32, K78.33, K78.34, K78.35, K78.36, K78.37, K78.38, K78.39, K78.40, K78.41, K78.42, K78.43, K78.44, K78.45, K78.46, K78.47, K78.48, K78.49, K78.50, K78.51, K78.52, K78.53, K78.54, K78.55, K78.56, K78.57, K78.58, K78.59, K78.60, K78.61, K78.62, K78.63, K78.64, K78.65, K78.66, K78.67, K78.68, K78.69, K78.70, K78.71, K78.72, K78.73, K78.74, K78.75, K78.76, K78.77, K78.78, K78.79, K78.80, K78.81, K78.82, K78.83, K78.84, K78.85, K78.86, K78.87, K78.88, K78.89, K78.90, K78.91, K78.92, K78.93, K78.94, K78.95, K78.96, K78.97, K78.98, K78.99, K78.100, K78.101, K78.102, K78.103,
K79.1, K79.2, K79.3, K79.4, K79.5, K79.6, K79.7, K79.8, K79.9, K79.10, K79.11, K79.12, K79.13, K79.14, K79.15, K79.16, K79.17, K79.18, K79.19, K79.20, K79.21, K79.22, K79.23, K79.24, K79.25, K79.26, K79.27, K79.28, K79.29, K79.30, K79.31, K79.32, K79.33, K79.34, K79.35, K79.36, K79.37, K79.38, K79.39, K79.40, K79.41, K79.42, K79.43, K79.44, K79.45, K79.46, K79.47, K79.48, K79.49, K79.50, K79.51, K79.52, K79.53, K79.54, K79.55, K79.56, K79.57, K79.58, K79.59, K79.60, K79.61, K79.62, K79.63, K79.64, K79.65, K79.66, K79.67, K79.68, K79.69, K79.70, K79.71, K79.72, K79.73, K79.74, K79.75, K79.76, K79.77, K79.78, K79.79, K79.80, K79.81, K79.82, K79.83, K79.84, K79.85, K79.86, K79.87, K79.88, K79.89, K79.90, K79.91, K79.92, K79.93, K79.94, K79.95, K79.96, K79.97, K79.98, K79.99, K79.100, K79.101, K79.102, K79.103,
K80.1, K80.2, K80.3, K80.4, K80.5, K80.6, K80.7, K80.8, K80.9, K80.10, K80.11, K80.12, K80.13, K80.14, K80.15, K80.16, K80.17, K80.18, K80.19, K80.20, K80.21, K80.22, K80.23, K80.24, K80.25, K80.26, K80.27, K80.28, K80.29, K80.30, K80.31, K80.32, K80.33, K80.34, K80.35, K80.36, K80.37, K80.38, K80.39, K80.40, K80.41, K80.42, K80.43, K80.44, K80.45, K80.46, K80.47, K80.48, K80.49, K80.50, K80.51, K80.52, K80.53, K80.54, K80.55, K80.56, K80.57, K80.58, K80.59, K80.60, K80.61, K80.62, K80.63, K80.64, K80.65, K80.66, K80.67, K80.68, K80.69, K80.70, K80.71, K80.72, K80.73, K80.74, K80.75, K80.76, K80.77, K80.78, K80.79, K80.80, K80.81, K80.82, K80.83, K80.84, K80.85, K80.86, K80.87, K80.88, K80.89, K80.90, K80.91,
K80.92, K80.93, K80.94, K80.95, K80.96, K80.97, K80.98, K80.99, K80.100, K80.101, K80.102, K80.103,
K81.1, K81.2, K81.3, K81.4, K81.5, K81.6, K81.7, K81.8, K81.9, K81.10, K81.11, K81.12, K81.13, K81.14, K81.15, K81.16, K81.17, K81.18, K81.19, K81.20, K81.21, K81.22, K81.23, K81.24, K81.25, K81.26, K81.27, K81.28, K81.29, K81.30, K81.31, K81.32, K81.33, K81.34, K81.35, K81.36, K81.37, K81.38, K81.39, K81.40, K81.41, K81.42, K81.43, K81.44, K81.45, K81.46, K81.47, K81.48, K81.49, K81.50, K81.51, K81.52, K81.53, K81.54, K81.55, K81.56, K81.57, K81.58, K81.59, K81.60, K81.61, K81.62, K81.63, K81.64, K81.65, K81.66, K81.67, K81.68, K81.69, K81.70, K81.71, K81.72, K81.73, K81.74, K81.75, K81.76, K81.77, K81.78, K81.79, K81.80, K81.81, K81.82, K81.83, K81.84, K81.85, K81.86, K81.87, K81.88, K81.89, K81.90, K81.91, K81.92, K81.93, K81.94, K81.95, K81.96, K81.97, K81.98, K81.99, K81.100, K81.101, K81.102, K81.103,
K82.1, K82.2, K82.3, K82.4, K82.5, K82.6, K82.7, K82.8, K82.9, K82.10, K82.11, K82.12, K82.13, K82.14, K82.15,

K82.16, K82.17, K82.18, K82.19, K82.20, K82.21, K82.22, K82.23, K82.24, K82.25, K82.26, K82.27, K82.28, K82.29, K82.30, K82.31, K82.32, K82.33, K82.34, K82.35, K82.36, K82.37, K82.38, K82.39, K82.40, K82.41, K82.42, K82.43, K82.44, K82.45, K82.46, K82.47, K82.48, K82.49, K82.50, K82.51, K82.52, K82.53, K82.54, K82.55, K82.56, K82.57, K82.58, K82.59, K82.60, K82.61, K82.62, K82.63, K82.64, K82.65, K82.66, K82.67, K82.68, K82.69, K82.70, K82.71, K82.72, K82.73, K82.74, K82.75, K82.76, K82.77, K82.78, K82.79, K82.80, K82.81, K82.82, K82.83, K82.84, K82.85, K82.86, K82.87, K82.88, K82.89, K82.90, K82.91, K82.92, K82.93, K82.94, K82.95, K82.96, K82.97, K82.98, K82.99, K82.100, K82.101, K82.102, K82.103,

K83.1, K83.2, K83.3, K83.4, K83.5, K83.6, K83.7, K83.8, K83.9, K83.10, K83.11, K83.12, K83.13, K83.14, K83.15, K83.16, K83.17, K83.18, K83.19, K83.20, K83.21, K83.22, K83.23, K83.24, K83.25, K83.26, K83.27, K83.28, K83.29, K83.30, K83.31, K83.32, K83.33, K83.34, K83.35, K83.36, K83.37, K83.38, K83.39, K83.40, K83.41, K83.42, K83.43, K83.44, K83.45, K83.46, K83.47, K83.48, K83.49, K83.50, K83.51, K83.52, K83.53, K83.54, K83.55, K83.56, K83.57, K83.58, K83.59, K83.60, K83.61, K83.62, K83.63, K83.64, K83.65, K83.66, K83.67, K83.68, K83.69, K83.70, K83.71, K83.72, K83.73, K83.74, K83.75, K83.76, K83.77, K83.78, K83.79, K83.80, K83.81, K83.82, K83.83, K83.84, K83.85, K83.86, K83.87, K83.88, K83.89, K83.90, K83.91, K83.92, K83.93, K83.94, K83.95, K83.96, K83.97, K83.98, K83.99, K83.100, K83.101, K83.102, K83.103,

K84.1, K84.2, K84.3, K84.4, K84.5, K84.6, K84.7, K84.8, K84.9, K84.10, K84.11, K84.12, K84.13, K84.14, K84.15, K84.16, K84.17, K84.18, K84.19, K84.20, K84.21, K84.22, K84.23, K84.24, K84.25, K84.26, K84.27, K84.28, K84.29, K84.30, K84.31, K84.32, K84.33, K84.34, K84.35, K84.36, K84.37, K84.38, K84.39, K84.40, K84.41, K84.42, K84.43, K84.44, K84.45, K84.46, K84.47, K84.48, K84.49, K84.50, K84.51, K84.52, K84.53, K84.54, K84.55, K84.56, K84.57, K84.58, K84.59, K84.60, K84.61, K84.62, K84.63, K84.64, K84.65, K84.66, K84.67, K84.68, K84.69, K84.70, K84.71, K84.72, K84.73, K84.74, K84.75, K84.76, K84.77, K84.78, K84.79, K84.80, K84.81, K84.82, K84.83, K84.84, K84.85, K84.86, K84.87, K84.88, K84.89, K84.90, K84.91, K84.92, K84.93, K84.94, K84.95, K84.96, K84.97, K84.98, K84.99, K84.100, K84.101, K84.102, K84.103,

K85.1, K85.2, K85.3, K85.4, K85.5, K85.6, K85.7, K85.8, K85.9, K85.10, K85.11, K85.12, K85.13, K85.14, K85.15, K85.16, K85.17, K85.18, K85.19, K85.20, K85.21, K85.22, K85.23, K85.24, K85.25, K85.26, K85.27, K85.28, K85.29, K85.30, K85.31, K85.32, K85.33, K85.34, K85.35, K85.36, K85.37, K85.38, K85.39, K85.40, K85.41, K85.42, K85.43, K85.44, K85.45, K85.46, K85.47, K85.48, K85.49, K85.50, K85.51, K85.52, K85.53, K85.54, K85.55, K85.56, K85.57, K85.58, K85.59, K85.60, K85.61, K85.62, K85.63, K85.64, K85.65, K85.66, K85.67, K85.68, K85.69, K85.70, K85.71, K85.72, K85.73, K85.74, K85.75, K85.76, K85.77, K85.78, K85.79, K85.80, K85.81, K85.82, K85.83, K85.84, K85.85, K85.86, K85.87, K85.88, K85.89, K85.90, K85.91, K85.92, K85.93, K85.94, K85.95, K85.96, K85.97, K85.98, K85.99, K85.100, K85.101, K85.102, K85.103,

K86.1, K86.2, K86.3, K86.4, K86.5, K86.6, K86.7, K86.8, K86.9, K86.1 0, K86.11, K86.12, K86.13, K86.14, K86.15, K86.16, K86.17, K86.18, K86.19, K86.20, K86.21, K86.22, K86.23, K86.24, K86.25, K86.26, K86.27, K86.28, K86.29, K86.30, K86.31, K86.32, K86.33, K86.34, K86.35, K86.36, K86.37, K86.38, K86.39, K86.40, K86.41, K86.42, K86.43, K86.44, K86.45, K86.46, K86.47, K86.48, K86.49, K86.50, K86.51, K86.52, K86.53, K86.54, K86.55, K86.56, K86.57, K86.58, K86.59, K86.60, K86.61, K86.62, K86.63, K86.64, K86.65, K86.66, K86.67, K86.68, K86.69, K86.70, K86.71, K86.72, K86.73, K86.74, K86.75, K86.76, K86.77, K86.78, K86.79, K86.80, K86.81, K86.82, K86.83, K86.84, K86.85, K86.86, K86.87, K86.88, K86.89, K86.90, K86.91, K86.92, K86.93, K86.94, K86.95, K86.96, K86.97, K86.98, K86.99, K86.100, K86.101, K86.102, K86.103,

K87.1, K87.2, K87.3, K87.4, K87.5, K87.6, K87.7, K87.8, K87.9, K87.10, K87.11, K87.12, K87.13, K87.14, K87.15, K87.16, K87.17, K87.18, K87.19, K87.20, K87.21, K87.22, K87.23, K87.24, K87.25, K87.26, K87.27, K87.28, K87.29, K87.30, K87.31, K87.32, K87.33, K87.34, K87.35, K87.36, K87.37, K87.38, K87.39, K87.40, K87.41, K87.42, K87.43, K87.44, K87.45, K87.46, K87.47, K87.48, K87.49, K87.50, K87.51, K87.52, K87.53, K87.54, K87.55, K87.56, K87.57, K87.58, K87.59, K87.60, K87.61, K87.62, K87.63, K87.64, K87.65, K87.66, K87.67, K87.68, K87.69, K87.70, K87.71, K87.72, K87.73, K87.74, K87.75, K87.76, K87.77, K87.78, K87.79, K87.80, K87.81, K87.82, K87.83, K87.84, K87.85, K87.86, K87.87, K87.88, K87.89, K87.90, K87.91, K87.92, K87.93, K87.94, K87.95, K87.96, K87.97, K87.98, K87.99, K87.100, K87.101, K87.102, K87.103,

K88.1, K88.2, K88.3, K88.4, K88.5, K88.6, K88.7, K88.8, K88.9, K88.10, K88.11, K88.12, K88.13, K88.14, K88.15, K88.16, K88.17, K88.18, K88.19, K88.20, K88.21, K88.22, K88.23, K88.24, K88.25, K88.26, K88.27, K88.28, K88.29, K88.30, K88.31, K88.32, K88.33, K88.34, K88.35, K88.36, K88.37, K88.38, K88.39, K88.40, K88.41, K88.42, K88.43, K88.44, K88.45, K88.46, K88.47, K88.48, K88.49, K88.50, K88.51, K88.52, K88.53, K88.54, K88.55, K88.56, K88.57, K88.58, K88.59, K88.60, K88.61, K88.62, K88.63, K88.64, K88.65, K88.66, K88.67, K88.68, K88.69, K88.70, K88.71, K88.72, K88.73, K88.74, K88.75, K88.76, K88.77, K88.78, K88.79, K88.80, K88.81, K88.82, K88.83, K88.84, K88.85, K88.86, K88.87, K88.88, K88.89, K88.90, K88.91, K88.92, K88.93, K88.94, K88.95, K88.96, K88.97, K88.98, K88.99, K88.100, K88.101, K88.102, K88.103,

K89.1, K89.2, K89.3, K89.4, K89.5, K89.6, K89.7, K89.8, K89.9, K89.10, K89.11, K89.12, K89.13, K89.14, K89.15, K89.16, K89.17, K89.18, K89.19, K89.20, K89.21, K89.22, K89.23, K89.24, K89.25, K89.26, K89.27, K89.28, K89.29, K89.30, K89.31, K89.32, K89.33, K89.34, K89.35, K89.36, K89.37, K89.38, K89.39, K89.40, K89.41, K89.42, K89.43,

K89.44, K89.45, K89.46, K89.47, K89.48, K89.49, K89.50, K89.51, K89.52, K89.53, K89.54, K89.55, K89.56, K89.57, K89.58, K89.59, K89.60, K89.61, K89.62, K89.63, K89.64, K89.65, K89.66, K89.67, K89.68, K89.69, K89.70, K89.71, K89.72, K89.73, K89.74, K89.75, K89.76, K89.77, K89.78, K89.79, K89.80, K89.81, K89.82, K89.83, K89.84, K89.85, K89.86, K89.87, K89.88, K89.89, K89.90, K89.91, K89.92, K89.93, K89.94, K89.95, K89.96, K89.97, K89.98, K89.99, K89.100, K89.101, K89.102, K89.103,

K90.1, K90.2, K90.3, K90.4, K90.5, K90.6, K90.7, K90.8, K90.9, K90.10, K90.11, K90.12, K90.13, K90.14, K90.15, K90.16, K90.17, K90.18, K90.19, K90.20, K90.21, K90.22, K90.23, K90.24, K90.25, K90.26, K90.27, K90.28, K90.29, K90.30, K90.31, K90.32, K90.33, K90.34, K90.35, K90.36, K90.37, K90.38, K90.39, K90.40, K90.41, K90.42, K90.43, K90.44, K90.45, K90.46, K90.47, K90.48, K90.49, K90.50, K90.51, K90.52, K90.53, K90.54, K90.55, K90.56, K90.57, K90.58, K90.59, K90.60, K90.61, K90.62, K90.63, K90.64, K90.65, K90.66, K90.67, K90.68, K90.69, K90.70, K90.71, K90.72, K90.73, K90.74, K90.75, K90.76, K90.77, K90.78, K90.79, K90.80, K90.81, K90.82, K90.83, K90.84, K90.85, K90.86, K90.87, K90.88, K90.89, K90.90, K90.91, K90.92, K90.93, K90.94, K90.95, K90.96, K90.97, K90.98, K90.99, K90.1 00, K90.101, K90.102, K90.103,

K91.1, K91.2, K91.3, K91.4, K91.5, K91.6, K91.7, K91.8, K91.9, K91.10, K91.11, K91.12, K91.13, K91.14, K91.15, K91.16, K91.17, K91.18, K91.19, K91.20, K91.21, K91.22, K91.23, K91.24, K91.25, K91.26, K91.27, K91.28, K91.29, K91.30, K91.31, K91.32, K91.33, K91.34, K91.35, K91.36, K91.37, K91.38, K91.39, K91.40, K91.41, K91.42, K91.43, K91.44, K91.45, K91.46, K91.47, K91.48, K91.49, K91.50, K91.51, K91.52, K91.53, K91.54, K91.55, K91.56, K91.57, K91.58, K91.59, K91.60, K91.61, K91.62, K91.63, K91.64, K91.65, K91.66, K91.67, K91.68, K91.69, K91.70, K91.71, K91.72, K91.73, K91.74, K91.75, K91.76, K91.77, K91.78, K91.79, K91.80, K91.81, K91.82, K91.83, K91.84, K91.85, K91.86, K91.87, K91.88, K91.89, K91.90, K91.91, K91.92, K91.93, K91.94, K91.95, K91.96, K91.97, K91.98, K91.99, K91.100, K91.101, K91.102, K91.103,

K92.1, K92.2, K92.3, K92.4, K92.5, K92.6, K92.7, K92.8, K92.9, K92.10, K92.11, K92.12, K92.13, K92.14, K92.15, K92.16, K92.17, K92.18, K92.19, K92.20, K92.21, K92.22, K92.23, K92.24, K92.25, K92.26, K92.27, K92.28, K92.29, K92.30, K92.31, K92.32, K92.33, K92.34, K92.35, K92.36, K92.37, K92.38, K92.39, K92.40, K92.41, K92.42, K92.43, K92.44, K92.45, K92.46, K92.47, K92.48, K92.49, K92.50, K92.51, K92.52, K92.53, K92.54, K92.55, K92.56, K92.57, K92.58, K92.59, K92.60, K92.61, K92.62, K92.63, K92.64, K92.65, K92.66, K92.67, K92.68, K92.69, K92.70, K92.71, K92.72, K92.73, K92.74, K92.75, K92.76, K92.77, K92.78, K92.79, K92.80, K92.81, K92.82, K92.83, K92.84, K92.85, K92.86, K92.87, K92.88, K92.89, K92.90, K92.91, K92.92, K92.93, K92.94, K92.95, K92.96, K92.97, K92.98, K92.99, K92.100, K92.101, K92.102, K92.103,

K93.1, K93.2, K93.3, K93.4, K93.5, K93.6, K93.7, K93.8, K93.9, K93.10, K93.11, K93.12, K93.13, K93.14, K93.15, K93.16, K93.17, K93.18, K93.19, K93.20, K93.21, K93.22, K93.23, K93.24, K93.25, K93.26, K93.27, K93.28, K93.29, K93.30, K93.31, K93.32, K93.33, K93.34, K93.35, K93.36, K93.37, K93.38, K93.39, K93.40, K93.41, K93.42, K93.43, K93.44, K93.45, K93.46, K93.47, K93.48, K93.49, K93.50, K93.51, K93.52, K93.53, K93.54, K93.55, K93.56, K93.57, K93.58, K93.59, K93.60, K93.61, K93.62, K93.63, K93.64, K93.65, K93.66, K93.67, K93.68, K93.69, K93.70, K93.71, K93.72, K93.73, K93.74, K93.75, K93.76, K93.77, K93.78, K93.79, K93.80, K93.81, K93.82, K93.83, K93.84, K93.85, K93.86, K93.87, K93.88, K93.89, K93.90, K93.91, K93.92, K93.93, K93.94, K93.95, K93.96, K93.97, K93.98, K93.99, K93.100, K93.101, K93.102, K93.103,

K94.1, K94.2, K94.3, K94.4, K94.5, K94.6, K94.7, K94.8, K94.9, K94.10, K94.11, K94.12, K94.13, K94.14, K94.15, K94.16, K94.17, K94.18, K94.19, K94.20, K94.21, K94.22, K94.23, K94.24, K94.25, K94.26, K94.27, K94.28, K94.29, K94.30, K94.31, K94.32, K94.33, K94.34, K94.35, K94.36, K94.37, K94.38, K94.39, K94.40, K94.41, K94.42, K94.43, K94.44, K94.45, K94.46, K94.47, K94.48, K94.49, K94.50, K94.51, K94.52, K94.53, K94.54, K94.55, K94.56, K94.57, K94.58, K94.59, K94.60, K94.61, K94.62, K94.63, K94.64, K94.65, K94.66, K94.67, K94.68, K94.69, K94.70, K94.71, K94.72, K94.73, K94.74, K94.75, K94.76, K94.77, K94.78, K94.79, K94.80, K94.81, K94.82, K94.83, K94.84, K94.85, K94.86, K94.87, K94.88, K94.89, K94.90, K94.91, K94.92, K94.93, K94.94, K94.95, K94.96, K94.97, K94.98, K94.99, K94.100, K94.101, K94.102, K94.103,

K95.1, K95.2, K95.3, K95.4, K95.5, K95.6, K95.7, K95.8, K95.9, K95.10, K95.11, K95.12, K95.13, K95.14, K95.15, K95.16, K95.17, K95.18, K95.19, K95.20, K95.21, K95.22, K95.23, K95.24, K95.25, K95.26, K95.27, K95.28, K95.29, K95.30, K95.31, K95.32, K95.33, K95.34, K95.35, K95.36, K95.37, K95.38, K95.39, K95.40, K95.41, K95.42, K95.43, K95.44, K95.45, K95.46, K95.47, K95.48, K95.49, K95.50, K95.51, K95.52, K95.53, K95.54, K95.55, K95.56, K95.57, K95.58, K95.59, K95.60, K95.61, K95.62, K95.63, K95.64, K95.65, K95.66, K95.67, K95.68, K95.69, K95.70, K95.71, K95.72, K95.73, K95.74, K95.75, K95.76, K95.77, K95.78, K95.79, K95.80, K95.81, K95.82, K95.83, K95.84, K95.85, K95.86, K95.87, K95.88, K95.89, K95.90, K95.91, K95.92, K95.93, K95.94, K95.95, K95.96, K95.97, K95.98, K95.99, K95.100, K95.101, K95.102, K95.103,

K96.1, K96.2, K96.3, K96.4, K96.5, K96.6, K96.7, K96.8, K96.9, K96.10, K96.11, K96.12, K96.13, K96.14, K96.15, K96.16, K96.17, K96.18, K96.19, K96.20, K96.21, K96.22, K96.23, K96.24, K96.25, K96.26, K96.27, K96.28, K96.29, K96.30, K96.31, K96.32, K96.33, K96.34, K96.35, K96.36, K96.37, K96.38, K96.39, K96.40, K96.41, K96.42, K96.43, K96.44, K96.45, K96.46, K96.47, K96.48, K96.49, K96.50, K96.51, K96.52, K96.53, K96.54, K96.55, K96.56, K96.57, K96.58, K96.59, K96.60, K96.61, K96.62, K96.63, K96.64, K96.65, K96.66, K96.67, K96.68, K96.69, K96.70, K96.71,

K96.72, K96.73, K96.74, K96.75, K96.76, K96.77, K96.78, K96.79, K96.80, K96.81, K96.82, K96.83, K96.84, K96.85, K96.86, K96.87, K96.88, K96.89, K96.90, K96.91, K96.92, K96.93, K96.94, K96.95, K96.96, K96.97, K96.98, K96.99, K96.100, K96.101, K96.102, K96.103,

K97.1, K97.2, K97.3, K97.4, K97.5, K97.6, K97.7, K97.8, K97.9, K97.10, K97.11, K97.12, K97.13, K97.14, K97.15, K97.16, K97.17, K97.18, K97.19, K97.20, K97.21, K97.22, K97.23, K97.24, K97.25, K97.26, K97.27, K97.28, K97.29, K97.30, K97.31, K97.32, K97.33, K97.34, K97.35, K97.36, K97.37, K97.38, K97.39, K97.40, K97.41, K97.42, K97.43, K97.44, K97.45, K97.46, K97.47, K97.48, K97.49, K97.50, K97.51, K97.52, K97.53, K97.54, K97.55, K97.56, K97.57, K97.58, K97.59, K97.60, K97.61, K97.62, K97.63, K97.64, K97.65, K97.66, K97.67, K97.68, K97.69, K97.70, K97.71, K97.72, K97.73, K97.74, K97.75, K97.76, K97.77, K97.78, K97.79, K97.80, K97.81, K97.82, K97.83, K97.84, K97.85, K97.86, K97.87, K97.88, K97.89, K97.90, K97.91, K97.92, K97.93, K97.94, K97.95, K97.96, K97.97, K97.98, K97.99, K97.100, K97.101, K97.102, K97.103,

K98.1, K98.2, K98.3, K98.4, K98.5, K98.6, K98.7, K98.8, K98.9, K98.10, K98.11, K98.12, K98.13, K98.14, K98.15, K98.16, K98.17, K98.18, K98.19, K98.20, K98.21, K98.22, K98.23, K98.24, K98.25, K98.26, K98.27, K98.28, K98.29, K98.30, K98.31, K98.32, K98.33, K98.34, K98.35, K98.36, K98.37, K98.38, K98.39, K98.40, K98.41, K98.42, K98.43, K98.44, K98.45, K98.46, K98.47, K98.48, K98.49, K98.50, K98.51, K98.52, K98.53, K98.54, K98.55, K98.56, K98.57, K98.58, K98.59, K98.60, K98.61, K98.62, K98.63, K98.64, K98.65, K98.66, K98.67, K98.68, K98.69, K98.70, K98.71, K98.72, K98.73, K98.74, K98.75, K98.76, K98.77, K98.78, K98.79, K98.80, K98.81, K98.82, K98.83, K98.84, K98.85, K98.86, K98.87, K98.88, K98.89, K98.90, K98.91, K98.92, K98.93, K98.94, K98.95, K98.96, K98.97, K98.98, K98.99, K98.100, K98.101, K98.102, K98.103,

K99.1, K99.2, K99.3, K99.4, K99.5, K99.6, K99.7, K99.8, K99.9, K99.1 0, K99.11, K99.12, K99.13, K99.14, K99.15, K99.16, K99.17, K99.18, K99.19, K99.20, K99.21, K99.22, K99.23, K99.24, K99.25, K99.26, K99.27, K99.28, K99.29, K99.30, K99.31, K99.32, K99.33, K99.34, K99.35, K99.36, K99.37, K99.38, K99.39, K99.40, K99.41, K99.42, K99.43, K99.44, K99.45, K99.46, K99.47, K99.48, K99.49, K99.50, K99.51, K99.52, K99.53, K99.54, K99.55, K99.56, K99.57, K99.58, K99.59, K99.60, K99.61, K99.62, K99.63, K99.64, K99.65, K99.66, K99.67, K99.68, K99.69, K99.70, K99.71, K99.72, K99.73, K99.74, K99.75, K99.76, K99.77, K99.78, K99.79, K99.80, K99.81, K99.82, K99.83, K99.84, K99.85, K99.86, K99.87, K99.88, K99.89, K99.90, K99.91, K99.92, K99.93, K99.94, K99.95, K99.96, K99.97, K99.98, K99.99, K99.100, K99.101, K99.102, K99.103,

K100.1, K100.2, K100.3, K100.4, K100.5, K100.6, K100.7, K100.8, K100.9, K100.10, K100.11, K100.12, K100.13, K100.14, K100.15, K100.16, K100.17, K100.18, K100.19, K100.20, K100.21, K100.22, K100.23, K100.24, K100.25, K100.26, K100.27, K100.28, K100.29, K100.30, K100.31, K100.32, K100.33, K100.34, K100.35, K100.36, K100.37, K100.38, K100.39, K100.40, K100.41, K100.42, K100.43, K100.44, K100.45, K100.46, K100.47, K100.48, K100.49, K100.50, K100.51, K100.52, K100.53, K100.54, K100.55, K100.56, K100.57, K100.58, K100.59, K100.60, K100.61, K100.62, K100.63, K100.64, K100.65, K100.66, K100.67, K100.68, K100.69, K100.70, K100.71, K100.72, K100.73, K100.74, K100.75, K100.76, K100.77, K100.78, K100.79, K100.80, K100.81, K100.82, K100.83, K100.84, K100.85, K100.86, K100.87, K100.88, K100.89, K100.90, K100.91, K100.92, K100.93, K100.94, K100.95, K100.96, K100.97, K100.98, K100.99, K100.100, K100.101, K100.102, K100.103,

K101.1, K101.2, K101.3, K101.4, K101.5, K101.6, K101.7, K101.8, K101.9, K101.10, K101.11, K101.12, K101.13, K101.14, K101.15, K101.16, K101.17, K101.18, K101.19, K101.20, K101.21, K101.22, K101.23, K101.24, K101.25, K101.26, K101.27, K101.28, K101.29, K101.30, K101.31, K101.32, K101.33, K101.34, K101.35, K101.36, K101.37, K101.38, K101.39, K101.40, K101.41, K101.42, K101.43, K101.44, K101.45, K101.46, K101.47, K101.48, K101.49, K101.50, K101.51, K101.52, K101.53, K101.54, K101.55, K101.56, K101.57, K101.58, K101.59, K101.60, K101.61, K101.62, K101.63, K101.64, K101.65, K101.66, K101.67, K101.68, K101.69, K101.70, K101.71, K101.72, K101.73, K101.74, K101.75, K101.76, K101.77, K101.78, K101.79, K101.80, K101.81, K101.82, K101.83, K101.84, K101.85, K101.86, K101.87, K101.88, K101.89, K101.90, K101.91, K101.92, K101.93, K101.94, K101.95, K101.96, K101.97, K101.98, K101.99, K101.100, K101.101, K101.102, K101.103,

K102.1, K102.2, K102.3, K102.4, K102.5, K102.6, K102.7, K102.8, K102.9, K102.10, K102.11, K102.12, K102.13, K102.14, K102.15, K102.16, K102.17, K102.18, K102.19, K102.20, K102.21, K102.22, K102.23, K102.24, K102.25, K102.26, K102.27, K102.28, K102.29, K102.30, K102.31, K102.32, K102.33, K102.34, K102.35, K102.36, K102.37, K102.38, K102.39, K102.40, K102.41, K102.42, K102.43, K102.44, K102.45, K102.46, K102.47, K102.48, K102.49, K102.50, K102.51, K102.52, K102.53, K102.54, K102.55, K102.56, K102.57, K102.58, K102.59, K102.60, K102.61, K102.62, K102.63, K102.64, K102.65, K102.66, K102.67, K102.68, K102.69, K102.70, K102.71, K102.72, K102.73, K102.74, K102.75, K102.76, K102.77, K102.78, K102.79, K102.80, K102.81, K102.82, K102.83, K102.84, K102.85, K102.86, K102.87, K102.88, K102.89, K102.90, K102.91, K102.92, K102.93, K102.94, K102.95, K102.96, K102.97, K102.98, K102.99, K102.100, K102.101, K102.102, K102.103,

K103.1, K103.2, K103.3, K103.4, K103.5, K103.6, K103.7, K103.8, K103.9, K103.10, K103.11, K103.12, K103.13, K103.14, K103.15, K103.16, K103.17, K103.18, K103.19, K103.20, K103.21, K103.22, K103.23, K103.24, K103.25, K103.26, K103.27, K103.28, K103.29, K103.30, K103.31, K103.32, K103.33, K103.34, K103.35, K103.36, K103.37, K103.38, K103.39, K103.40, K103.41, K103.42, K103.43, K103.44, K103.45, K103.46, K103.47, K103.48, K103.49,

K103.50, K103.51, K103.52, K103.53, K103.54, K103.55, K103.56, K103.57, K103.58, K103.59, K103.60, K103.61, K103.62, K103.63, K103.64, K103.65, K103.66, K103.67, K103.68, K103.69, K103.70, K103.71, K103.72, K103.73, K103.74, K103.75, K103.76, K103.77, K103.78, K103.79, K103.80, K103.81, K103.82, K103.83, K103.84, K103.85, K103.86, K103.87, K103.88, K103.89, K103.90, K103.91, K103.92, K103.93, K103.94, K103.95, K103.96, K103.97, K103.98, K103.99, K103.100, K103.101, K103.102, K103.103,

K104.1, K104.2, K104.3, K104.4, K104.5, K104.6, K104.7, K104.8, K104.9, K104.10, K104.11, K104.12, K104.13, K104.14, K104.15, K104.16, K104.17, K104.18, K104.19, K104.20, K104.21, K104.22, K104.23, K104.24, K104.25, K104.26, K104.27, K104.28, K104.29, K104.30, K104.31, K104.32, K104.33, K104.34, K104.35, K104.36, K104.37, K104.38, K104.39, K104.40, K104.41, K104.42, K104.43, K104.44, K104.45, K104.46, K104.47, K104.48, K104.49, K104.50, K104.51, K104.52, K104.53, K104.54, K104.55, K104.56, K104.57, K104.58, K104.59, K104.60, K104.61, K104.62, K104.63, K104.64, K104.65, K104.66, K104.67, K104.68, K104.69, K104.70, K104.71, K104.72, K104.73, K104.74, K104.75, K1.04.76, K104.77, K104.78, K104.79, K104.80, K104.81, K104.82, K104.83, K104.84, K104.85, K104.86, K104.87, K104.88, K104.89, K104.90, K104.91, K104.92, K104.93, K104.94, K104.95, K104.96, K104.97, K104.98, K104.99, K104.100, K104.101, K104.102, K104.103,

K105.1, K105.2, K105.3, K105.4, K105.5, K105.6, K105.7, K105.8, K105.9, K105.10, K105.11, K105.12, K105.13, K105.14, K105.15, K105.16, K105.17, K105.18, K105.19, K105.20, K105.21, K105.22, K105.23, K105.24, K105.25, K105.26, K105.27, K105.28, K105.29, K105.30, K105.31, K105.32, K105.33, K105.34, K105.35, K105.36, K105.37, K105.38, K105.39, K105.40, K105.41, K105.42, K105.43, K105.44, K105.45, K105.46, K105.47, K105.48, K105.49, K105.50, K105.51, K105.52, K105.53, K105.54, K105.55, K105.56, K105.57, K105.58, K105.59, K105.60, K105.61, K105.62, K105.63, K105.64, K105.65, K105.66, K105.67, K105.68, K105.69, K105.70, K105.71, K105.72, K105.73, K105.74, K105.75, K105.76, K105.77, K105.78, K105.79, K105.80, K105.81, K105.82, K105.83, K105.84, K105.85, K105.86, K105.87, K105.88, K105.89, K105.90, K105.91, K105.92, K105.93, K105.94, K105.95, K105.96, K105.97, K105.98, K105.99, K105.100, K105.101, K105.102, K105.103,

K106.1, K106.2, K106.3, K106.4, K106.5, K106.6, K106.7, K106.8, K106.9, K106.10, K106.11, K106.12, K106.13, K106.14, K106.15, K106.16, K106.17, K106.18, K106.19, K106.20, K106.21, K106.22, K106.23, K106.24, K106.25, K106.26, K106.27, K106.28, K106.29, K106.30, K106.31, K106.32, K106.33, K106.34, K106.35, K106.36, K106.37, K106.38, K106.39, K106.40, K106.41, K106.42, K106.43, K106.44, K106.45, K106.46, K106.47, K106.48, K106.49, K106.50, K106.51, K106.52, K106.53, K106.54, K106.55, K106.56, K106.57, K106.58, K106.59, K106.60, K106.61, K106.62, K106.63, K106.64, K106.65, K106.66, K106.67, K106.68, K106.69, K106.70, K106.71, K106.72, K106.73, K106.74, K106.75, K106.76, K106.77, K106.78, K106.79, K106.80, K106.81, K106.82, K106.83, K106.84, K106.85, K106.86, K106.87, K106.88, K106.89, K106.90, K106.91, K106.92, K106.93, K106.94, K106.95, K106.96, K106.97, K106.98, K106.99, K106.100, K106.101, K106.102, K106.103,

K107.1, K107.2, K107.3, K107.4, K107.5, K107.6, K107.7, K107.8, K107.9, K107.10, K107.11, K107.12, K107.13, K107.14, K107.15, K107.16, K107.17, K107.18, K107.19, K107.20, K107.21, K107.22, K107.23, K107.24, K107.25, K107.26, K107.27, K107.28, K107.29, K107.30, K107.31, K107.32, K107.33, K107.34, K107.35, K107.36, K107.37, K107.38. K107.39, K107.40, K107.41, K107.42, K107.43, K107.44, K107.45, K107.46, K107.47, K107.48, K107.49, K107.50, K107.51, K107.52, K107.53, K107.54, K107.55, K107.56, K107.57, K107.58, K107.59, K107.60, K107.61, K107.62, K107.63, K107.64, K107.65, K107.66, K107.67, K107.68, K107.69, K107.70, K107.71, K107.72, K107.73, K107.74, K107.75, K107.76, K107.77, K107.78, K107.79, K107.80, K107.81, K107.82, K107.83, K107.84, K107.85, K107.86, K107.87, K107.88, K107.89, K107.90, K107.91, K107.92, K107.93, K107.94, K107.95, K107.96, K107.97, K107.98, K107.99, K107.100, K107.101, K107.102, K107.103,

K108.1, K108.2, K108.3, K108.4, K108.5, K108.6, K108.7, K108.8, K108.9, K108.10, K108.11, K108.12, K108.13, K108.14, K108.15, K108.16, K108.17, K108.18, K108.19, K108.20, K108.21, K108.22, K108.23, K108.24, K108.25, K108.26, K108.27, K108.28, K108.29, K108.30, K108.31, K108.32, K108.33, K108.34, K108.35, K108.36, K108.37, K108.38, K108.39, K108.40, K108.41, K108.42, K108.43, K108.44, K108.45, K108.46, K108.47, K108.48, K108.49, K108.50, K108.51, K108.52, K108.53, K108.54, K108.55, K108.56, K108.57, K108.58, K108.59, K108.60, K108.61, K108.62, K108.63, K108.64, K108.65, K108.66, K108.67, K108.68, K108.69, K108.70, K108.71, K108.72, K108.73, K108.74, K108.75, K108.76, K108.77, K108.78, K108.79, K108.80, K108.81, K108.82, K108.83, K108.84, K108.85, K108.86, K108.87, K108.88, K108.89, K108.90, K108.91, K108.92, K108.93, K108.94, K108.95, K108.96, K108.97, K108.98, K108.99, K108.100, K108.101, K108.102, K108.103,

K109.1, K109.2, K109.3, K109.4, K109.5, K109.6, K109.7, K109.8, K109.9, K109.10, K109.11, K109.12, K109.13, K109.14, K109.15, K109.16, K109.17, K109.18, K109.19, K109.20, K109.21, K109.22, K109.23, K109.24, K109.25, K109.26, K109.27, K109.28, K109.29, K109.30, K109.31, K109.32, K109.33, K109.34, K109.35, K109.36, K109.37, K109.38, K109.39, K109.40, K109.41, K109.42, K109.43, K109.44, K109.45, K109.46, K109.47, K109.48, K109.49, K109.50, K109.51, K109.52, K109.53, K109.54, K109.55, K109.56, K109.57, K109.58, K109.59, K109.60, K109.61, K109.62, K109.63, K109.64, K109.65, K109.66, K109.67, K109.68, K109.69, K109.70, K109.71, K109.72, K109.73, K109.74, K109.75, K109.76, K109.77, K109.78, K109.79, K109.80, K109.81, K109.82, K109.83, K109.84, K109.85, K109.86, K109.87, K109.88, K109.89, K109.90, K109.91, K109.92, K109.93, K109.94, K109.95, K109.96, K109.97,

K109.98, K109.99, K109.100, K109.101, K109.102, K109.103, K110.1, K110.2, K110.3, K110.4, K110.5, K110.6, K110.7, K110.8, K110.9, K110.10, K110.11, K110.12, K110.13, K110.14, K110.15, K110.16, K110.17, K110.18, K110.19, K110.20, K110.21, K110.22, K110.23, K110.24, K110.25, K110.26, K110.27, K110.28, K110.29, K110.30, K110.31, K110.32, K110.33, K110.34, K110.35, K110.36, K110.37, K110.38, K110.39, K110.40, K110.41, K110.42, K110.43, K110.44, K110.45, K110.46, K110.47, K110.48, K110.49, K110.50, K110.51, K110.52, K110.53, K110.54, K110.55, K110.56, K110.57, K110.58, K110.59, K110.60, K110.61, K110.62, K110.63, K110.64, K110.65, K110.66, K110.67, K110.68, K110.69, K110.70, K110.71, K110.72, K110.73, K110.74, K110.75, K110.76, K110.77, K110.78, K110.79, K110.80, K110.81, K110.82, K110.83, K110.84, K110.85, K110.86, K110.87, K110.88 K110.89, K110.90, K110.91, K110.92, K110.93, K110.94, K110.95, K110.96, K110.97, K110.98, K110.99, K110.100, K110.101, K110.102, K110.103, K111.1, K111.2, K111.3, K111.4, K111.5, K111.6, K111.7, K111.8, K111.9, K111.10, K111.11, K111.12, K111.13, K111.14, K111.15, K111.16, K111.17, K111.18, K111.19, K111.20, K111.21, K111.22, K111.23, K111.24, K111.25, K111.26, K111.27, K111.28, K111.29, K111.30, K111.31, K111.32, K111.33, K111.34, K111.35, K111.36, K111.37, K111.38, K111.39, K111.40, K111.41, K111.42, K111.43, K111.44, K111.45, K111.46, K111.47, K111.48, K111.49, K111.50, K111.51, K111.52, K111.53, K111.54, K111.55, K111.56, K111.57, K111.58, K111.59, K111.60, K111.61, K111.62, K111.63, K111.64, K111.65, K111.66, K111.67, K111.68, K111.69, K111.70, K111.71, K111.72, K111.73, K111.74, K111.75, K111.76, K111.77, K111.78, K111.79, K111.80, K111.81, K111.82, K111.83, K111.84, K111.85, K111.86, K111.87, K111.88, K111.89, K111.90, K111.91, K111.92, K111.93, K111.94, K111.95, K111.96, K111.97, K111.98, K111.99, K111.100, K111.101, K111.102, K111.103, K112.1, K112.2, K112.3, K112.4, K112.5, K112.6, K112.7, K112.8, K112.9, K112.10, K112.11, K112.12, K112.13, K112.14, K112.15, K112.16, K112.17, K112.18, K112.19, K112.20, K112.21, K112.22, K112.23, K112.24, K112.25, K112.26, K112.27, K112.28, K112.29, K112.30, K112.31, K112.32, K112.33, K112.34, K112.35, K112.36, K112.37, K112.38, K112.39, K112.40, K112.41, K112.42, K112.43, K112.44, K112.45, K112.46, K112.47, K112.48, K112.49, K112.50, K112.51, K112.52, K112.53, K112.54, K112.55, K112.56, K112.57, K112.58, K112.59, K112.60, K112.61, K112.62, K112.63, K112.64, K112.65, K112.66, K112.67, K112.68, K112.69, K112.70, K112.71, K112.72, K112.73, K112.74, K112.75, K112.76, K112.77, K112.78, K112.79, K112.80, K112.81, K112.82, K112.83, K112.84, K112.85, K112.86, K112.87, K112.88, K112.89, K112.90, K112.91, K112.92, K112.93, K112.94, K112.95, K112.96, K112.97, K112.98, K112.99, K112.100, K112.101, K112.102, K112.103, K113.1, K113.2, K113.3, K113.4, K113.5, K113.6, K113.7, K113.8, K113.9, K113.10, K113.11, K113.12, K113.13, K113.14, K113.15, K113.16, K113.17, K113.18, K113.19, K113.20, K113.21, K113.22, K113.23, K113.24, K113.25, K113.26, K113.27, K113.28, K113.29, K113.30, K113.31, K113.32, K113.33, K113.34, K113.35, K113.36, K113.37, K113.38, K113.39, K113.40, K113.41, K113.42, K113.43, K113.44, K113.45, K113.46, K113.47, K113.48, K113.49, K113.50, K113.51, K113.52, K113.53, K113.54, K113.55, K113.56, K113.57, K113.58, K113.59, K113.60, K113.61, K113.62, K113.63, K113.64, K113.65, K113.66, K113.67, K113.68, K113.69, K113.70, K113.71, K113.72, K113.73, K113.74, K113.75, K113.76, K113.77, K113.78, K113.79, K113.80, K113.81, K113.82, K113.83, K113.84, K113.85, K113.86, K113.87, K113.88, K113.89, K113.90, K113.91, K113.92, K113.93, K113.94, K113.95, K113.96, K113.97, K113.98, K113.99, K113.100, K113.101, K113.102, K113.103, K114.1, K114.2, K114.3, K114.4, K114.5, K114.6, K114.7, K114.8, K114.9, K114.10, K114.11, K114.12, K114.13, K114.14, K114.15, K114.16, K114.17, K114.18, K114.19, K114.20, K114.21, K114.22, K114.23, K114.24, K114.25, K114.26, K114.27, K114.28, K114.29, K114.30, K114.31, K114.32, K114.33, K114.34, K114.35, K114.36, K114.37, K114.38, K114.39, K114.40, K114.41, K114.42, K114.43, K114.44, K114.45, K114.46, K114.47, K114.48, K114.49, K114.50, K114.51, K114.52, K114.53, K114.54, K114.55, K114.56, K114.57, K114.58, K114.59, K114.60, K114.61, K114.62, K114.63, K114.64, K114.65, K114.66, K114.67, K114.68, K114.69, K114.70, K114.71, K114.72, K114.73, K114.74, K114.75, K114.76, K114.77, K114.78, K114.79, K114.80, K114.81, K114.82, K114.83, K114.84, K114.85, K114.86, K114.87, K114.88, K114.89, K114.90, K114.91, K114.92, K114.93, K114.94, K114.95, K114.96, K114.97, K114.98, K114.99, K114.100, K114.101, K114.102, K114.103, K115.1, K115.2, K115.3, K115.4, K115.5, K115.6, K115.7, K115.8, K115.9, K115.10, K115.11, K115.12, K115.13, K115.14, K115.15, K115.16, K115.17, K115.18, K115.19, K115.20, K115.21, K115.22, K115.23, K115.24, K115.25, K115.26, K115.27, K115.28, K115.29, K115.30, K115.31, K115.32, K115.33, K115.34, K115.35, K115.36, K115.37, K115.38, K115.39, K115.40, K115.41, K115.42, K115.43, K115.44, K115.45, K115.46, K115.47, K115.48, K115.49, K115.50, K115.51, K115.52, K115.53, K115.54, K115.55, K115.56, K115.57, K115.58, K115.59, K115.60, K115.61, K115.62, K115.63, K115.64, K115.65, K115.66, K115.67, K115.68, K115.69, K115.70, K115.71, K115.72, K115.73, K115.74, K115.75, K115.76, K115.77, K115.78, K115.79, K115.80, K115.81, K115.82, K115.83, K115.84, K115.85, K115.86, K115.87, K115.88, K115.89, K115.90, K115.91, K115.92, K115.93, K115.94, K115.95, K115.96, K115.97, K115.98, K115.99, K115.100, K115.101, K115.102, K115.103, K116.1, K116.2, K116.3, K116.4, K116.5, K116.6, K116.7, K116.8, K116.9, K116.10, K116.11, K116.12, K116.13, K116.14, K116.15, K116.16, K116.17, K116.18, K116.19, K116.20, K116.21, K116.22, K116.23, K116.24, K116.25, K116.26, K116.27, K116.28, K116.29, K116.30, K116.31, K116.32, K116.33, K116.34, K116.35, K116.36, K116.37,

K116.38, K116.39, K116.40, K116.41, K116.42, K116.43, K116.44, K116.45, K116.46, K116.47, K116.48, K116.49, K116.50, K116.51, K116.52, K116.53, K116.54, K116.55, K116.56, K116.57, K116.58, K116.59, K116.60, K116.61, K116.62, K116.63, K116.64, K116.65, K116.66, K116.67, K116.68, K116.69, K116.70, K116.71, K116.72, K116.73, K116.74, K116.75, K116.76, K116.77, K116.78, K116.79, K116.80, K116.81, K116.82, K116.83, K116.84, K116.85, K116.86, K116.87, K116.88, K116.89, K116.90, K116.91, K116.92, K116.93, K116.94, K116.95, K116.96, K116.97, K116.98, K116.99, K116.100, K116.101, K116.102, K116.103,

K117.1, K117.2, K117.3, K117.4, K117.5, K117.6, K117.7, K117.8, K117.9, K117.10, K117.11, K117.12, K117.13, K117.14, K117.15, K117.16, K117.17, K117.18, K117.19, K117.20, K117.21, K117.22, K117.23, K117.24, K117.25, K117.26, K117.27, K117.28, K117.29, K117.30, K117.31, K117.32, K117.33, K117.34, K117.35, K117.36, K117.37, K117.38, K117.39, K117.40, K117.41, K117.42, K117.43, K117.44, K117.45, K117.46, K117.47, K117.48, K117.49, K117.50, K117.51, K117.52, K117.53, K117.54, K117.55, K117.56, K117.57, K117.58, K117.59, K117.60, K117.61, K117.62, K117.63, K117.64, K117.65, K117.66, K117.67, K117.68, K117.69, K117.70, K117.71, K117.72, K117.73, K117.74, K117.75, K117.76, K117.77, K117.78, K117.79, K117.80, K117.81, K117.82, K117.83, K117.84, K117.85, K117.86, K117.87, K117.88, K117.89, K117.90, K117.91, K117.92, K117.93, K117.94, K117.95, K117.96, K117.97, K117.98, K117.99, K117.100, K117.101, K117.102, K117.103,

K118.1, K118.2, K118.3, K118.4, K118.5, K118.6, K118.7, K118.8, K118.9, K118.10, K118.11, K118.12, K118.13, K118.14, K118.15, K118.16, K118.17, K118.18, K118.19, K118.20, K118.21, K118.22, K118.23, K118.24, K118.25, K118.26, K118.27, K118.28, K118.29, K118.30, K118.31, K118.32, K118.33, K118.34, K118.35, K118.36, K118.37, K118.38, K118.39, K118.40, K118.41, K118.42, K118.43, K118.44, K118.45, K118.46, K118.47, K118.48, K118.49, K118.50, K118.51, K118.52, K118.53, K118.54, K118.55, K118.56, K118.57, K118.58, K118.59, K118.60, K118.61, K118.62, K118.63, K118.64, K118.65, K118.66, K118.67, K118.68, K118.69, K118.70, K118.71, K118.72, K118.73, K118.74, K118.75, K118.76, K118.77, K118.78, K118.79, K118.80, K118.81, K118.82, K118.83, K118.84, K118.85, K118.86, K118.87, K118.88, K118.89, K118.90, K118.91, K118.92, K118.93, K118.94, K118.95, K118.96, K118.97, K118.98, K118.99, K118.100, K118.101, K118.102, K118.103,

K119.1, K119.2, K119.3, K119.4, K119.5, K119.6, K119.7, K119.8, K119.9, K119.10, K119.11, K119.12, K119.13, K119.14, K119.15, K119.16, K119.17, K119.18, K119.19, K119.20, K119.21, K119.22, K119.23, K119.24, K119.25, K119.26, K119.27, K119.28, K119.29, K119.30, K119.31, K119.32, K119.33, K119.34, K119.35, K119.36, K119.37, K119.38, K119.39, K119.40, K119.41, K119.42, K119.43, K119.44, K119.45, K119.46, K119.47, K119.48, K119.49, K119.50, K119.51, K119.52, K119.53, K119.54, K119.55, K119.56, K119.57, K119.58, K119.59, K119.60, K119.61, K119.62, K119.63, K119.64, K119.65, K119.66, K119.67, K119.68, K119.69, K119.70, K119.71, K119.72, K119.73, K119.74, K119.75, K119.76, K119.77, K119.78, K119.79, K119.80, K119.81, K119.82, K119.83, K119.84, K119.85, K119.86, K119.87, K119.88, K119.89, K119.90, K119.91, K119.92, K119.93, K119.94, K119.95, K119.96, K119.97, K119.98, K119.99, K119.100, K119.101, K119.102, K119.103,

K120.1, K120.2, K120.3, K120.4, K120.5, K120.6, K120.7, K120.8, K120.9, K120.10, K120.11, K120.12, K120.13, K120.14, K120.15, K120.16, K120.17, K120.18, K120.19, K120.20, K120.21, K120.22, K120.23, K120.24, K120.25, K120.26, K120.27, K120.28, K120.29, K120.30, K120.31, K120.32, K120.33, K120.34, K120.35, K120.36, K120.37, K120.38, K120.39, K120.40, K120.41, K120.42, K120.43, K120.44, K120.45, K120.46, K120.47, K120.48, K120.49, K120.50, K120.51, K120.52, K120.53, K120.54, K120.55, K120.56, K120.57, K120.58, K120.59, K120.60, K120.61, K120.62, K120.63, K120.64, K120.65, K120.66, K120.67, K120.68, K120.69, K120.70, K120.71, K120.72, K120.73, K120.74, K120.75, K120.76, K120.77, K120.78, K120.79, K120.80, K120.81, K120.82, K120.83, K120.84, K120.85, K120.86, K120.87, K120.88, K120.89, K120.90, K120.91, K120.92, K120.93, K120.94, K120.95, K120.96, K120.97, K120.98, K120.99, K120.100, K120.101, K120.102, K120.103,

K121.1, K121.2, K121.3, K121.4, K121.5, K121.6, K121.7, K121.8, K121.9, K121.10, K121.11, K121.12, K121.13, K121.14, K121.15, K121.16, K121.17, K121.18, K121.19, K121.20, K121.21, K121.22, K121.23, K121.24, K121.25, K121.26, K121.27, K121.28, K121.29, K121.30, K121.31, K121.32, K121.33, K121.34, K121.35, K121.36, K121.37, K121.38, K121.39, K121.40, K121.41, K121.42, K121.43, K121.44, K121.45, K121.46, K121.47, K121.48, K121.49, K121.50, K121.51, K121.52, K121.53, K121.54, K121.55, K121.56, K121.57, K121.58, K121.59, K121.60, K121.61, K121.62, K121.63, K121.64, K121.65, K121.66, K121.67, K121.68, K121.69, K121.70, K121.71, K121.72, K121.73, K121.74, K121.75, K121.76, K121.77, K121.78, K121.79, K121.80, K121.81, K121.82, K121.83, K121.84, K121.85, K121.86, K121.87, K121.88, K121.89, K121.90, K121.91, K121.92, K121.93, K121.94, K121.95, K121.96, K121.97, K121.98, K121.99, K121.100, K121.101, K121.102, K121.103,

K122.1, K122.2, K122.3, K122.4, K122.5, K122.6, K122.7, K122.8, K122.9, K122.10, K122.11, K122.12, K122.13, K122.14, K122.15, K122.16, K122.17, K122.18, K122.19, K122.20, K122.21, K122.22, K122.23, K122.24, K122.25, K122.26, K122.27, K122.28, K122.29, K122.30, K122.31, K122.32, K122.33, K122.34, K122.35, K122.36, K122.37, K122.38, K122.39, K122.40, K122.41, K122.42, K122.43, K122.44, K122.45, K122.46, K122.47, K122.48, K122.49, K122.50, K122.51, K122.52, K122.53, K122.54, K122.55, K122.56, K122.57, K122.58, K122.59, K122.60, K122.61, K122.62, K122.63, K122.64, K122.65, K122.66, K122.67, K122.68, K122.69, K122.70, K122.71, K122.72, K122.73, K122.74, K122.75, K122.76, K122.77, K122.78, K122.79, K122.80, K122.81, K122.82, K122.83, K122.84, K122.85,

K122.86, K122.87, K122.88, K122.89, K122.90, K122.91, K122.92, K122.93, K122.94, K122.95, K122.96, K122.97, K122.98, K122.99, K122.100, K122.101, K122.102, K122.103,
K123.1, K123.2, K123.3, K123.4, K123.5, K123.6, K123.7, K123.8, K123.9, K123.10, K123.11, K123.12, K123.13, K123.14, K123.15, K123.16, K123.17, K123.18, K123.19, K123.20, K123.21, K123.22, K123.23, K123.24, K123.25, K123.26, K123.27, K123.28, K123.29, K123.30, K123.31, K123.32, K123.33, K123.34, K123.35, K123.36, K123.37, K123.38, K123.39, K123.40, K123.41, K123.42, K123.43, K123.44, K123.45, K123.46, K123.47, K123.48, K123.49, K123.50, K123.51, K123.52, K123.53, K123.54, K123.55, K123.56, K123.57, K123.58, K123.59, K123.60, K123.61, K123.62, K123.63, K123.64, K123.65, K123.66, K123.67, K123.68, K123.69, K123.70, K123.71, K123.72, K123.73, K123.74, K123.75, K123.76, K123.77, K123.78, K123.79, K123.80, K123.81, K123.82, K123.83, K123.84, K123.85, K123.86, K123.87, K123.88, K123.89, K123.90, K123.91, K123.92, K123.93, K123.94, K123.95, K123.96, K123.97, K123.98, K123.99, K123.100, K123.101, K123.102, K123.103,
K124.1, K124.2, K124.3, K124.4, K124.5, K124.6, K124.7, K124.8, K124.9, K124.10, K124.11, K124.12, K124.13, K124.14, K124.15, K124.16, K124.17, K124.18, K124.19, K124.20, K124.21, K124.22, K124.23, K124.24, K124.25, K124.26, K124.27, K124.28, K124.29, K124.30, K124.31, K124.32, K124.33, K124.34, K124.35, K124.36, K124.37, K124.38, K124.39, K124.40, K124.41, K124.42, K124.43, K124.44, K124.45, K124.46, K124.47, K124.48, K124.49, K124.50, K124.51, K124.52, K124.53, K124.54, K124.55, K124.56, K124.57, K124.58, K124.59, K124.60, K124.61, K124.62, K124.63, K124.64, K124.65, K124.66, K124.67, K124.68, K124.69, K124.70, K124.71, K124.72, K124.73, K124.74, K124.75, K124.76, K124.77, K124.78, K124.79, K124.80, K124.81, K124.82, K124.83, K124.84, K124.85, K124.86, K124.87, K124.88, K124.89, K124.90, K124.91, K124.92, K124.93, K124.94, K124.95, K124.96, K124.97, K124.98, K124.99, K124.100, K124.101, K124.102, K124.103,
K125.1, K125.2, K125.3, K125.4, K125.5, K125.6, K125.7, K125.8, K125.9, K125.10, K125.11, K125.12, K125.13, K125.14, K125.15, K125.16, K125.17, K125.18, K125.19, K125.20, K125.21, K125.22, K125.23, K125.24, K125.25, K125.26, K125.27, K125.28, K125.29, K125.30, K125.31, K125.32, K125.33, K125.34, K125.35, K125.36, K125.37, K125.38, K125.39, K125.40, K125.41, K125.42, K125.43, K125.44, K125.45, K125.46, K125.47, K125.48, K125.49, K125.50, K125.51, K125.52, K125.53, K125.54, K125.55, K125.56, K125.57, K125.58, K125.59, K125.60, K125.61, K125.62, K125.63, K125.64, K125.65, K125.66, K125.67, K125.68, K125.69, K125.70, K125.71, K125.72, K125.73, K125.74, K125.75, K125.76, K125.77, K125.78, K125.79, K125.80, K125.81, K125.82, K125.83, K125.84, K125.85, K125.86, K125.87, K125.88, K125.89, K125.90, K125.91, K125.92, K125.93, K125.94, K125.95, K125.96, K125.97, K125.98, K125.99, K125.100, K125.101, K125.102, K125.103,
K126.1, K126.2, K126.3, K126.4, K126.5, K126.6, K126.7, K126.8, K126.9, K126.10, K126.11, K126.12, K126.13, K126.14, K126.15, K126.16, K126.17, K126.18, K126.19, K126.20, K126.21, K126.22, K126.23, K126.24, K126.25, K126.26, K126.27, K126.28, K126.29, K126.30, K126.31, K126.32, K126.33, K126.34, K126.35, K126.36, K126.37, K126.38, K126.39, K126.40, K126.41, K126.42, K126.43, K126.44, K126.45, K126.46, K126.47, K126.48, K126.49, K126.50, K126.51, K126.52, K126.53, K126.54, K126.55, K126.56, K126.57, K126.58, K126.59, K126.60, K126.61, K126.62, K126.63, K126.64, K126.65, K126.66, K126.67, K126.68, K126.69, K126.70, K126.71, K126.72; K126.73, K126.74, K126.75, K126.76, K126.77, K126.78, K126.79, K126.80, K126.81, K126.82, K126.83, K126.84, K126.85, K126.86, K126.87, K126.88, K126.89, K126.90, K126.91, K126.92, K126.93, K126.94, K126.95, K126.96, K126.97, K126.98, K126.99, K126.100, K126.101, K126.102, K126.103,
K127.1, K127.2, K127.3, K127.4, K127.5, K127.6, K127.7, K127.8, K127.9, K127.10, K127.11, K127.12, K127.13, K127.14, K127.15, K127.16, K127.17, K127.18, K127.19, K127.20, K127.21, K127.22, K127.23, K127.24, K127.25, K127.26, K127.27, K127.28, K127.29, K127.30, K127.31, K127.32, K127.33, K127.34, K127.35, K127.36, K127.37, K127.38, K127.39, K127.40, K127.41, K127.42, K127.43, K127.44, K127.45, K127.46, K127.47, K127.48, K127.49, K127.50, K127.51, K127.52, K127.53, K127.54, K127.55, K127.56, K127.57, K127.58, K127.59, K127.60, K127.61, K127.62, K127.63, K127.64, K127.65, K127.66, K127.67, K127.68, K127.69, K127.70, K127.71, K127.72, K127.73, K127.74, K127.75, K127.76, K127.77, K127.78, K127.79, K127.80, K127.81, K127.82, K127.83, K127.84, K127.85, K127.86, K127.87, K127.88, K127.89,
K127.90, K127.91, K127.92, K127.93, K127.94, K127.95, K127.96, K127.97, K127.98, K127.99, K127.100, K127.101, K127.102 und K127.103.

Die Aufwandmengen der Herbizide (B) sind im Prinzip bekannt und liegen in der Regel im Bereich von 1 g bis 8000 g AS/ha (g AS/ha = g Aktivsubstanz pro Hektar), vorzugsweise im Bereich von 5 g bis 5000 g AS/ha.

In den erfindungsgemäßen Mischungen werden im Rahmen der genannten Aufwandmengen im Vergleich zur Einzelapplikation niedrigere Aufwandmengen des jeweiligen Wirkstoffs benötigt. Die Mengenverhältnisse (A):(B) bezogen auf das Gewicht liegen in Abhängigkeit von den wirksamen Aufwandmengen in der Regel im Bereich von 1:8000 bis 800:1, vorzugsweise 1:100 bis 100:1, insbesondere im Bereich von 1:50 bis 50:1.

Bevorzugt sind Herbizid-Kombinationen aus einer oder mehreren Verbindungen (A) mit einer oder mehreren Verbindungen der Gruppe (B1) oder (B2) oder (B3).

Weiter bevorzugt sind Kombinationen von Verbindungen (A) mit einer oder mehreren Verbindungen (B) nach dem Schema:

(A)+(B1)+(B2), (A)+(B1)+(B3), (A)+(B2)+(B3) oder (A)+(B1)+(B2)+(B3).

Weiterhin können die erfindungsgemäßen Kombinationen zusammen mit anderen Wirkstoffen beispielsweise aus der Gruppe der Herbizide, Safener, Fungizide, Insektizide und Pflanzenwachstumsregulatoren oder aus der Gruppe der im Pflanzenschutz üblichen Zusatzstoffe und Formulierungshilfsmittel eingesetzt werden.

Zusatzstoffe sind beispielsweise Düngemittel und Farbstoffe. Von besonderer Bedeutung sind dabei solche Kombinationen, denen noch ein oder mehrere weitere Wirkstoffe anderer Struktur oder Safenerwirkstoffe [Wirkstoffe (C)] zugesetzt werden wie beispielsweise nach dem Schema

(A)+(B1)+(C), (A)+(B2)+(C), (A)+(B3)+(C), (A)+(B1)+(B2)+(C), (A)+(B1)+(B3)+(C), (A)+(B2)+(B3)+(C) oder (A)+(B1)+(B2)+B3)+(C).

Für Kombinationen der letztgenannten Art mit drei oder mehr Wirkstoffen gelten die nachstehend insbesondere für erfindungsgemäße Zweierkombinationen erläuterten bevorzugten Bedingungen in erster Linie ebenfalls, sofern darin die erfindungsgemäßen Zweierkombinationen enthalten sind und bezüglich der betreffenden Zweierkombination.

In einigen Fällen sind schon Kombinationen unterschiedlicher Wirkstoffe innerhalb der Gruppe (A) synergistisch, so daß auf Basis dieser Zweierkombinationen besonders günstige Dreierkombinationen mit zusätzlich synergistischen Effekten möglich sind.

Bevorzugt sind Kombinationen der Wirkstoffe (A) und (B), welche für die nichtselektive Anwendung geeignet sind.

Besonders bevorzugt sind Kombinationen der Wirkstoffe (A) mit Wirkstoffen (B) aus der Gruppe:

Simazin (B1.1.4), Pendimethalin (B1.1.7), Oxadiargyl (B1.1.8), Isoxaben (B1.2.1), Foramsulfuron (B2.1.5), Iodosulfuron (B2.1.6), Iodosulfuron-methyl-natriumsalz (B2.1.6.2), Amicarbazone (B2.1.7), Propoxycarbazone (B2.1.8), Propoxycarbazone-natriumsalz (B2.1.8.1), Metribuzin (B2.1.9), Glufosinate (B2.1.1), Glufosinate-ammonium (B2.1.1.1), Glyphosate (B2.1.2), Glyphosate-isopropylammonium (B2.1.2.1), Sulfosate (B2.1.3), Metsulfuron (B2.1.10), Metsulfuron-methyl (B2.1.10.1), Imazapyr (B2.1.12), Imazapyr-Säure (B2.1.12.1), Imazapyr-isopropylammonium (B2.1.12.2), Paraquat (B2.1.13), Paraquat-dichlorid (B2.1.13.1), Triclopyr (B2.2.3), Triclopyr-Säure (B2.2.3.1), Triclopyr-triethylammoniumsalz (B2.2.3.2), Triclopyr-butotylester (B2.2.3.3), Amidosulfuron (B2.2.7), Amitrole (B2.2.14), Diuron (B3.2), Oxyfluorfen (B3.1.1), Oxadiazon (B3.1.8), Diflufenican (B3.1.9), Bromacil (B3.3) und Norflurazon (B3.4).

Besonders bevorzugt sind dabei die Kombinationen der Wirkstoffe (A) mit Wirkstoffen (B) aus der Gruppe:

Oxadiargyl (B1.1.8), Glufosinate (B2.1.1), Glufosinate-ammonium (B2.1.1.1), Glyphosate (B2.1.2), Glyphosate-isopropylammonium (B2.1.2.1), Sulfosate (B2.1.3), Foramsulfuron (B2.1.5), Iodosulfuron (B2.1.6), Iodosulfuron-methyl-natriumsalz (B2.1.6.2), Amicarbazone (B2.1.7), Propoxycarbazone (82.1.8), Propoxycarbazone-natriumsalz (B2.1.8.1), Metribuzin (B2.1.9), Amidosulfuron (B2.2.7), Oxyfluorfen (B3.1.1), Oxadiazon (B3.1.8), Diflufenican (B3.1.9) und Diuron (B3.2), insbesondere Glufosinate (B2.1.1), Glufosinate-ammonium (B2.1.1.1), Glyphosate (B2.1.2), Glyphosate-isopropylammonium (B2.1.2.1), Sulfosate (B2.1.3) und Oxyfluorfen (B3.1.1).

Die erfindungsgemäßen Herbizidkombinationen können auch mit weiteren Herbiziden und Pflanzenwachstumsregulatoren kombiniert werden, um beispielsweise das Wirkungsspektrum zu ergänzen.

Beispiele für derartige weitere Kombinationspartner sind solche von den in den Kombinationen enthaltenen Herbiziden (B) strukturell unterschiedliche Herbizidwirkstoffe oder Pflanzenwachstumsregulatoren, beispielsweise wie sie in dem Handbuch "The Pesticide Manual", 13th Edition 2003, The British Crop Protection Council, oder im e-Pesticide Manual Version 3 (2003) beschrieben sind oder auch als Handelsnamen und "common names" im "Compendium of Pesticide Common Names" (abfragbar im Internet) und jeweils dort zitierter Literatur beschrieben sind.

Beispiele für Herbizide und Pflanzenwachstumsregulatoren sind nachfolgend durch ihre standardisierten Wirkstoffnamen gemäß der "International Organization for Standardization" (ISO) ("common name" in englischer Schreibweise) oder ihren chemischen Namen oder eine Kodenummer angegeben: acetochlor; acifluorfen(-sodium); aclonifen; AKH 7088, i.e. [[[1-[5-[2-chloro-4.-(trifluoromethyl)phenoxy]-2-nitrophenyl]-2-methoxyethylidene]amino]oxy]acetic acid and its methyl ester; alachlor; alloxydim(-sodium); ametryn; amicarbazone, amidochlor, amidosulfuron; aminopyralid, amitrol (aminotriazine); AMS, i.e. ammonium sulfamate; anilofos; asulam; atrazine; azafenidin; azimsulfuron (DPX-A8947); aziprotryn; barban; BAS 516 H, i.e. 5-fluoro-2-phenyl-4H-3,1-benzoxazin-4-one; beflubutamid; benazolin(-ethyl); benfluralin; benfuresate; bensulfuron(-methyl); bensulide; bentazone(-sodium); benzfendizone, benzobicyclone; benzofenap; benzofluor; benzoylprop(-ethyl); benzthiazuron; bialaphos (bilanafos); bifenox; bispyribac(-sodium); bromacil; bromobutide; bromofenoxim; bromoxynil; bromuron; buminafos; busoxinone; butachlor; butafenacil; butamifos; butenachlor; buthidazole; butralin; butroxydim; butylate; cafenstrole (CH-900); carbetamide; carfentrazone(-ethyl); caloxydim, CDAA, i.e. 2-chloro-N,N-di-2-propenylacetamide; CDEC, i.e. 2-chloroallyl diethyldithiocarbamate; chlomethoxyfen; chloramben; chlorazifop-butyl; chlorbromuron; chlorbufam; chlorfenac; chlorfenprop, chlorflurenol-methyl; chloridazon; chlorimuron(-ethyl); chlornitrofen; chlorotoluron; chloroxuron; chlorpropham; chlorsulfuron; chlorthal-dimethyl; chlorthiamid; chlortoluron, cinidon-(-methyl or -ethyl), cinmethylin; cinosulfuron; clethodim; clefoxydim, clodinafop and its ester derivatives (for example clodinafop-propargyl); clomazone; clomeprop; cloprop, cloproxydim; clopyralid; clopyrasulfuron(-methyl); cloransulam(-methyl); cumyluron (JC 940); cyanazine; cycloate; cyclosulfamuron (AC 104); cycloxydim; cycluron; cyhalofop and its ester derivatives (for example butyl ester, DEH-112); cyperquat; cyprazine; cyprazole; daimuron; 2,4-D; 2,4-DB; dalapon; dazomet, desmedipham; desmetryn; di-allate; dicamba; dichlobenil; dichlorprop(-P); diclofop and its esters such as diclofop-methyl; diclosulam, diethatyl(-ethyl); difenoxuron; difenzoquat; diflufenican; diflufenzopyr; dimefuron; dimepiperate; dimethachlor; dimethametryn; dimethenamid (SAN-582H); dimethenamid(-P); dimethazone, dimethipin; dimexyflam, dimetrasulfuron, dinitramine; dinoseb; dinoterb; diphenamid; dipropetryn; diquat; dithiopyr; diuron; DNOC; eglinazine-ethyl; EL 77, i.e. 5-cyano-1-(1,1-dimethylethyl)-N-methyl-1H-pyrazole-4-carboxamide; endothal; epoprodan, EPTC; esprocarb; ethalfluralin; ethametsulfuron-methyl; ethidimuron; ethiozin; ethofumesate; ethoxyfen and its esters (for example ethyl ester, HC-252), ethoxysulfuron, etobenzanid (HW 52); F5231, i.e. N-[2-chloro-4-fluoro-5-[4-(3-fluoropropyl)-4,5-dihydro-5-oxo-1 H-tetrazol-1-yl]-phenyl]ethanesulfonamide; fenoprop; fenoxan, fenoxaprop and fenoxaprop-P and their esters, for example fenoxaprop-P-ethyl and fenoxaprop-ethyl; fenoxydim; fentrazamide; fenuron; flamprop(-methyl or -isopropyl or -isopropyl-L); flazasulfuron; florasulam; fluazifop and fluazifop-P and their esters, for example fluazifop-butyl and fluazifop-P-butyl; fluazolate, flucarbazone(-sodium); flucetosulfuron, fluchloralin; flufenacet (FOE 5043), flufenpyr, flumetsulam; flumeturon; flumiclorac(-pentyl); flumioxazin (S-482); flumipropyn; fluometuron; fluorochloridone, fluorodifen; fluoroglycofen(-ethyl); flupoxam (KNW-739); flupropacil (UBIC-4.243); fluproanate, flupyrsulfuron(-methyl, or-sodium); flurenol(-butyl); fluridone; flurochloridone; fluroxypyr(-meptyl); flurprimidol, flurtamone; fluthiacet(-methyl); fluthiamide (also known as flufenacet); fomesafen; foramsulfuron; fosamine; furilazole (MON 13900), furyloxyfen; glufosinate (-ammonium); glyphosate(-isopropylammonium); halosafen; halosulfuron(-methyl) and its esters (for example the methyl ester, NC-319); haloxyfop and its esters; haloxyfop-P (= R-haloxyfop) and its esters; HC-252 (diphenyl ether), hexazinone; imazamethabenz(-methyl); imazamethapyr; imazamox; imazapic, imazapyr; imazaquin and salts such as the ammonium salts; imazethamethapyr; imazethapyr, imazosulfuron; indanofan; iodosulfuron-(methyl)-(sodium), ioxynil; isocarbamid; isopropalin; isoproturon; isouron; isoxaben; isoxachlortole; isoxaflutole; isoxapyrifop; karbutilate; lactofen; lenacil; linuron; MCPA; MCPA-thioethyl; MCPB; mecoprop(-P); mefenacet; mefluidid; mepisulfuron (LGC-42153), mesosulfuron(-methyl); mesotrione; metam, metamifop, metamitron; metazachlor; methabenzthiazuron; methazole; methoxyphenone; methyldymron; metobenzuron, metobromuron; (S-)metolachlor, metosulam (XRD 511); metoxuron; metribuzin; metsulfuron-methyl; MK-616; molinate; monalide; monocarbamide dihydrogensulfate; monolinuron; monuron; MT 128, i.e. 6-chloro-N-(3-chloro-2-propenyl)-5-methyl-N-phenyl-3-pyridazinamine; MT 5950, i.e. N-[3-chloro-4-(1-methylethyl)-phenyl]-2-methylpentanamide; naproanilide; napropamide; naptalam; NC 310, i.e. 4-(2,4-dichlorobenzoyl)-1-methyl-5-benzyloxypyrazole; neburon; nicosulfuron; nipyraclophen; nitralin; nitrofen; nitrofluorfen; norflurazon; orbencarb; oryzalin; oxadiargyl (RP-020630); oxadiazone; oxasulfuron; oxaziclomefone; oxyfluorfen; paraquat; pebulate; pelargonic acid; pendimethalin; penoxulam; pentanochlor, pentoxazone; perfluidone; pethoxamid, phenisopham; phenmedipham; picloram; picolinafen; pinoxaden (NOA-407855 = flucetsulfuron), piperophos; piributicarb; pirifenop-butyl; pretilachlor; primisulfuron(-methyl); procarbazone(-sodium); procyazine; prodiamine; profluazole, profluralin; proglinazine(-ethyl); prometon; prometryn; propachlor; propanil; propaquizafop; propazine; propham; propisochlor; propoxycarbazone(-sodium), propyzamide; prosulfalin; prosulfocarb; prosulfuron (CGA-152005); prynachlor; pyraclonil, pyraflufen(-ethyl); pyrazolinate; pyrazon; pyrazosulfuron(-ethyl); pyrazoxyfen; pyribenzoxim; pyributicarb; pyridafol; pyridate; pyriftalid, pyrimidobac(-methyl); pyrithiobac(-sodium) (KIH-2031); pyroxofop and its esters (for example propargyl ester); quinclorac; quinmerac; quinoclamine, quinofop and its ester derivatives, quizalofop and quizalofop-P and their ester derivatives, for example quizalofop-ethyl; quizalofop-P-tefuryl and -ethyl; renriduron; rimsulfuron (DPX-E 9636); S 275, i.e. 2-[4-chloro-2-fluoro-5-(2-propynyloxy)phenyl]-4,5,6,7-tetrahydro-2H-indazole; secbumeton; sethoxydim; siduron; simazine; simetryn; SN 106279, i.e. 2-[[7-[2-chloro-4-(trifluoromethyl)phenoxy]-2-naphthalenyl]oxy]propanoic acid and its methyl ester; sulcotrione; sulfentrazone (FMC-97285, F-6285); sulfazuron; sulfometuron(-methyl); sulfosate (ICI-A0224); sulfosulfuron; TCA; tebutam (GCP-5544); tebuthiuron; tepraloxydim; terbacil; terbucarb; terbuchlor; terbumeton; terbuthylazine; terbutryn; TFH 450, i.e. N,N-diethyl-3-[(2-ethyl-6-methylphenyl)sulfonyl]-1H-1,2,4-triazole-1-carboxamide; thenylchlor (NSK-850); thiafluamide; thiazafluron; thiazopyr (Mon-13200); thidiazimin (SN-24085); thidiazuron, thifensulfuron(-methyl); thiobencarb; tiocarbazil; topramezone (BAS-670H), tralkoxydim; tri-allate; triasulfuron; triaziflam; triazofenamide; tribenuron(-methyl); 2,3,6-trichlorobenzoic acid (2,3,6-TBA), triclopyr; tridiphane; trietazine; trifloxysulfuron(-sodium), trifluralin; triflusulfuron and esters (e.g. methyl ester, DPX-66037); trimeturon; tritosulfuron; tsitodef; vemolate; WL 110547, i.e. 5-phenoxy-1-[3-(trifluoromethyl)phenyl]-1H-tetrazole; HOK-201, HOK-202, UBH-509; D-4.89; LS 82-556; KPP-300; NC-324; NC-330; KH-218; DPX-N8189; SC-0774; TH-547, DOWCO-535; DK-8910; V-53482; PP-600; MBH-001; KIH-9201; ET-751; KIH-6127; KIH-2023 and KIH5996.

Wenn die jeweilige Bezeichnung (common name) mehrere Formen des Wirkstoffes umfasst, ist mit der Bezeichnung die kommerziell erhältliche Form bevorzugt definiert.

Jeder der genannten weiteren Wirkstoffe (= Wirkstoffe (C*), (C1*), (C2*) etc.) kann dann vorzugsweise mit einer der Zweierkombinationen K1.1 bis K127.103, nach dem Schema (A)+(B)+(C*) oder auch nach dem Schema (A)+(B)+(C1 *)+(C2*) etc. kombiniert werden. Dabei sind auch solche Mehrfachkombinationen enthalten, in denen die Verbindungen (C*), (C1*) bzw. (C2*) aus der Gruppe der Verbindungen (B) ausgewählt sind, jedoch nicht mit der jeweils in der Zweierkombination enthaltenen Verbindung (B) identisch sind.

Mehrfachkombinationen der Wirkstoffe (A) mit mehreren Wirkstoffen (B) sind beispielsweise

(A) + (B3.2) + (B2.1.4), vorzugsweise (A) + Diuron (B3.2) + MSMA (B2.1.4.1), insbesondere in Mengen von 1-800 g AS/ha (A) und 500-2000 g AS/ha (B3.2) und 1000-3000 g AS/ha (B2.1.4.1);
(A) + (B3.2) + (B2.1.13), vorzugsweise (A) + Diuron (B3.2) + Paraquat-dichlorid (B2.1.13.1), insbesondere in Mengen von 1-800 g AS/ha (A) und 100-500 g AS/ha (B3.2) und 100-1000 g AS/ha (B2.1.13.1);
(A) + (B3.2) + (B2.2.14), vorzugsweise (A) + Diuron (B3.2) + Amitrole (B2.2.14) in Mengen von 1-800 g AS/ha (A) und 100-500 g AS/ha (B3.2) und 100-500 g AS/ha (B2.2.14);
(A) + (B3.2) + (B2.1.1), vorzugsweise (A) + Diuron (B3.2) + Glufosinate-ammonium (B2.1.1.1), insbesondere in Mengen von 1-800 g AS/ha (A) und 500-2000 g AS/ha (B3.2) und 100-1000 g AS/ha (B2.1.1.1);
(A) + (B3.2) + (B2.1.2), vorzugsweise (A) + Diuron (B3.2) + Glyphosate-isopropylammonium (B2.1.2.1), insbesondere in Mengen von 1-800 g AS/ha (A) und 500-2000 g AS/ha (B3.2) und 500-1500 g AS/ha (B2.1.2.1);
(A) + (B3.2) + (B2.1.2) + Petroleum, vorzugsweise (A) + Diuron (B3.2) + Glyphosate-isopropylammonium (B2.1.2.1) + Petroleum-öl, insbesondere in Mengen von 1-800 g AS/ha (A) und 500-2000 g AS/ha (B3.2) und 500-1500 g AS/ha (B2.1.2.1) und 100-500 g/ha Petroleum-öl;
(A) + (B3.1.9) + (B2.1.2), vorzugsweise (A) + Diflufenican (B3.1.9) + Glyphosate-isopropylammonium (B2.1.2.1), insbesondere in Mengen von 1-800 g AS/ha (A) und 50-500 g AS/ha (B3.1.9) und 500-1500 g AS/ha (B2.1.2.1);
(A) + (B1.1.4) + (B3.1.10), vorzugsweise (A) + Simazine (B1.1.4) + Ametryn (B3.1.10) in Mengen von 1-800 g AS/ha (A) und 1000-2500 g AS/ha (B1.1.4) und 1000-2500 g AS/ha (B3.1.10);
(A) + (B1.2.1) + (B1.1.10), vorzugsweise (A) + Isoxaben (B1.2.1) + Oryzalin (B1.1.10) in Mengen von 1-800 g AS/ha (A) und 10-250 g AS/ha (B1.2.1) und 1000-3500 g AS/ha (B1.1.10);
(A) + (B3.1.1) + (B1.1.10), vorzugsweise (A) + Oxyfluorfen (B3.1.1) + Oryzalin (B1.1.10), insbesondere in Mengen von 1-800 g AS/ha (A) und 500-2000 g AS/ha (B3.1.1) und 1000-5000 g AS/ha (B1.1.10).

Die Mengenangaben sind Aufwandmengen (g AS/ha = Gramm Aktivsubstanz pro Hektar) ausgedrückt und definieren somit auch die Mengenverhältnisse in einer Koformulierung, einem Pre-mix, einem Tank-mix oder einer sequentiellen Applikation der kombinierten Wirkstoffe.

Die Kombinationen können sowohl im Vorauflaufverfahren als auch Nachauflaufverfahren angewendet werden. Dies gilt sowohl für Vor und Nachauflauf in Bezug auf die Schadpflanzen also auch bei der selektiven Bekämpfung der Schadpflanzen für den Vor- oder Nachauflauf der Kulturpflanzen. Es kommen dabei auch Mischformen in Frage, z. B. beim Nachauflauf der Kulturpflanzen die Bekämpfung der Schadpflanzen in deren Vor-oder Nachauflaufstadium.

Als weitere Kombinationspartner kommen auch kulturpflanzenschützende Wirkstoffe ("Safener" oder "Antidots" genannt) in Frage, welche phytotoxische Wirkungen der Herbizide an Kulturpflanzen reduzieren oder verhindern können. Folgende Gruppen von Verbindungen sind beispielsweise als Safener für die oben erwähnten herbiziden Wirkstoffe (A) bzw. Kombinationen von Herbiziden (A) und (B) bzw. allgemein in den erfindungsgemäßen Kombinationen geeignet:

a) Verbindungen vom Typ der Dichlorphenylpyrazolin-3-carbonsäure, vorzugsweise Verbindungen wie 1-(2,4-Dichlorphenyl)-5-(ethoxycarbonyl)-5-methyl-2-pyrazolin-3-carbonsäureethylester (S1-1) ("Mefenpyr-diethyl", PM, S. 622-623), und verwandte Verbindungen, wie sie in der WO 91/07874 beschrieben sind,
b) Derivate der Dichlorphenylpyrazolcarbonsäure, vorzugsweise Verbindungen wie 1-(2,4-Dichlorphenyl)-5-methyl-pyrazol-3-carbonsäureethylester (S1-2), 1-(2,4-Dichlorphenyl)-5-isopropyl-pyrazol-3-carbonsäureethylester (S1-3), 1-(2,4-Dichlorphenyl)-5-(1,1-dimethyl-ethyl)pyrazol-3-carbonsäureethyl-ester (S1-4), 1-(2,4-Dichlorphenyl)-5-phenyl-pyrazol-3-carbonsäureethylester (S1-5) und verwandte Verbindungen, wie sie in EP-A-333 131 und EP-A-269 806 beschrieben sind.
c) Verbindungen vom Typ der Triazolcarbonsäuren, vorzugsweise Verbindungen wie Fenchlorazol(-ethylester), d.h. 1-(2,4-Dichlorphenyl)-5-trichlormethyl-(1H)-1,2,4-triazol-3-carbonsäureethylester (S1-6), und verwandte Verbindungen (EP-A-174 562 und EP-A-346 620);
d) Verbindungen vom Typ der 5-Benzyl- oder 5-Phenyl-2-isoxazolin-3-carbonsäure, oder der 5,5-Diphenyl-2-isoxazolin-3-carbonsäure vorzugsweise Verbindungen wie 5-(2,4-Dichlorbenzyl)-2-isoxazolin-3-carbonsäureethylester (S1-7) oder 5-Phenyl-2-isoxazolin-3-carbonsäureethylester (S1-8) und verwandte Verbindungen, wie sie in WO 91/08202 beschrieben sind, bzw. der 5,5-Diphenyl-2-isoxazolin-carbonsäureethylester (S1-9) ("Isoxadifen-ethyl", PM, S. 588) oder -n-propylester (S1-10) oder der 5-(4-Fluorphenyl)-5-phenyl-2-isoxazolin-3-carbonsäureethylester (S1-11), wie sie in der deutschen Patentanmeldung (WO-A-95/07897) beschrieben sind.
e) Verbindungen vom Typ der 8-Chinolinoxyessigsäure (S2), vorzugsweise (5-Chlor-8-chinolinoxy)-essigsäure-(1-methyl-hex-1-yl)-ester (Common name "Cloquintocet-mexyl" (S2-1) (siehe PM, S. 196-197)

(5-Chlor-8-chinolinoxy)-essigsäure-(1,3-dimethyl-but-1-yl)-ester (S2-2),
(5-Chlor-8-chinolinoxy)-essigsäure-4-allyl-oxy-butylester (S2-3),
(5-Chlor-8-chinolinoxy)-essigsäure-1-allyloxy-prop-2-ylester (S2-4),
(5-Chlor-8-chinolinoxy)-essigsäureethylester (S2-5),
(5-Chlor-8-chinolinoxy)-essigsäuremethylester (S2-6),
(5-Chlor-8-chinolinoxy)-essigsäureallylester (S2-7),
(5-Chlor-8-chinolinoxy)-essigsäure-2-(2-propyliden-iminoxy)-1-ethylester (S2-8),
(5-Chlor-8-chinolinoxy)-essigsäure-2-oxo-prop-1 -ylester (S2-9) und verwandte Verbindungen, wie sie in EP-A-86 750, EP-A-94 349 und EP-A-191 736 oder EP-A-0 492 366 beschrieben sind.

f) Verbindungen vom Typ der (5-Chlor-8-chinolinoxy)-malonsäure, vorzugsweise Verbindungen wie (5-Chlor-8-chinolinoxy)-malonsäure-diethylester, (5-Chlor-8-chinolinoxy)-malonsäurediallylester,
(5-Chlor-8-chinolinoxy)-malonsäure-methyl-ethylester und verwandte Verbindungen, wie sie in EP-A-0 582 198 beschrieben sind.

g) Wirkstoffe vom Typ der Phenoxyessig- bzw. -propionsäurederivate bzw. der aromatischen Carbonsäuren, wie z.B. 2,4-Dichlorphenoxyessigsäure(ester) (2,4-D), 4-Chlor-2-methyl-phenoxy-propionester (Mecoprop), MCPA oder 3,6-Dichlor-2-methoxy-benzoesäure(ester) (Dicamba).

h) Wirkstoffe vom Typ der Pyrimidine, wie z. B.
"Fenclorim" (PM, S. 406) (= 4,6-Dichlor-2-phenylpyrimidin),

i) Wirkstoffe vom Typ der Dichloracetamide, wie z. B.
"Dichlormid" (PM, S. 284) (= N,N-Diallyl-2,2-dichloracetamid),
"R-29148" (= 3-Dichloracetyl-2,2,5-trimethyl-1,3-oxazolidin von der Firma Stauffer), "Benoxacor" (PM, S. 72-73) (= 4-Dichloracetyl-3,4-dihydro-3-methyl-2H-1,4-benzoxazin),
"PPG-1292" (= N-Allyl-N-[(1,3-dioxolan-2-yl)-methyl]-dichloracetamid von der Firma PPG Industries),
"DK-24" (= N-Allyl-N-[(allylaminocarbonyl)-methyl]-dichloracetamid von der Firma Sagro-Chem),
"AD-67" oder "MON 4660" (= 3-Dichloracetyl-1-oxa-3-aza-spiro[4,5]decan von der Firma Nitrokemia bzw. Monsanto),
"Diclonon" oder "BAS145138" oder "LAB145138" (= 3-Dichloracetyl-2,5,5-trimethyl-1,3-diazabicyclo[4.3.0]nonan von der Firma BASF) und
"Furilazol" oder "MON 13900" (siehe PM, 507) (= (RS)-3-Dichloracetyl-5-(2-furyl)-2,2-dimethyloxazolidin)

j) Wirkstoffe vom Typ der Dichloracetonderivate, wie z. B.
"MG 191" (CAS-Reg. Nr. 96420-72-3) (= 2-Dichlormethyl-2-methyl-1,3-dioxolan von der Firma Nitrokemia),

k) Wirkstoffe vom Typ der Oxyimino-Verbindungen, die als Saatbeizmittel bekannt sind, wie z. B.
"Oxabetrinil" (PM, S. 724-725) (= (Z)-1,3-Dioxolan-2-ylmethoxyimino(phenyl)acetonitril),
"Fluxofenim" (PM, S. 490) (= 1-(4-Chlorphenyl)-2,2,2-trifluor-1-ethanon-O-(1,3-dioxolan-2-ylmethyl)-oxim, und
"Cyometrinil" oder "-CGA-43089" (PM, S. 1056) (= (Z)-Cyanomethoxyimino(phenyl)acetonitril),

l) Wirkstoffe vom Typ der Thiazolcarbonsäureester, die als Saatbeizmittel bekannt sind, wie z. B.
"Flurazol" (PM, S. 473-474) (= 2-Chlor-4-trifluormethyl-1,3-thiazol-5-carbonsäurebenzylester), das als Saatbeiz-Safener für Hirse gegen Schäden von Alachlor und Metolachlor bekannt ist,

m) Wirkstoffe vom Typ der Naphthalindicarbonsäurederivate, die als Saatbeizmittel bekannt sind, wie z. B.
"Naphthalic anhydrid" (PM, S. 1083) (= 1,8-Naphthalindicarbonsäureanhydrid),

n) Wirkstoffe vom Typ Chromanessigsäurederivate, wie z. B.
"CL 304415" (CAS-Reg. Nr. 31541-57-8) (= 2-(4-Carboxy-chroman-4-yl)-essigsäure von der Firma American Cyanamid),

o) Wirkstoffe mit teilweiser herbizider Wirkung gegen Schadpflanzen, wie z. B. "Dimepiperate" oder "MY-93" (PM, S. 315-317) (= Piperidin-1-thiocarbonsäure-S-1-methyl-1-phenylethylester),
"Daimuron" oder "SK 23" (PM, S. 259) (= 1-(1-Methyl-1-phenylethyl)-3-p-tolylhamstoff),
"Cumyluron" = "JC-940" (= 3-(2-Chlorphenylmethyl)-1-(1-methyl-1-phenyl-ethyl)-harnstoff, siehe JP-A-60087254),
"Methoxyphenon" oder "NK 049" (= 3,3'-Dimethyl-4-methoxy-benzophenon), "CSB" (= 1-Brom-4-(chlormethylsulfonyl)-benzol) (CAS-Reg. Nr. 54091-06-4 von Kumiai),

p) N-Acylsulfonamide der Formel (S3) und ihre Salze,

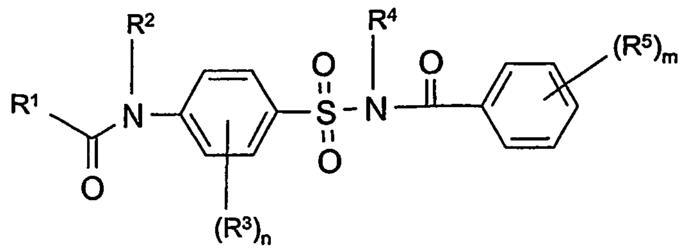

(S3)

wie sie aus WO-A-97/45016 bekannt sind und

q) Acylsulfamoylbenzamide der Formel (S4) oder deren Salze,

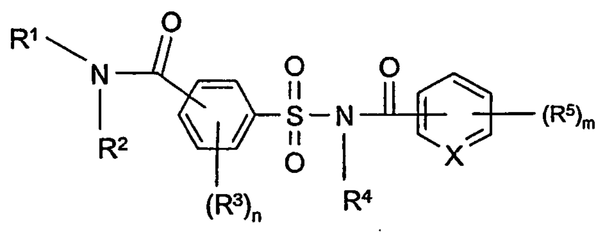

(S4)

wie sie aus WO-A-99/16744 bekannt sind, beispielsweise die Verbindung 4-(2-Methoxybenzoylsulfamoyl)-N-cyclopropylbenzamid (S3).

Von besonderem Interesse sind unter den genannten Safenern sind (S1-1), (S1-9), (S2-1) und (S3), insbesondere (S1-1) und (S1-9).

Einige der Safener sind oben bereits als Herbizide genannt und entfalten somit neben der Herbizidwirkung bei Schadpflanzen zugleich auch Schutzwirkung bei den Kulturpflanzen.

Jeder der genannten Safener der Gruppen a) bis q) kann als weiterer Wirkstoff (C) vorzugsweise mit einer der genannten Zweierkombinationen K1.1 bis K127.103, welche eine von der jeweiligen Verbindung (C) strukturell verschiedene Verbindung (B) enthält, nach dem Schema (A)+(B)+(C) kombiniert werden.

Die erfindungsgemäßen Herbizid-Kombinationen können weitere Komponenten enthalten, z. B. andere Wirkstoffe gegen Schadorganismen wie Schadpflanzen, pflanzenschädliche Tiere oder pflanzenschädliche Pilze, insbesondere dabei Wirkstoffe aus der Gruppe Herbizide, Fungizide, Insektizide, Akarizide, Nematizide und Mitizide und verwandte Stoffe.

Fungizid wirksame Verbindungen, die in Kombination mit den erfindungsgemäßen Herbizidkombinationen eingesetzt werden können, sind bevorzugt handelsübliche Wirkstoffe, beispielsweise (analog zu den Herbiziden werden die Verbindungen generell mit ihren Common names bezeichnet):

2-phenylphenol; 8-hydroxyquinoline sulfate; acibenzolar-S-methyl; actinovate; aldimorph; amidoflumet; ampropylfos; ampropylfos-potassium; andoprim; anilazine; azaconazole; azoxystrobin; benalaxyl; benodanil; benomyl; benthiavalicarbisopropyl; benzamacril; benzamacril-isobutyl; binapacryl; biphenyl; bitertanol; blasticidin-S; boscalid; bromuconazole; bupirimate; buthiobate; butylamine; calcium polysulfide; capsimycin; captafol; captan; carbendazim; carboxin; carpropamid; carvone; chinomethionat; chlobenthiazone; chlorfenazole; chloroneb; chlorothalonil; chlozolinate; cis-1-(4-chlorophenyl)-2-(1H-1,2,4-triazol-1-yl)cycloheptanol; clozylacon; cyazofamid; cyflufenamid; cymoxanil; cyproconazole; cyprodinil; cyprofuram; Dagger G; debacarb; dichlofluanid; dichlone; dichlorophen; diclocymet; diclomezine; dicloran; diethofencarb; difenoconazole; diflumetorim; dimethirimol; dimethomorph; dimoxystrobin; diniconazole; diniconazole-M; dinocap; diphenylamine; dipyrithione; ditalimfos; dithianon; dodine; drazoxolon; edifenphos; epoxiconazole; ethaboxam; ethirimol; etridiazole; famoxadone; fenamidone; fenapanil; fenarimol; fenbuconazole; fenfuram; fenhexamid; fenitropan; fenoxanil; fenpiclonil; fenpropidin; fenpropimorph; ferbam; fluazinam; flubenzimine; fludioxonil; flumetover; flumorph; fluoromide; fluoxastrobin; fluquinconazole; flurprimidol; flusilazole; flusulfamide; flutolanil; flutriafol; folpet; fosetyl-Al; fosetyl-sodium; fuberidazole; furalaxyl; furametpyr; furcarbanil; furmecyclox; guazatine; hexachlorobenzene; hexaconazole; hymexazol; imazalil; imibenconazole; iminoctadine triacetate; iminoctadine tris(albesilate); iodocarb; ipconazole; iprobenfos; iprodione; iprovalicarb; irumamycin; isoprothiolane; isovaledione; kasugamycin; kresoxim-methyl; mancozeb; maneb; meferimzone; mepanipyrim; mepronil; metalaxyl; metalaxyl-M; metconazole; methasulfocarb; methfuroxam; methyl 1-(2,3-dihydro-2,2-dimethyl-1H-inden-1-yl)-1H-imidazole-5-carboxylate; methyl 2-[[[cyclopropyl[(4-methoxyphenyl)imino]methyl]thio]methyl]-.alpha.-(methoxymethylene)benzeneacetate; methyl 2-[2-[3-(4-chlorophenyl)-1-methyl-allylideneaminooxymethyl]phenyl]-3-methoxyacrylate; metiram; metominostrobin; metrafenone; metsulfovax; mildiomycin; monopotassium carbonate; myclobutanil; myclozolin; nabam, N-(3-ethyl-3,5,5-trimethylcyclohexyl)-3-formylamino-2-hydroxy-benzamide; N-(6-methoxy-3-pyridinyl)cyclopropanecarboxamide; N-butyl-8-(1,1-dimethylethyl)-1-oxaspiro[4.5]decan-3-amine; natamycin; nitrothal-isopropyl; noviflumuron; nuarimol; ofurace; orysastrobin; oxadixyl; oxolinic acid; oxpoconazole; oxycarboxin; oxyfenthiin; paclobutrazol; pefurazoate; penconazole; pencycuron; penthiopyrad; phosdiphen; phthalide; picobenzamid; picoxystrobin; piperalin; polyoxins; polyoxorim; probenazole; prochloraz; procymidone; propamocarb; propanosine-sodium; propiconazole; propineb; proquinazid; prothioconazole; pyraclostrobin; pyrazophos; pyrifenox; pyrimethanil; pyroquilon; pyroxyfur; pyrrolnitrine; quinconazole; quinoxyfen; quintozene; silthiofam; simeconazole; sodium tetrathiocarbonate; spiroxamine; sulfur; tebuconazole; tecloftalam; tecnazene; tetcyclacis; tetraconazole; thiabendazole; thicyofen; thifluzamide; thiophanate-methyl; thiram; tiadinil; tioxymid; tolclofos-methyl; tolylfluanid; triadimefon; triadimenol; triazbutil; triazoxide; tricyclamide; tricyclazole; tridemorph; trifloxystrobin; triflumizole; triforine; triticonazole; uniconazole; validamycin A; vinclozolin; zineb; ziram; zoxamide; (2S)-N-[2-[4-[[3-(4-chlorophenyl)-2-propynyl]oxy]-3-methoxyphenyl]ethyl]-3-methyl- 2-[(methylsulfonyl)amino]-butanamide; 1-(1-naphthalenyl)-1 H-pyrrole-2,5-dione; 2,3,5,6-tetrachloro-4-(methylsulfonyl)pyridine; 2,4-dihydro-5-methoxy-2-methyl-4-[[[[1-[3-(trifluoro-methyl)phenyl]ethylidene]amino]oxy]methyl]phenyl]-3H-1,2,3-triazol-3-one; 2-amino-4-methyl-N-phenyl-5-thiazolecarboxamide; 2-chloro-N-(2,3-dihydro-1,1,3-trimethyl-1 H-inden-4-yl)-3-pyridinecarboxamide; 3,4,5-trichloro-2,6-pyridinedicarbonitrile; 3-[(3-bromo-6-fluoro-2-methyl-1 H-indol-1-yl)sulfonyl]-N,N-dimethyl-1H-1,2,4-triazole-1-sulfonamide; copper salts and copper preparations, such as Bordeaux mixture; copper hydroxide; copper naphthenate; copper oxychloride; copper sulfate; cufraneb; copper(I) oxide; mancopper; oxine-copper.

Bevorzugte Fungizide sind ausgewählt aus der Gruppe bestehend aus Benalaxyl, Bitertanol, Bromuconazol, Captafol, Carbendazim, Carpropamid, Cyazofamid, Cyproconazol, Diethofencarb, Edifenphos, Fenpropimorph, Fentine, Fluquinconazol, Fosetyl, Fluoroimide, Folpet, Iminoctadine, Iprodionem, Iprovalicarb, Kasugamycin, Maneb, Nabam, Pencycuron, Prochloraz, Propamocarb, Propineb, Pyrimethanil, Sprioxamine, Quintozene, Tebuconazole, Tolylfluanid, Triadimefon, Triadimenol, Trifloxystrobin, Zineb.

Insektizide, akarizide, nematizide, mitizide und verwandte Wirkstoffe sind, beispielsweise (analog zu den Herbiziden und Fungiziden werden die Verbindungen nach Möglichkeit mit ihren Common names bezeichnet):
alanycarb, aldicarb, aldoxycarb, allyxycarb, aminocarb, bendiocarb, benfuracarb, bufencarb, butacarb, butocarboxim, butoxycarboxim, carbaryl, carbofuran, carbosulfan, cloethocarb, dimetilan, ethiofencarb, fenobucarb, fenothiocarb, formetanate, furathiocarb, isoprocarb, metam-sodium, methiocarb, methomyl, metolcarb, oxamyl, pirimicarb, promecarb, propoxur, thiodicarb, thiofanox, trimethacarb, XMC, xylylcarb, acephate, azamethiphos, azinphos (-methyl, -ethyl), bromophos-ethyl, bromfenvinfos (-methyl), butathiofos, cadusafos, carbophenothion, chlorethoxyfos, chlorfenvinphos, chlormephos, chlorpyrifos (-methyl/-ethyl), coumaphos, cyanofenphos, cyanophos, chlorfenvinphos, demeton-S-methyl, demeton-S-methylsulphon, dialifos, diazinon, dichlofenthion, dichlorvos/DDVP, dicrotophos, dimethoate, dimethylvinphos, dioxabenzofos, disulfoton, EPN, ethion, ethoprophos, etrimfos, famphur, fenamiphos, fenitrothion, fensulfothion, fenthion, flupyrazofos, fonofos, formothion, fosmethilan, fosthiazate, heptenophos, iodofenphos, iprobenfos, isazofos, isofenphos, isopropyl O-salicylate, isoxathion, malathion, mecarbam, methacrifos, methamidophos, methidathion, mevinphos, monocrotophos, naled, omethoate, oxydemeton-methyl, parathion (-methyl/-ethyl), phenthoate, phorate, phosalone, phosmet, phosphamidon, phosphocarb, phoxim, pirimiphos (-methyl/-ethyl), profenofos, propaphos, propetamphos, prothiofos, prothoate, pyraclofos, pyridaphenthion, pyridathion, quinalphos, sebufos, sulfotep, sulprofos, tebupirimfos, temephos, terbufos, tetrachlorvinphos, thiometon, triazophos, triclorfon, vamidothion, acrinathrin, allethrin (d-cis-trans, d-trans), betacyfluthrin, bifenthrin, bioallethrin, bioallethrin-S-cyclopentyl-isomer, bioethanomethrin, biopermethrin, bioresmethrin, chlovaporthrin, cis-cypermethrin, cis-resmethrin, cis-permethrin, clocythrin, cycloprothrin, cyfluthrin, cyhalothrin, cypermethrin (alpha-, beta-, theta-, zeta-), cyphenothrin, deltamethrin, empenthrin (1 R-isomer), esfenvalerate, etofenprox, fenfluthrin, fenpropathrin, fenpyrithrin, fenvalerate, flubrocythrinate, flucythrinate, flufenprox, flumethrin, fluvalinate, fubfenprox, gamma-cyhalothrin, imiprothrin, kadethrin, lambda-cyhalothrin, metofluthrin, permethrin (cis-, trans-), phenothrin (1 R-trans isomer), prallethrin, profluthrin, protrifenbute, pyresmethrin, resmethrin, RU 15525, silafluofen, taufluvalinate, tefluthrin, terallethrin, tetramethrin (-1 R- isomer), tralomethrin, transfluthrin, ZXI 8901, pyrethrins (pyrethrum), DDT, indoxacarb, acetamiprid, clothianidin, dinotefuran, imidacloprid, nitenpyram, nithiazine, thiacloprid, thiamethoxam, nicotine, bensultap, cartap, camphechlor, chlordane, endosulfan, gamma-HCH, HCH, heptachlor, lindane, methoxychlor spinosad, acetoprole, ethiprole, fipronil, vaniliprole, avermectin, emamectin, emamectin-benzoate, ivermectin, milbemycin, diofenolan, epofenonane, fenoxycarb, hydroprene, kinoprene, methoprene, pyriproxifen, triprene, chromafenozide, halofenozide, methoxyfenozide, tebufenozide, bistrifluron, chlofluazuron, diflubenzuron, fluazuron, flucycloxuron, flufenoxuron, hexaflumuron, lufenuron, novaluron, noviflumuron, penfluron, teflubenzuron, triflumuron, buprofezin, cyromazine, diafenthiuron, azocyclotin, cyhexatin, fenbutatin-oxide, chlorfenapyr, binapacyrl, dinobuton, dinocap, DNOC, fenazaquin, fenpyroximate, pyrimidifen, pyridaben, tebufenpyrad, tolfenpyrad, hydramethylnon, dicofol, rotenone, acequinocyl, fluacrypyrim, Bacillus thuringiensis strains, spirodiclofen, spiromesifen, 3-(2,5-dimethylphenyl)-8-methoxy-2-oxo-1-azaspiro[4.5]dec-3-en-4-yl ethyl carbonate (alias: carbonic acid, 3-(2,5-dimethylphenyl)-8-methoxy-2-oxo-1-azaspiro[4.5]dec-3-en-4-yl ethyl ester, CAS-Reg.-No.: 382608-10-8) and carbonic acid, cis-3-(2,5-dimethylphenyl)-8-methoxy-2-oxo-1-azaspiro[4.5]dec-3-en-4-yl ethyl ester (CAS-Reg.-No.: 203313-25-1), flonicamid, amitraz, propargite, N2-[1,1-dimethyl-2-(methylsulfonyl)ethyl]-3-iodo-N1-[2-methyl-4-[1,2,2,2-tetrafluoro-1-(trifluoromethyl)ethyl]phenyl]-1,2-benzenedicarboxamide (CAS-Reg.-No.: 272451-65-7), thiocyclam hydrogen oxalate, thiosultap-sodium, azadirachtin, Bacillus spec., Beauveria spec., codlemone, Metarrhizium spec., Paecilomyces spec., thuringiensin, Verticillium spec., aluminum phosphide, methyl bromide, sulfuryl fluoride, cryolite, flonicamid, pymetrozine, clofentezine, etoxazole, hexythiazox, amidoflumet, benclothiaz, benzoximate, bifenazate, bromopropylate, buprofezin, chinomethionat, chlordimeform, chlorobenzilate, chloropicrin, clothiazoben, cycloprene, dicyclanil, fenoxacrim, fentrifanil, flubenzimine, flufenerim, flutenzin, gossyplure, hydramethylnone, japonilure, metoxadiazone, petroleum, piperonyl butoxide, potassium oleate, pyridalyl, sulfluramid, tetradifon, tetrasul, triarathene, verbutin.

Insektizide, die bevorzugt gemeinsam mit den Herbiziden eingesetzt werden können, sind beispielsweise folgende:
Acetamiprid, Acrinathrin, Aldicarb, Amitraz, Acinphos-methyl, Cyfluthrin, Carbaryl, Cypermethrin, Deltamethrin, Endosulfan, Ethoprophos, Fenamiphos, Fenthion, Fipronil, Imidacloprid, Methamidophos, Methiocarb, Niclosamide, Oxydemeton-methyl, Prothiophos, Silafluofen, Thiacloprid, Thiodicarb, Tralomethrin, Triazophos, Trichlorfon, Triflumuron, Terbufos, Fonofos, Phorate, Chlorpyriphos, Carbofuran, Tefluthrin.

Die erfindungsgemäßen Wirkstoffkombinationen sind zur Bekämpfung eines breiten Unkrautspektrums im Nichtkulturland, auf Wegen, Gleisanlagen, Industrieflächen ("industrial weed control") oder in Plantagenkulturen wie gemäßigten, subtropischen und tropischen Klimaten oder Geographien geeignet. Beispiele für Plantagenkulturen sind Ölpalme, Nüsse (z. B. Mandeln, Haselnüsse, Walnüsse, Macademia), Kokosnuss, Beeren, Ölpalme, Gummibaum, Citrus (z. B. Orange, Zitrone, Mandarine), Bananen, Ananas, Baumwolle, Zuckerrohr, Tee, Kaffee, Kakao und Ähnliches. Ebenso sind sie für die Anwendung im Obstbau (z. B. Kernobst wie Apfel, Birne, Kirsche, Mango, Kiwi) und Weinbau geeignet. Die Mittel können auch zur Saatvorbereitung ("bum-down-" "no-till"- oder "zero-till"-Methode) oder zur Behandlung nach der Ernte ("chemical fallow") eingesetzt werden. Die Anwendungsmöglichkeiten der Wirkstoffkombinationen erstrecken sich auch zur Unkrautkontrolle in Baumkulturen, z. B. jungen Christbaumkulturen oder Eukalyptus-Anlagen, jeweils vor der Einpflanzung oder nach der Verpflanzung (auch mit Überkopfbehandlung, "over-top").
Auch können die Mittel in ausgewählten Kulturen wirtschaftlich wirtschaftlich bedeutenden Kulturen wie Getreide (Weizen, Gerste, Roggen), Mais, Reis, Zuckerrübe, Zuckerrohr, Raps, Baumwolle und Soja eingesetzt werden. Bei Anwendung der Wirkstoffe (A) und (B) in Pflanzenkulturen wie Getreide und Mais ist es je nach Pflanzenkultur zweckmäßig, ab bestimmter Aufwandmengen einen Safener zu applizieren, um Schäden an der Kulturpflanze zu reduzieren oder zu vermeiden.

Die erfindungsgemäßen Mehrfachkombinationen (= herbiziden Mittel) weisen Synergien hinsichtlich der Herbizidwirkung und Selektivität und günstige Wirkung bezüglich des Unkrautspektums auf. Sie weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden durch die Wirkstoffe gut erfaßt. Dabei ist es gleichgültig, ob die Substanzen im Vorsaat-, Vorauflauf- oder Nachauflaufverfahren ausgebracht werden. Bevorzugt ist die Anwendung im frühen Nachsaat-Vorauflaufverfahren oder im Nachauflaufverfahren von Plantagenkulturen gegen noch nicht aufgelaufene oder bereits aufgelaufene Schadpflanzen auf. Die Anwendung kann auch in Unkrautmanagment-Systemen (weed-management) mit geteilten mehrfachen Anwendungen (Sequenzanwendungen, "sequentials") integriert werden.

Im Einzelnen seien beispielhaft einige Vertreter der mono- und dikotylen Unkrautflora genannt, die durch die erfindungsgemäßen Wirkstoffkombinationen kontrolliert werden können, ohne daß durch die Nennung eine Beschränkung auf bestimmte Arten erfolgen soll.

Auf der Seite der monokotylen Unkrautarten werden z.B. Agrostis, Alopecurus, Apera, Avena, Brachicaria, Bromus, Dactyloctenium, Digitaria, Echinochloa, Eleocharis, Eleusine, Festuca, Fimbristylis, Ischaemum, Lolium, Monochoria, Panicum, Paspalum, Phalaris, Phleum, Poa, Sagittaria, Scirpus, Setaria, Sphenoclea und Cyperus-arten von der annuellen Gruppe erfasst und, auf der Seite der perennierenden Ungräser Agropyron, Cynodon, Imperata und Sorghum und auch perennierende Cyperus-Arten erfasst.

Bei dikotylen Unkrautarten erstreckt sich das Wirkungsspektrum auf Arten wie z.B. Galium, Viola, Veronica, Lamium, Stellaria, Amaranthus, Sinapis, Ipomoea, Matricaria, Abutilon und Sida bei den annuellen und Convolvulus, Cirsium, Rumex und Artemisia bei den perennierenden Unkräutern.

Herbizide Wirkung wird auch bei dikotylen Schadpflanzen wie Ambrosia, Anthemis, Carduus, Centaurea, Chenopodium, Datura, Emex, Galeopsis, Galinsoga, Kochia, Lepidium, Lindernia, Papaver, Portlaca, Polygonum, Ranunculus, Rorippa, Rotala, Seneceio, Sesbania, Solanum, Sonchus, Taraxacum, Trifolium, Urtica und Xanthium beobachtet.

Werden die erfindungsgemäßen Wirkstoffkombinationen vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der Wirkstoffe auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Die erfindungsgemäßen herbiziden Mittel zeichnen sich durch eine schnell einsetzende und lang andauernde herbizide Wirkung aus. Die Regenfestigkeit der Wirkstoffe in den erfindungsgemäßen Kombinationen ist in der Regel günstig. Als besonderer Vorteil fällt ins Gewicht, daß die in den Kombinationen verwendeten und wirksamen Dosierungen von Verbindungen (A) und (B) so gering eingestellt werden können, daß ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäßen Kombination von Wirkstoffen wird eine erhebliche Reduzierung der nötigen Aufwandmenge der Wirkstoffe ermöglicht.

Bei der gemeinsamen Anwendung von Herbiziden des Typs (A)+(B) treten überadditive (= synergistische) Effekte auf. Dabei ist die Wirkung in den Kombinationen stärker als die zu erwartende Summe der Wirkungen der eingesetzten Einzelherbizide. Die synergistischen Effekte erlauben eine Reduzierung der Aufwandmenge, die Bekämpfung eines breiteren Spektrums von Unkräutern und Ungräsern, einen schnelleren Einsatz der herbiziden Wirkung, eine längere Dauerwirkung, eine bessere Kontrolle der Schadpflanzen mit nur einer bzw. wenigen Applikationen sowie eine Ausweitung des möglichen Anwendungszeitraumes. Teilweise wird durch den Einsatz der Mittel auch die Menge an schädlichen Inhaltsstoffen, wie Stickstoff oder Ölsäure, und deren Eintrag in den Boden reduziert.

Die genannten Eigenschaften und Vorteile sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Kombinationen hinsichtlich der beschriebenen Eigenschaften deutlich übertroffen.

Obgleich die erfindungsgemäßen Kombinationen eine ausgezeichnete herbizide Aktivität gegenüber mono- und dikotylen Unkräutern aufweisen, werden die Kulturpflanzen nur unwesentlich oder gar nicht geschädigt.

Darüberhinaus weisen die erfindungsgemäßen Mittel teilweise hervorragende wachstumsregulatorische Eigenschaften bei den Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann. Aufgrund ihrer herbiziden und pflanzenwachstumsregulatorischen Eigenschaften können die Mittel zur Bekämpfung von Schadpflanzen in bekannten Pflanzenkulturen oder noch zu entwickelnden toleranten oder gentechnisch veränderten Kulturpflanzen eingesetzt werden. Die transgenen Pflanzen zeichnen sich in der Regel durch besondere vorteilhafte Eigenschaften aus, neben den Resistenzen gegenüber den erfindungsgemäßen Mitteln beispielsweise durch Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt.

Herkömmliche Wege zur Herstellung neuer Pflanzen; die im Vergleich zu bisher vorkommenden Pflanzen modifizierte Eigenschaften aufweisen, bestehen beispielsweise in klassischen Züchtungsverfahren und der Erzeugung von Mutanten. Alternativ können neue Pflanzen mit veränderten Eigenschaften mit Hilfe gentechnischer Verfahren erzeugt werden (siehe z. B. EP-A-0221044, EP-A-0131624). Beschrieben wurden beispielsweise in mehreren Fällen

- gentechnische Veränderungen von Kulturpflanzen zwecks Modifikation der in den Pflanzen synthetisierten Stärke (z. B. WO 92/11376, WO 92/14827, WO 91/19806),
- transgene Kulturpflanzen, welche Resistenzen gegen andere Herbizide aufweisen, beispielsweise gegen Sulfonylharnstoffe (EP-A-0257993, US-A-5013659),
- transgene Kulturpflanzen, mit der Fähigkeit
  Bacillus thuringiensis-Toxine (Bt-Toxine) zu produzieren, welche die Pflanzen gegen bestimmte Schädlinge resistent machen (EP-A-0142924, EP-A-0193259).
- transgene Kulturpflanzen mit modifizierter Fettsäurezusammensetzung (WO 91/13972).

Zahlreiche molekularbiologische Techniken, mit denen neue transgene Pflanzen mit veränderten Eigenschaften hergestellt werden können, sind im Prinzip bekannt; siehe z.B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996 oder Christou, "Trends in Plant Science" 1 (1996) 423-431).

Für derartige gentechnische Manipulationen können Nucleinsäuremoleküle in Plasmide eingebracht werden, die eine

Mutagenese oder eine Sequenzveränderung durch Rekombination von DNA-Sequenzen erlauben. Mit Hilfe der obengenannten Standardverfahren können z. B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codiereden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z. B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106).

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h. sowohl monokotyle als auch dikotyle Pflanzen. So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Gegenstand der Erfindung ist deshalb auch ein Verfahren zur Bekämpfung von unerwünschtem Pflanzenwuchs, vorzugsweise im Nichtkulturland oder in Plantagenkulturen, dadurch gekennzeichnet, daß man ein oder mehrere Herbizide des Typs (A) mit einem oder mehreren Herbiziden des Typs (B) auf die Schadpflanzen, Pflanzenteile oder Pflanzensamen davon oder die Anbaufläche appliziert.

Gegenstand der Erfindung ist auch die Verwendung der neuen Kombinationen aus Verbindungen (A)+(B) zur Bekämpfung von Schadpflanzen, vorzugsweise in Nichtkulturland und Plantagenkulturen.

Die erfindungsgemäßen Wirkstoffkombinationen können sowohl als Mischformulierungen der zwei Komponenten, gegebenenfalls mit weiteren Wirkstoffen, Zusatzstoffen und/oder üblichen Formulierungshilfsmitteln vorliegen, die dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden.

Die Verbindungen (A) und (B) oder deren Kombinationen können auf verschiedene Art formuliert werden, je nachdem welche biologischen und/oder chemischphysikalischen Parameter vorgegeben sind. Als allgemeine Formulierungsmöglichkeiten kommen beispielsweise in Frage: Spritzpulver (WP), emulgierbare Konzentrate (EC), wäßrige Lösungen (SL), Emulsionen (EW) wie Ölin-Wasser- und Wasser-in-Öl-Emulsionen, versprühbare Lösungen oder Emulsionen, Dispersionen auf Öl- oder Wasserbasis,Öldispersionen (OD), Suspoemulsionen, Suspensionskonzentrate (SC), Stäubemittel (DP), Beizmittel, Granulate zur Boden- oder Streuapplikation oder wasserdispergierbare Granulate (WG), ULV-Formulierungen, Mikrokapseln oder Wachse.

Die einzelnen Formulierungstypen sind im Prinzip bekannt und werden beispielsweise beschrieben in: Winnacker-Küchler, "Chemische Technologie", Band 7, C. Hanser Verlag München, 4. Aufl. 1986; van Valkenburg, "Pesticides Formulations", Marcel Dekker N.Y., 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1950; McCutcheon's, "Detergents and Emulsifiers Annual", MC Publ. Corp., Ridegewood N.J.; Sisley and Wood, "Encyclopedia of Surface Active Egents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hanser Verlag München, 4. Aufl. 1986.

Auf der Basis dieser Formulierungen lassen sich auch Kombinationen mit anderen pestizid wirksamen Stoffen, wie anderen Herbiziden, Fungiziden oder Insektiziden, sowie Safenern, Düngemitteln und/oder Wachstumsregulatoren herstellen, z.B. in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Tenside ionischer oder nichtionischer Art (Netzmittel, Dispergiermittel),

z.B. polyoxethylierte Alkylphenole, polyethoxylierte Fettalkohole oder -Fettamine, Alkansulfonate oder Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten.

Emulgierbare Konzentrate werden durch Auflösen des Wirkstoffs in einem organischen Lösungsmittel, z.B. Butanol, Cyclohexanon, Dimethylformamid, Xylol oder auch höhersiedenden Aromaten oder Kohlenwasserstoffe unter Zusatz von einem oder mehreren ionischen oder nichtionischen Tensiden (Emulgatoren) hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach Verfahren wie Sprühtrocknung, Wirbelbett-Granulierung, Teller-Granulierung, Mischung mit Hochgeschwindigkeitsmischern und Extrusion ohne festes Inertmaterial hergestellt.

Die agrochemischen Zubereitungen enthalten in der Regel 0,1 bis 99 Gewichtsprozent, insbesondere 2 bis 95 Gew.-%, Wirkstoffe der Typen A und/oder B, wobei je nach Formulierungsart folgende Konzentrationen üblich sind: In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration z.B. 5 bis 80 Gew.-%, betragen.

Staubförmige Formulierungen enthalten meistens 5 bis 20 Gew.-% an Wirkstoff, versprühbare Lösungen etwa 0,2 bis 25 Gew.-% Wirkstoff.

Bei Granulaten wie dispergierbaren Granulaten hängt der Wirkstoffgehalt zum Teil davon ab, ob die wirksame Verbindung flüssig oder fest vorliegt und welche Granulierhilsmittel und Füllstoffe verwendet werden. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Konservierungs-, Frostschutz- und Lösungsmittel, Füll-, Farb- und Trägerstoffe, Entschäumer, Verdunstungshemmer und Mittel, die den pH-Wert oder die Viskosität beeinflussen.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Die Wirkstoffe können auf die Pflanzen, Pflanzenteile, Pflanzensamen oder die Anbaufläche (Ackerboden) ausgebracht werden, vorzugsweise auf die grünen Pflanzen und Pflanzenteile und gegebenenfalls zusätzlich auf den Ackerboden. Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame herbizide Formulierung der erfindungsgemäßen Kombination an Wirkstoffen (A) und (B) hat den Vorteil der leichteren Anwendbarkeit, weil die Mengen der Komponenten bereits im richtigen Verhältnis zueinander eingestellt sind. Außerdem können die Hilfsmittel in der Formulierung aufeinander optimal abgestimmt werden, während ein Tank-mix von unterschiedlichen Formulierungen unerwünschte Kombinationen von Hilfstoffen ergeben kann.

A. Formulierungsbeispiele allgemeiner Art

a) Ein Stäubemittel wird erhalten, indem man 10 Gew.-Teile eines Wirkstoffs/Wirksstoffgemischs und 90 Gew.-Teile Talkum als Inertstoff mischt und in einer Schlagmühle zerkleinert.

b) Ein in Wasser leicht dispergierbares, benetzbares Pulver wird erhalten, indem man 25 Gew.-Teile eines Wirkstoffs/ Wirksstoffgemischs, 64 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gew.-Teile eines Wirkstoffs/Wirksstoffgemischs mit 6 Gew.-Teilen Alkylphenolpolyglykolether (®Triton X 207), 3 Gew.-Teilen Isotridecanolpolyglykolether (8 EO) und 71 Gew.-Teilen paraffinischem Mineralöl (Siedebereich z.B. ca. 255 bis 277 C) mischt und in einer Reibkugelmühle auf eine Feinheit von unter 5 Mikron vermahlt.

d) Ein emulgierbares Konzentrat wird erhalten aus 15 Gew.-Teilen eines Wirkstoffs/Wirksstoffgemischs, 75 Gew.-Teilen Cyclohexanon als Lösemittel und 10 Gew.-Teilen oxethyliertem Nonylphenol als Emulgator.

e) Ein in Wasser dispergierbares Granulat wird erhalten indem man
75 Gew.-Teile eines Wirkstoffs/Wirksstoffgemischs,
10 Gew.-Teile ligninsulfonsaures Calcium,
5 Gew.-Teile Natriumlaurylsulfat,
3 Gew.-Teile Polyvinylalkohol und
7 Gew.-Teile Kaolin
mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man
25 Gew.-Teile eines Wirkstoffs/Wirksstoffgemischs,
5 Gew.-Teile 2,2'-dinaphthylmethan-6,6'-disulfonsaures Natrium,
2 Gew.-Teile oleoylmethyltaurinsaures Natrium,
1 Gew.-Teil Polyvinylalkohol,
17 Gew.-Teile Calciumcarbonat und
50 Gew.-Teile Wasser
auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

B. Biologische Beispiele

1. Unkrautwirkung im Vorauflauf

Samen bzw. Rhizomstücke von mono- und dikotylen Unkrautpflanzen werden in Töpfen in sandiger Lehmerde ausgelegt und mit Erde abgedeckt. Die in Form von konzentrierten wäßrigen Lösungen, benetzbaren Pulvern oder Emulsionskonzentraten formulierten Mittel werden dann als wäßrige Lösung, Suspension bzw. Emulsion mit einer Wasseraufwandmenge von umgerechnet 300 bis 800 1/ha in unterschiedlichen Dosierungen auf die Oberfläche der Abdeckerde appliziert. Nach der Behandlung werden die Töpfe im Gewächshaus aufgestellt und unter guten Wachstumsbedingungen für die Unkräuter gehalten. Die optische Bonitur der Pflanzen- bzw. Auflaufschäden erfolgt nach dem Auflaufen der Versuchspflanzen nach einer Versuchszeit von 3 bis 4 Wochen im Vergleich zu unbehandelten Kontrollen. Wie die Testergebnisse zeigen, weisen die erfindungsgemäßen Mittel eine gute herbizide Vorauflaufwirksamkeit gegen ein breites Spektrum von Ungräsern und Unkräutern auf.

Bonitur und Bewertung der synergistischen Herbizidwirkungen: Die herbizide Wirksamkeit der Wirkstoffe bzw. Wirkstoffmischungen wurde anhand der behandelten Töpfe (Böden) im Vergleich zu unbehandelten Kontrollen visuell bonitiert. Dabei wurde Schädigung und Entwicklung aller oberirdischen Pflanzenteile erfaßt. Die Bonitierung erfolgte nach einer Prozentskala (100% Wirkung = alle Plfanzen abgestorben bzw. nicht aufgelaufen; 50 % Wirkung = 50% der Pflanzen und grünen Pflanzenteile abgestorben bzw. nicht aufgelaufen; 0 % Wirkung = keine erkennbare Wirkung = wie Kontrollparzelle). Die Boniturwerte von jeweils 4 Wiederholungen (Töpfen) wurden gemittelt.

Bei der Anwendung der erfindungsgemäßen Kombinationen werden häufig herbizide Wirkungen an einer Schadpflanzenspezies beobachtet, die die formale Summe der Wirkungen der enthaltenen Herbizide bei alleiniger Applikation übertreffen. Alternativ kann in manchen Fällen beobachtet werden, daß eine geringere Aufwandmenge für die Herbizid-Kombination benötigt wird, um im Vergleich zu den Einzelpräparaten dieselbe Wirkung bei einer Schadpflanzenspezies zu erzielen. Derartige Wirkungssteigerungen bzw. Effektivitätssteigerungen oder Einsparungen an Aufwandmenge sind ein starker Hinweis auf synergistische Wirkung.
Wenn die beobachteten Wirkungswerte bereits die formale Summe der Werte zu den Versuchen mit Einzelapplikationen übertreffen, dann übertreffen sie den Erwartungswert nach Colby ebenfalls, der sich nach folgender Formel errechnet und ebenfalls als Hinweis auf Synergismus angesehen wird (vgl. S. R. Colby; in Weeds 15 (1967) S. 20 bis 22):

$$E = A+B-(A \cdot B/100)$$

Dabei bedeuten:

A = Wirkung des Wirkstoffs (A) in % bei einer Aufwandmenge von a g AS/ha;
B = Wirkung des Wirkstoffs (B) in % bei einer Aufwandmenge von b g AS/ha;
E = Erwartungswert der Wirkung der Kombination (A)+(B) in % bei der kombinierten Aufwandmenge a+b g AS/ha.

Die beobachteten Werte der Versuche zeigen bei geeigneten niedrigen Dosierungen eine Wirkung der Kombinationen, die über den Erwartungswerten nach Colby liegen.

2. Unkrautwirkung im Nachauflauf

Samen bzw. Rhizomstücke von mono- und dikotylen Unkräutern werden in Töpfen in sandigem Lehmboden ausgelegt, mit Erde abgedeckt und im Gewächshaus unter guten Wachstumsbedingungen (Temperatur, Luftfeuchtigkeit, Wasserversorgung) angezogen. Drei Wochen nach der Aussaat werden die Versuchspflanzen im Dreiblattstadium mit den erfindungsgemäßen Mitteln behandelt. Die als Spritzpulver bzw. als Emulsionskonzentrate formulierten erfindungsgemäßen Mittel werden in verschiedenen Dosierungen mit einer Wasseraufwandmenge von umgerechnet 300 bis 800 l/ha auf die grünen Pflanzenteile gesprüht. Nach ca. 3 bis 4 Wochen Standzeit der Versuchspflanzen im Gewächshaus unter optimalen Wachstumsbedingungen wird die Wirkung der Präparate optisch im Vergleich zu unbehandelten Kontrollen bonitiert (Bonitur wie in Beispiel 1). Die erfindungsgemäßen Mittel weisen auch im Nachauflauf eine gute herbizide Wirksamkeit gegen ein breites Spektrum wirtschaftlich wichtiger Ungräser und Unkräuter auf.
Dabei werden häufig Wirkungen der erfindungsgemäßen Kombinationen beobachtet, die die formale Summe der Wirkungen bei Einzelapplikation der Herbizide übertreffen. Die beobachteten Werte der Versuche zeigen bei geeigneten niedrigen Dosierungen eine Wirkung der Kombinationen, die über den Erwartungswerten nach Colby (vgl. Bonitur in Beispiel 1) liegen.

3. Herbizide Wirkung im Vor- und Nachauflauf (Feldversuche)

Entsprechend den Gewächshausversuchen der Abschnitte 1 und 2 wurden die Versuche auf Parzellen in Freiland durchgeführt. Die Bonitur erfolgte analog den Versuchen in Abschnitten 1 und 2.

4. Herbizide Wirkung und Kulturpflanzenverträglichkeit (Feldversuche)

Kulturpflanzen wurden im Freiland auf Parzellen unter natürlichen Freilandbedingungen herangezogen, wobei Samen oder Rhizomstücke von typischen Schadpflanzen ausgelegt worden waren bzw. die natürliche Verunkrautung genutzt wurde. Die Behandlung mit den erfindungsgemäßen Mitteln erfolgte nach dem Auflaufen der Schadpflanzen und der Kulturpflanzen in der Regel im 2 bis 4-Blattstadium; teilweise (wie angegeben) erfolgte die Applikation einzelner Wirkstoffe oder Wirkstoffkombinationen preemergent oder als Sequenzbehandlung teilweise preemergent und/oder postemergent.
Im Falle von Plantagenkulturen wurde in der Regel nur der Boden zwischen den einzelnen Kulturpflanzen mit den Wirkstoffen behandelt.
Nach der Anwendung, z. B. 2, 4, 6 und 8 Wochen nach Applikation wurde die Wirkung der Präparate optisch im Vergleich zu unbehandelten Kontrollen bonitiert (vgl. Bonitur in Beispiel 1). Die erfindungsgemäßen Mittel weisen auch im Feldversuch eine synergistische herbizide Wirksamkeit gegen ein breites Spektrum wirtschaftlich wichtiger Ungräser und Unkräuter auf. Der Vergleich zeigte, daß die erfindungsgemäßen Kombinationen meist mehr, teilweise erheblich mehr herbizide Wirkung aufweisen als die Summe der Wirkungen der Einzelherbizide und weist deshalb auf einen Synergismus hin. Außerdem lagen die Wirkungen in wesentlichen Abschnitten des Boniturzeitraums über den Erwartungswerten nach Colby (vgl. Bonitur in Beispiel 1) und weisen deshalb ebenfalls auf einen Synergismus hin. Die Kulturpflanzen dagegen wurden infolge der Behandlungen mit den herbiziden Mitteln nicht oder nur unwesentlich geschädigt.

5. Spezielle Versuchsbeispiele

Folgenden Abkürzungen werden in der Beschreibung und den nachfolgenden Tabellen verwendet:

g AS/ha = Gramm Aktivsubstanz (= 100% Wirkstoff) pro Hektar;

Die Summe der Wirkungen der Einzelapplikationen ist unter $E^A$ angegeben; Erwartungswerte nach Colby sind jeweils unter $E^C$ angegeben;

Beispiel 5.1

Entsprechend dem allgemeinen Beispiel unter Abschnitt 3 in Verbindung mit Abschnitt 2 (Nachauflaufverfahren) wurden bestimmte Kombinationen auf ihre herbizide Wirkung getestet. Die Ergebnisse sind in Tabelle 2 zusammengefasst.

Tabelle 2

| Wirkstoff(e) | Aufwandmenge [g AS/ha] | Herbizide Wirkung [%] an | |
|---|---|---|---|
| | | Poa trivialis | Festuca rubra |
| (A11) | 200 | 0 | 0 |
| (B2.1.1.1) | 600 | 88 | 87 |
| (A11)+(B2.1.1.1) | 200+600 | 94 ($E^A$ = 88, $E^C$ = 88) | 95 ($E^A$ = 87, $E^C$ = 87) |

Abkürzungen in Tabelle 2:
Bedingungen: Feldversuch, Applikation im Stadium 21 (Bestockungsbeginn) der Schadpflanzen, Auswertung 35 Tage nach Behandlung
(A11) = Verbindung (A11) aus Tabelle 1 (Verbindung (A)) = 2-Amino-4-[(1*R*)-6-methyl-indan-1-ylamino]-6-[(1 R)-1-fluoroethyl]-1,3,5-triazine
(B2.1.1.1) = Glufosinate-ammonium

Beispiel 5.2

Entsprechend dem allgemeinen Beispiel unter Abschnitt 3 in Verbindung mit Abschnitt 2 (Nachauflaufverfahren) wurden bestimmte Kombinationen auf ihre herbizide Wirkung getestet. Die Ergebnisse sind in Tabelle 3 zusammengefasst.

Tabelle 3

| Wirkstoff(e) | Aufwandmenge [g AS/ha] | Herbizide Wirkung [%] an Lolium multiflorum |
|---|---|---|
| (A11) | 200<br>300 | 20<br>50 |
| (B2.1.2.1) | 1080 | 18 |
| (A11)+(B2.1.2.1) | 200 + 1080 | 88 ($E^A$ = 38, $E^C$ = 35) |

Abkürzungen in Tabelle 3:
Bedingungen: Feldversuch, Applikation im 2-5-Blattstadium (Nachauflauf) der Schadpflanzen, Auswertung 55 Tage nach Behandlung
(A11) = Verbindung (A11) aus Tabelle 1 (Verbindung (A)) = 2-Amino-4-[(1*R*)-6-methyl-indan-1-ylamino]-6-[(1*R*)-1-fluoroethyl]-1,3,5-triazine
(B2.1.2.1) = Glyphosate-isopropylammonium

**Patentansprüche**

1. Herbizid-Kombination mit einem wirksamen Gehalt an Komponenten (A) und (B), wobei Komponente (A) ein oder mehrere Herbizide der Formel (I) oder deren Salze [Herbizide (A)],

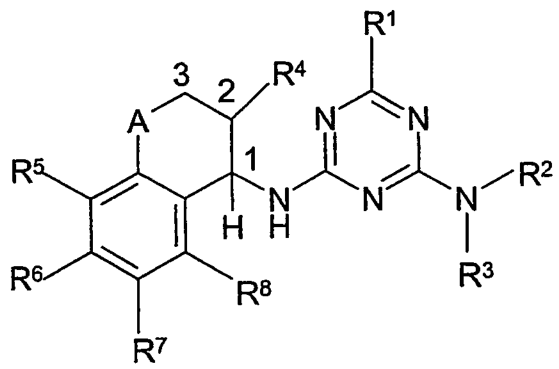

(I)

worin

$R^1$ H oder eine Gruppe der Formel $CZ^1Z^2Z^3$, wobei

$Z^1$ H, Halogen, $(C_1\text{-}C_6)$Alkyl, $(C_1\text{-}C_6)$Haloalkyl, [$(C_1\text{-}C_4)$Alkoxyl-$(C_1\text{-}C_6)$alkyl, $(C_3\text{-}C_6)$Cycloalkyl, das unsubstituiert oder durch einen oder mehrere Reste aus der Gruppe Halogen, $(C_1\text{-}C_4)$Alkyl und $(C_1\text{-}C_4)$ Haloalkyl substituiert ist, oder $(C_2\text{-}C_6)$Alkenyl, $(C_2\text{-}C_6)$Alkinyl, $(C_2\text{-}C_6)$Haloalkenyl, $(C_4\text{-}C_6)$Cycloalkenyl, $(C_4\text{-}C_6)$Halocycloalkenyl, $(C_1\text{-}C_6)$Alkoxy oder $(C_1\text{-}C_6)$Haloalkoxy,
$Z^2$ H, Halogen, $(C_1\text{-}C_6)$Alkyl oder $(C_1\text{-}C_4)$Alkoxy; oder
$Z^1$ und $Z^2$ zusammen mit dem Kohlenstoffatom der Gruppe $CZ^1Z^2Z^3$ einen $(C_3\text{-}C_6)$Cycloalkylrest oder $(C_4\text{-}C_6)$Cycloalkenylrest; wobei jeder der beiden letztgenannten Reste unsubstituiert oder durch einen oder mehrere Reste aus der Gruppe $(C_1\text{-}C_4)$Alkyl substituiert ist, und
$Z^3$ H, $(C_1\text{-}C_6)$Alkyl, $(C_1\text{-}C_4)$Alkoxy oder Halogen

bedeuten,
$R^2$ und $R^3$ jeweils unabhängig voneinander H, $(C_1\text{-}C_4)$Alkyl, $(C_1\text{-}C_4)$Haloalkyl, $(C_3\text{-}C_4)$Alkenyl, $(C_3\text{-}C_4)$Haloalkenyl, $(C_3\text{-}C_4)$Alkinyl, $(C_3\text{-}C_4)$Haloalkinyl oder einen Acylrest,
$R^4$ H, $(C_1\text{-}C_6)$Alkyl oder $(C_1\text{-}C_6)$Alkoxy,
$R^5$, $R^6$, und $R^7$ und $R^8$ jeweils unabhängig voneinander H, $(C_1\text{-}C_4)$Alkyl, $(C_1\text{-}C_3)$Haloalkyl, Halogen, $(C_1\text{-}C_3)$ Alkoxy, $(C_1\text{-}C_3)$Haloalkoxy oder Cyano und
A eine divalente Gruppe der Formel $CH_2$ oder O oder eine direkte Bindung

bedeuten,
und
Komponente (B) ein oder mehrere strukturell zu den jeweils enthaltenen Herbiziden (A) unterschiedliche Herbizide (B) aus der Gruppe der Verbindungen, welche aus

(B1) bodenwirksamen Herbiziden, welche besonders für die preemergente Applikation gegen monokotyle oder dikotyle Schadpflanzen geeignet sind,
(B2) blattwirksamen Herbiziden, welche besonders für die postemergente Applikation gegen monokotyle oder dikotyle Schadpflanzen geeignet sind, und
(B3) boden- und blattwirksamen Herbiziden, welche für die pre- oder postemergente Applikation gegen monokotyle oder dikotyle Schadpflanzen geeignet sind,

besteht,
bedeuten.

**2.** Herbizid-Kombination nach Anspruch 1, **dadurch gekennzeichnet, dass**

$R^1$ H oder eine Gruppe der Formel $CZ^1Z^2Z^3$, worin

$Z^1$ H, Halogen, $(C_1\text{-}C_4)$Alkyl, $(C_1\text{-}C_4)$Haloalkyl, [$(C_1\text{-}C_4)$Alkoxy]-$(C_1\text{-}C_6)$alkyl, $(C_3\text{-}C_6)$Cycloalkyl, das unsubstituiert oder durch einen oder mehrere Reste aus der Gruppe $(C_1\text{-}C_4)$Alkyl substituiert ist, oder $(C_2\text{-}C_4)$ alkenyl, $(C_2\text{-}C_4)$alkinyl, $(C_1\text{-}C_4)$Alkoxy oder $(C_1\text{-}C_4)$Haloalkoxy;

$Z^2$ H, Halogen, $(C_1-C_4)$Alkyl oder
$Z^1$ und $Z^2$ zusammen mit dem an die Reste gebundenen Kohlenstoffatom einen $(C_3-C_6)$Cycloalkylrest und
$Z^3$ H, $(C_1-C_4)$Alkyl, $(C_1-C_2)$Alkoxy oder Halogen,
bedeuten,

$R^2$ H, $(C_1-C_4)$Alkyl, $(C_1-C_4)$Haloalkyl, $(C_3-C_4)$Alkenyl, $(C_3-C_4)$Haloalkenyl, $(C_3-C_4)$Alkinyl, $(C_3-C_4)$Haloalkinyl oder einen Acylrest mit 1 bis 12 C-Atomen,
$R^3$ H, $(C_1-C_4)$Alkyl oder $(C_1-C_4)$Haloalkyl,
$R^4$ H, $(C_1-C_3)$Alkyl oder $(C_1-C_3)$Alkoxy;
$R^5$, $R^6$, und $R^7$ und $R^8$ jeweils unabhängig voneinander H, $(C_1-C_3)$Alkyl, Halogen, $(C_1-C_3)$Alkoxy,
A eine divalente Gruppe der Formel $CH_2$ oder O oder eine direkte Bindung, vorzugsweise $CH_2$ oder eine direkte Bindung, insbesondere eine direkte Bindung,

bedeuten.

**3.** Herbizid-Kombination nach Anspruch 1 oder 2, **dadurch gekennzeichnet, dass** Komponente (B) ein oder mehrere strukturell zu den jeweils enthaltenen Herbiziden (A) unterschiedliche Herbizide (B) aus der Gruppe der Verbindungen, welche aus

(B1.1.1) Tebuthiuron,
(B1.1.2) Sulfometuron(-methyl),
(B1.1.3) Flumioxazine,
(B1.1.4) Simazine,
(B1.1.5) Dichlobenil,
(B1.1.6) Trifluralin,
(B1.1.7) Pendimethalin,
(B1.1.8) Oxadiargyl,
(B1.1.9) Thiazopyr,
(B1.1.10) Oryzalin,
(B1.1.11) Propyzamide,
(B1.1.12) Terbacil,
(B1.2.1) Isoxaben,
(B1.2.2) Flazasulfuron,
(B2.1.1) Glufosinate und dessen Salze,
(B2.1.1.4) Bilanafos und dessen Salze,
(B2.1.2) Glyphosate dessen Salze,
(B2.1.3) Sulfosate,
(B2.1.4) Methylarsonsäure und deren Salze,
(B2.1.5) Foramsulfuron,
(B2.1.6) Iodosulfuron und dessen Ester und Salze,
(B2.1.7) Amicarbazone,
(B2.1.8) Propoxycarbazone und dessen Salze,
(B2.1.9) Metribuzin,
(B2.1.10) Metsulfuron und dessen Ester und Salze,
(B2.1.11) Naproanilide,
(B2.1.12) Imazapyr und dessen Salze,
(B2.1.13) Paraquat-salze,
(B2.1.14) Diquat-salze,
(B2.2.1) 2,4-D und dessen Ester und Salze,
(B2.2.2) Dicamba und dessen Salze,
(B2.2.3) Triclopyr und dessen Salze und Ester,
(B2.2.4) Diflufenzopyr und dessen Salze und Ester,
(B2.2.5) Fluroxypyr und dessen Salze und Ester,
(B2.2.6) Thifensulfuron-methyl,
(B2.2.7) Amidosulfuron und dessen Salze,
(B2.2.8) Tribenuron und dessen Ester und Salze,
(B2.2.9) Triasulfuron,
(B2.2.10) Picloram und dessen Ester und Salze,

(B2.2.11) Carfentrazone und dessen Ester und Salze,
(B2.2.12) Clopyralid und dessen Ester und Salze,
(B2.2.13) Butafenacil,
(B2.2.14) Amitrole,
(B2.3.1) Quinclorac,
(B3.1.1) Oxyfluorfen,
(B3.1.2) Diuron,
(B3.1.3) Bromacil,
(B3.1.4) Norflurazon,
(B3.1.5) Azafenidin,
(B3.1.6) Chlorsulfuron,
(B3.1.7) Imazapic,
(B3.1.8) Oxadiazon,
(B3.1.9) Diflufenican,
(B3.1.10) Ametryn,
(B3.1.11) Rimsulfuron und dessen Salze,
(B3.1.12) Trifloxysulfuron und dessen Salze,
(B3.1.13) Nicosulfuron und dessen Salze,
(B3.1.14) Asulam und dessen Salze
(B3.1.15) Isoxaflutole
(B3.2.1) Hexazinone,
(B3.2.2) Sulfentrazone und
(B3.2.3) Prometon

besteht, bedeutet.

4. Herbizid-Kombination nach einem der Ansprüche 1 bis 3, **dadurch gekennzeichnet, daß** sie als Komponente (B) einen oder mehrere Wirkstoffe aus der Gruppe Simazin (B1.1.4), Pendimethalin (B1.1.7), Oxadiargyl (B1.1.8), Isoxaben (B1.2.1), Foramsulfuron (B2.1.5), Iodosulfuron (B2.1.6), Iodosulfuron-methyl-natriumsalz (82.1.6.2), Amicarbazone (B2.1.7), Propoxycarbazone (B2.1.8), Propoxycarbazone-natriumsalz (B2.1.8.1), Metribuzin (B2.1.9), Glufosinate (B2.1.1), Glufosinate-ammonium (B2.1.1.1), Glyphosate (B2.1.2), Glyphosate-isopropylammonium (B2.1.2.1), Sulfosate (B2.1.3), Metsulfuron (B2.1.10), Metsulfuron-methyl (B2.1.10.1), Imazapyr (B2.1.12), Imazapyr-Säure (B2.1.12.1), Imazapyr-isopropylammonium (B2.1.12.2), Paraquat (B2.1.13), Paraquat-dichlorid (B2.1.13.1), Triclopyr (B2.2.3), Triclopyr-Säure (B2.2.3.1), Triclopyr-triethylammoniumsalz (B2.2.3.2), Triclopyr-butotylester (B2.2.3.3), Amidosulfuron (B2.2.7), Amitrole (B2.2.14), Diuron (B3.2), Oxyfluorfen (B3.1.1), Oxadiazon (B3.1.8), Diflufenican (B3.1.9), Bromacil (B3.3) und Norflurazon (B3.4) enthält.

5. Herbizid-Kombinationen nach einem der Ansprüche 1 bis 4, **dadurch gekennzeichnet, daß** sie die Wirkstoffkomponenten (A) und (B) in einem Gewichtsverhältnis von 1:8000 bis 800:1 enthalten.

6. Herbizid-Kombinationen nach einem der Ansprüche 1 bis 5, **dadurch gekennzeichnet, daß** sie eine oder mehrere weitere Komponenten aus der Gruppe enthaltend Pflanzenschutzmittelwirkstoffe anderer Art und im Pflanzenschutz übliche Zusatzstoffe oder Formulierungshilfsmittel enthalten.

7. Verfahren zur Bekämpfung von Schadpflanzen **dadurch gekennzeichnet, daß** man die Herbizide der Herbizid-Kombination, definiert gemäß einem der Ansprüche 1 bis 6, gemeinsam oder getrennt im Vorauflauf, Nachauflauf oder im Vor- und Nachauflauf auf die Pflanzen, Pflanzenteile, Pflanzensamen oder die Anbaufläche appliziert.

8. Verfahren nach Anspruch 7 zur Bekämpfung von Schadpflanzen auf Nichtkulturland oder in Plantagenkulturen.

9. Verwendung der nach einem der Ansprüche 1 bis 6 definierten Herbizid-Kombinationen zur Bekämpfung von Schadpflanzen.

## Claims

1. A herbicide combination comprising an effective amount of components (A) and (B), where component (A) is one or more herbicides of the formula (I) or salts thereof [herbicides (A)]

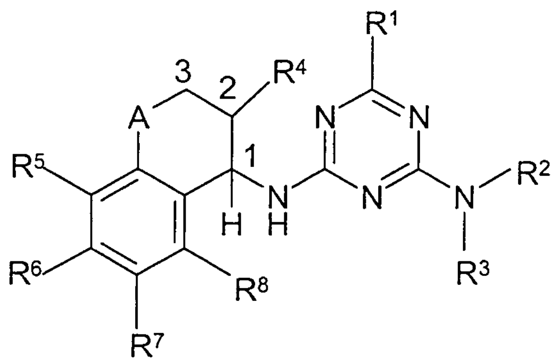

(I)

in which

$R^1$ is H or a group of the formula $CZ^1Z^2Z^3$, where

$Z^1$ is H, halogen, $(C_1-C_6)$-alkyl, $(C_1-C_6)$-haloalkyl, $[(C_1-C_4)$-alkoxy$]-(C_1-C_6)$-alkyl, $(C_3-C_6)$-cycloalkyl which is unsubstituted or substituted by one or more radicals selected from the group consisting of halogen, $(C_1-C_4)$ -alkyl and $(C_1-C_4)$-haloalkyl, or is $(C_2-C_6)$-alkenyl, $(C_2-C_6)$-alkynyl, $(C_2-C_6)$-haloalkenyl, $(C_4-C_6)$-cycloalkenyl, $(C_4-C_6)$-halocycloalkenyl, $(C_1-C_6)$ -alkoxy or $(C_1-C_6)$-haloalkoxy,
$Z^2$ is H, halogen, $(C_1-C_6)$ -alkyl or $(C_1-C_4)$-alkoxy; or
$Z^1$ and $Z^2$ together with the carbon atom of the group $CZ^1Z^2Z^3$ are a $(C_3-C_6)$-cycloalkyl radical or $(C_4-C_6)$-cycloalkenyl radical, where each of the two last-mentioned radicals is unsubstituted or substituted by one or more radicals selected from the group consisting of $(C_1-C_4)$-alkyl, and
$Z^3$ is H, $(C_1-C_6)$-alkyl, $(C_1-C_4)$-alkoxy or halogen,

$R^2$ and $R^3$ are each independently of one another H, $(C_1-C_4)$-alkyl, $(C_1-C_4)$ -haloalkyl, $(C_3-C_4)$-alkenyl, $(C_3-C_4)$ -haloalkenyl, $(C_3-C_4)$-alkynyl, $(C_3-C_4)$-haloalkynyl or an acyl radical;
$R^4$ is H, $(C_1-C_6)$-alkyl or $(C_1-C_6)$-alkoxy;
$R^5$, $R^6$, $R^7$ and $R^8$ are each independently of one another H, $(C_1-C_4)$-alkyl, $(C_1-C_3)$ -haloalkyl, halogen, $(C_1-C_3)$-alkoxy, $(C_1-C_3)$-haloalkoxy or cyano;
A is a divalent group of the formula $CH_2$ or O or a direct bond,

and
component (B) is one or more herbicides which are structurally different from the herbicides (A) present in each case, from the group of compounds consisting of

(B1) soil-acting herbicides particularly suitable for pre-emergence application against monocotyledonous or dicotyledonous harmful plants,
(B2) foliar-acting herbicides particularly suitable for post-emergence application against monocotyledonous or dicotyledonous harmful plants, and
(B3) soil-acting and foliar-acting herbicides suitable for pre- or post-emergence application against monocotyledonous or dicotyledonous harmful plants.

**2.** The herbicide combination as claimed in claim 1 wherein

$R^1$ is H or a group of the formula $CZ^1Z^2Z^3$ in which

$Z^1$ is H, halogen, $(C_1-C_4)$ -alkyl, $(C_1-C_4)$-haloalkyl, $[(C_1-C_4)$-alkoxy$]-(C_1-C_6)$ -alkyl, $(C_3-C_6)$-cycloalkyl, which is unsubstituted or substituted by one or more radicals selected from the group consisting of $(C_1-C_4)$-alkyl, or is $(C_2-C_4)$ -alkenyl, $(C_2-C_4)$ -alkynyl, $(C_1-C_4)$-alkoxy or $(C_1-C_4)$ -haloalkoxy;
$Z^2$ is H, halogen or $(C_1-C_4)$-alkyl, or
$Z^1$ and $Z^2$ together with the carbon atom attached to the radicals are a $(C_3-C_6)$-cycloalkyl radical and
$Z^3$ is H, $(C_1-C_4)$-alkyl, $(C_1-C_2)$-alkoxy or halogen,

$R^2$ is H, $(C_1-C_4)$ -alkyl, $(C_1-C_4)$ -haloalkyl, $(C_3-C_4)$-alkenyl, $(C_3-C_4)$ -haloalkenyl, $(C_3-C_4)$ -alkynyl, $(C_3-C_4)$-haloalkynyl or an acyl radical having 1 to 12 carbon atoms

$R^3$ is H, $(C_1-C_4)$-alkyl or $(C_1-C_4)$-haloalkyl,
$R^4$ is H, $(C_1-C_3)$-alkyl or $(C_1-C_3)$-alkoxy;
$R^5$, $R^6$, and $R^7$ and $R^8$ are each independently of one another H, $(C_1-C_3)$ -alkyl, halogen, $(C_1-C_3)$ -alkoxy,
A is a divalent group of the formula $CH_2$ or O or a direct bond, preferably $CH_2$ or a direct bond, in particular a direct bond.

**3.** The herbicide combination as claimed in claim 1 or 2 wherein component (B) is one or more herbicides (B) which are structurally different from the herbicides (A) present in each case, from the group of compounds consisting of

(B1.1.1) tebuthiuron,
(B1.1.2) sulfometuron(-methyl),
(B1.1.3) flumioxazine,
(B1.1.4) simazine,
(B1.1.5) dichlobenil,
(B1.1.6) trifluralin,
(B1.1.7) pendimethalin,
(B1.1.8) oxadiargyl,
(B1.1.9) thiazopyr,
(B1.1.10) oryzalin,
(B1.1.11) propyzamide,
(B1.1.12) terbacil,
(B1.2.1) isoxaben,
(B1.2.2) flazasulfuron,
(B2.1.1) glufosinate and its salts,
(B2.1.1.4) bilanafos and its salts,
(B2.1.2) glyphosate and its salts,
(B2.1.3) sulfosate,
(B2.1.4) methylarsonic acid and its salts,
(B2.1.5) foramsulfuron,
(B2.1.6) iodosulfuron and its esters and salts,
(B2.1.7) amicarbazone,
(B2.1.8) propoxycarbazone and its salts,
(B2.1.9) metribuzin,
(B2.1.10) metsulfuron and its esters and salts,
(B2.1.11) naproanilide,
(B2.1.12) imazapyr and its salts,
(B2.1.13) paraquat salts,
(B2.1.14) diquat salts,
(B2.2.1) 2,4-D and its esters and salts,
(B2.2.2) dicamba and its salts,
(B2.2.3) triclopyr and its salts and esters,
(B2.2.4) diflufenzopyr and its salts and esters,
(B2.2.5) fluroxypyr and its salts and esters,
(B2.2.6) thifensulfuron-methyl,
(B2.2.7) amidosulfuron and its salts,
(B2.2.8) tribenuron and its esters and salts,
(B2.2.9) triasulfuron,
(B2.2.10) picloram and its esters and salts,
(B2.2.11) carfentrazone and its esters and salts,
(B2.2.12) clopyralid and its esters and salts,
(B2.2.13) butafenacil,
(B2.2.14) amitrole,
(B2.3.1) quinclorac,
(B3.1.1) oxyfluorfen,
(B3.1.2) diuron,
(B3.1.3) bromacil,
(B3.1.4) norflurazon,

(B3.1.5) azafenidin,
(B3.1.6) chlorsulfuron,
(B3.1.7) imazapic,
(B3.1.8) oxadiazon,
(B3.1.9) diflufenican,
(B3.1.10) ametryn,
(B3.1.11) rimsulfuron and its salts,
(B3.1.12) trifloxysulfuron and its salts,
(B3.1.13) nicosulfuron and its salts,
(B3.1.14) asulam and its salts,
(B3.1.15) isoxaflutole
(B3.2.1) hexazinone,
(B3.2.2) sulfentrazone and
(B3.2.3) prometon.

**4.** The herbicide combination as claimed in any of claims 1 to 3 which comprises, as component (B), one or more active compounds selected from the group consisting of simazine (B1.1.4), pendimethalin (B1.1.7), oxadiargyl (B1.1.8), isoxaben (B1.2.1), foramsulfuron (B2.1.5), iodosulfuron (B2.1.6), iodosulfuron-methyl sodium salt (B2.1.6.2), amicarbazone (B2.1.7), propoxycarbazone (B2.1.8), propoxycarbazone sodium salt (B2.1.8.1), metribuzin (B2.1.9), glufosinate (B2.1.1), glufosinate-ammonium (B2.1.1.1), glyphosate (B2.1.2), glyphosate-isopropylammonium (B2.1.2.1), sulfosate (B2.1.3), metsulfuron (B2.1.10), metsulfuron-methyl (B2.1.10.1), imazapyr (B2.1.12), imazapyr acid (B2.1.12.1), imazapyr-isopropylammonium (B2.1.12.2), paraquat (B2.1.13), paraquat dichloride (B2.1.13.1), triclopyr (B2.2.3), triclopyr acid (B2.2.3.1), triclopyr-triethylammonium salt (B2.2.3.2), triclopyr-butotyl ester (B2.2.3.3), amidosulfuron (B2.2.7), amitrole (B2.2.14), diuron (B3.2), oxyfluorfen (B3.1.1), oxadiazon (B3.1.8), diflufenican (B3.1.9), bromacil (B3.3) and norflurazon (B3.4).

**5.** The herbicide combination as claimed in any of claims 1 to 4 wherein active compound components (A) and (B) are present in a weight ratio of from 1:8000 to 800:1.

**6.** The herbicide combination as claimed in any of claims 1 to 5 which comprises one or more further components selected from the group consisting of crop protection agents of a different type, formulation auxiliaries or additives customary in crop protection.

**7.** A method for controlling harmful plants which comprises applying the herbicides of the herbicide combination as defined in any of claims 1 to 6 together or separately by the pre-emergence method, by the post-emergence method or by the pre-emergence and the post-emergence method onto the plants, parts of plants, plant seeds or the area where the plants grow.

**8.** The method as claimed in claim 7 for the control of harmful plants on non-crop land or in plantation crops.

**9.** The use of the herbicide combinations defined in any of claims 1 to 6 for controlling harmful plants.

**Revendications**

**1.** Combinaison d'herbicides ayant une teneur efficace en composants (A) et (B), dans laquelle : le composant (A) représente un ou plusieurs herbicides de formule (I), ou leurs sels, [herbicides (A)],

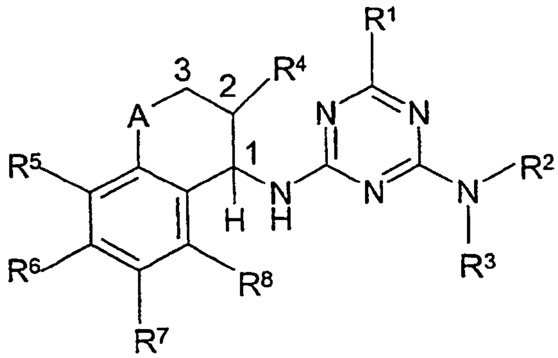

(I)

dans laquelle

$R^1$ représente un atome d'hydrogène ou un groupe de formule $CZ^1Z^2Z^3$, dans laquelle

$Z^1$ représente un atome d'hydrogène, un atome d'halogène, un groupe alkyle (en $C_1$ à $C_6$), halogénoalkyle (en $C_1$ à $C_6$), [alcoxy (en $C_1$ à $C_4$)]-alkyle (en $C_1$ à $C_6$), cycloalkyle (en $C_3$ à $C_6$), qui est non substitué ou substitué par un ou plusieurs groupes choisis dans le groupe constitué par un atome d'halogène, un groupe alkyle (en $C_1$ à $C_4$) et un groupe halogénoalkyle (en $C_1$ à $C_4$), ou
un groupe alcényle (en $C_2$ à $C_6$), alcynyle (en $C_2$ à $C_6$), halogénoalcényle (en $C_2$ à $C_6$), cycloalcényle (en $C_4$ à $C_6$), halogénocycloalcényle (en $C_4$ à $C_6$), alcoxy (en $C_1$ à $C_6$) ou halogénoalcoxy (en $C_1$ à $C_6$),
$Z^2$ représente un atome d'hydrogène, un atome d'halogène, un groupe alkyle (en $C_1$ à $C_6$) ou un groupe alcoxy (en $C_1$ à $C_4$) ; ou
$Z^1$ et $Z^2$ représentent, conjointement avec l'atome de carbone du groupe $CZ^1Z^2Z^3$, un groupe cycloalkyle (en $C_3$ à $C_6$) ou cycloalcényle (en $C_4$ à $C_6$) ; où chacun des deux derniers groupes mentionnés est non substitué ou substitué par un ou plusieurs groupes choisis dans le groupe constitué par un groupe alkyle (en $C_1$ à $C_4$), et
$Z^3$ représente un atome d'hydrogène, un groupe alkyle (en $C_1$ à $C_6$), un groupe alcoxy (en $C_1$ à $C_4$) ou un atome d'halogène,

$R^2$ et $R^3$ représentent chacun, indépendamment l'un de l'autre, un atome d'hydrogène, un groupe alkyle (en $C_1$ à $C_4$), halogénoalkyle (en $C_1$ à $C_4$), alcényle (en $C_3$ à $C_4$), halogénoalkyle (en $C_3$ à $C_4$), alcynyle (en $C_3$ à $C_4$), halogénoalcynyle (en $C_3$ à $C_4$) ou acyle,
$R^4$ représente un atome d'hydrogène, un groupe alkyle (en $C_1$ à $C_6$) ou un groupe alcoxy (en $C_1$ à $C_6$),
$R^5$, $R^6$, R7 et $R^8$ représentent chacun, indépendamment les uns des autres, un atome d'hydrogène, un groupe alkyle (en $C_1$ à $C_4$), un groupe halogénoalkyle (en $C_1$ à $C_3$), un atome d'halogène, un groupe alcoxy (en $C_1$ à $C_3$), un groupe halogénoalcoxy (en $C_1$ à $C_3$) ou un groupe cyano, et
A représente un groupe divalent de formule $CH_2$ ou O ou une liaison directe,

et
le composant (B) représente un ou plusieurs herbicides (B), structurellement différents de chacun des herbicides (A) présents, choisis dans le groupe de composés constitué par :

(B1) les herbicides efficaces sur les sols, qui sont particulièrement appropriés au traitement en prélevée contre les plantes adventices monocotylédones ou dicotylédones,
(B2) les herbicides efficaces sur les feuilles, qui sont particulièrement appropriés au traitement en postlevée contre les plantes adventices monocotylédones ou dicotylédones, et
(B3) les herbicides efficaces sur les sols et sur les feuilles, qui sont particulièrement appropriés au traitement en prélevée ou en postlevée contre les plantes adventices monocotylédones ou dicotylédones. 1,

**2.** Combinaison d'herbicides selon la revendication **caractérisée en ce que** :

$R^1$ représente un atome d'hydrogène ou un groupe de formule $CZ^1Z^2Z^3$, dans laquelle

$Z^1$ représente un atome d'hydrogène, un atome d'halogène, un groupe alkyle (en $C_1$ à $C_4$), halogénoalkyle

(en $C_1$ à $C_4$), [alcoxy (en $C_1$ à $C_4$)]-alkyle (en $C_1$ à $C_6$), cycloalkyle (en $C_3$ à $C_6$), qui est non substitué ou substitué par un ou plusieurs groupes choisis dans le groupe constitué par un groupe alkyle (en $C_1$ à $C_4$), ou un groupe alcényle (en $C_2$ à $C_4$), alcynyle (en $C_2$ à $C_4$), alcoxy (en $C_1$ à $C_4$) ou halogénoalcoxy (en $C_1$ à $C_4$) ;

$Z^2$ représente un atome d'hydrogène, un atome d'halogène, un groupe alkyle (en $C_1$ à $C_4$) ou

$Z^1$ et $Z^2$ représentent, conjointement avec l'atome de carbone lié aux groupes, un groupe cycloalkyle (en $C_3$ à $C_6$) et

$Z^3$ représente un atome d'hydrogène, un groupe alkyle (en $C_1$ à $C_4$), un groupe alcoxy (en $C_1$ à $C_2$) ou un atome d'halogène,

$R^2$ représente un atome d'hydrogène, un groupe alkyle (en $C_1$ à $C_4$), halogénoalkyle (en $C_1$ à $C_4$), alcényle (en $C_3$ à $C_4$), halogénoalcényle (en $C_3$ à $C_4$), alcynyle (en $C_3$ à $C_4$), halogénoalcynyle en ($C_3$ à $C_4$) ou un groupe acyle contenant 1 à 12 atomes de carbone,

$R^3$ représente un atome d'hydrogène, un groupe alkyle (en $C_1$ à $C_4$) ou un groupe halogénoalkyle (en $C_1$ à $C_4$),

$R^4$ représente un atome d'hydrogène, un groupe alkyle (en $C_1$ à $C_3$) ou un groupe alcoxy (en $C_1$ à $C_3$) ;

$R^5$, $R^6$, $R^7$ et $R^8$ représentent chacun, indépendamment les uns des autres, un atome d'hydrogène, un groupe alkyle (en $C_1$ à $C_3$), un atome d'halogène, un groupe alcoxy (en $C_1$ à $C_3$),

A représente un groupe divalent de formule $CH_2$ ou O ou une liaison directe, de préférence $CH_2$ ou une liaison directe, en particulier une liaison directe.

**3.** Combinaison d'herbicides selon la revendication 1 ou 2, **caractérisée en ce que** :

le composant (B) représente un ou plusieurs herbicides (B), structurellement différents de chacun des herbicides (A) présents, choisis dans le groupe de composés constitué par :

(B1.1.1) le tébuthiuron,
(B1.1.2) le sulfometuron(-méthyl),
(B1.1.3) la flumioxazine,
(B1.1.4) la simazine,
(B1.1.5) le dichlobenil,
(B1.1.6) le trifluralin,
(B1.1.7) la pendiméthaline,
(B1.1.8) l'oxadiargyl,
(B1.1.9) le thiazopyr,
(B1.1.10) l'oryzalin,
(B1.1.11) le propyzamide,
(B1.1.12) le terbacil,
(B1.2.1) l'isoxaben,
(B1.2.2) le flazasulfuron,
(B2.1.1) le glufosinate et ses sels,
(B2.1.1.4) le bilanafos et ses sels,
(B2.1.2) le glyphosate et ses sels,
(B2.1.3) le sulfosate,
(B2.1.4) l'acide méthylarsonique et ses sels,
(B2.1.5) le foramsulfuron,
(B2.1.6) l'iodosulfuron et ses esters et sels,
(B2.1.7) l'amicarbazone,
(B2.1.8) la propoxycarbazone et ses sels,
(B2.1.9) la métribuzine,
(B2.1.10) le metsulfuron et ses esters et sels,
(B2.1.11) le naproanilide,
(B2.1.12) l'imazapyr et ses sels,
(B2.1.13) les sels de paraquat,
(B2.1.14) les sels de diquat,
(B2.2.1) le 2,4-D et ses esters et sels,
(B2.2.2) le dicamba et ses sels,
(B2.2.3) le triclopyr et ses sels et esters,
(B2.2.4) le diflufenzopyr et ses sels et esters,

(B2.2.5) le fluroxypyr et ses sels et esters,
(B2.2.6) le thifensulfuron-méthyl,
(B2.2.7) l'amidosulfuron et ses sels,
(B2.2.8) le tribenuron et ses esters et sels,
(B2.2.9) le triasulfuron,
(B2.2.10) le picloram et ses esters et sels,
(B2.2.11) la carfentrazone et ses esters et sels,
(B2.2.12) le clopyralid et ses esters et sels,
(B2.2.13) le butafenacil,
(B2.2.14) l'amitrole,
(B2.3.1) le quinclorac,
(B3.1.1) l'oxyfluorfen,
(B3.1.2) le diuron,
(B3.1.3) le bromacil,
(B3.1.4) le norflurazon,
(B3.1.5) l'azafenidin,
(B3.1.6) le chlorsulfuron,
(B3.1.7) l'imazapic,
(B3.1.8) l'oxadiazon,
(B3.1.9) le diflufenican,
(B3.1.10) l'amétryne,
(B3.1.11) le rimsulfuron et ses sels,
(B3.1.12) le trifloxysulfuron et ses sels,
(B3.1.13) le nicosulfuron et ses sels,
(B3.1.14) l'asulam et ses sels
(B3.1.15) l'isoxaflutole,
(B3.2.1) l'hexazinone,
(B3.2.2) la sulfentrazone et
(B3.2.3) le prometon.

**4.** Combinaison d'herbicides selon l'une quelconque des revendications 1 à 3, **caractérisée en ce qu'**elle contient, en tant que composant (B), une ou plusieurs matières actives choisies dans le groupe constitué par la simazine (B1.1.4), la pendiméthaline (B1.1.7), l'oxadiargyl (B1.1.8), l'isoxaben (B1.2.1), le foramsulfuron (B2.1.5), l'iodosulfuron (B2.1.6), l'iodosulfuron-méthyl, sel sodique (B2.1.6.2), l'amicarbazone (B2.1.7), la propoxycarbazone (B2.1.8), la propoxycarbazone, sel sodique (B2.1.8,1), la métribuzine (B2.1.9), le glufosinate (B2.1.1), le glufosinate-ammonium (B2.1.1.1), le glyphosate (B2.1.2), le glyphosate-isopropylammonium (B2.1.2.1), le sulfosate (B2.1.3), le metsulfuron (B2.1.10), le metsulfuron-méthyl (B2.1.10,1), l'imazapyr (B2.1.12), l'acide d'imazapyr (B2.1.12,1), l'imazapyr-isopropylammonium (B2.1.12.2), le paraquat (B2.1.13), le dichlorure de paraquat (B2.1.13.1), le triclopyr (B2.2.3), l'acide de triclopyr (B2.2.3.1), le triclopyr, sel de triéthylammonium (B2.2.3.2), le triclopyr, ester butotylique (B2.2.3.3), l'amidosulfuron (B2.2.7), l'amitrole (B2.2.14), le diuron (B3.2), l'oxyfluorfen (B3.1.1), l'oxadiazon (B3.1.8), le diflufenican (B3.1.9), le bromacil (B3.3) et le norflurazon (B3.4).

**5.** Combinaisons d'herbicides selon l'une quelconque des revendications 1 à 4, **caractérisées en ce qu'**elles contiennent les composants actifs (A) et (B) dans un rapport pondéral de 1:8000 à 800:1.

**6.** Combinaisons d'herbicides selon l'une quelconque des revendications 1 à 5, **caractérisées en ce qu'**elles contiennent un ou plusieurs autres composants choisis dans le groupe contenant les matières actives phytosanitaires d'un autre type et les additifs ou les adjuvants de formulation habituels pour la protection phytosanitaire.

**7.** Procédé pour lutter contre les plantes adventices, **caractérisé en ce que** les herbicides de la combinaison d'herbicides définie selon l'une quelconque des revendications 1 à 6 sont appliqués ensemble ou séparément en prélevée, en postlevée ou en prélevée et en postlevée sur les plantes, les parties de plantes, les graines de plantes ou sur les terres cultivées.

**8.** Procédé selon la revendication 7, pour lutter contre les plantes adventices sur les terres non cultivées ou dans les plantations.

**9.** Utilisation des combinaisons d'herbicides définies selon l'une quelconque des revendications 1 à 6, pour lutter

contre les plantes adventices.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9731904 A
- US 6069114 A
- WO 0016627 A
- WO 9107874 A
- EP 333131 A
- EP 269806 A
- EP 174562 A
- EP 346620 A
- WO 9108202 A
- WO 9507897 A
- EP 86750 A
- EP 94349 A
- EP 191736 A
- EP 0492366 A
- EP 0582198 A
- JP 60087254 A
- WO 9745016 A
- WO 9916744 A
- RU 15525
- EP 0221044 A
- EP 0131624 A
- WO 9211376 A
- WO 9214827 A
- WO 9119806 A
- EP 0257993 A
- US 5013659 A
- EP 0142924 A
- EP 0193259 A
- WO 9113972 A


### In der Beschreibung aufgeführte Nicht-Patentliteratur


- The Pesticide Manual. British Crop Protection Council, 2003
- The Pesticide Manual. The British Crop Protection Council, 2003
- **SAMBROOK et al.** Molecular Cloning, A Laboratory Manual. Cold Spring Harbor Laboratory Press, 1989
- **WINNACKER.** Gene und Klone. VCH, 1996
- **CHRISTOU.** Trends in Plant Science. 1996, vol. 1, 423-431
- **BRAUN et al.** *EMBO J.,* 1992, vol. 11, 3219-3227
- **WOLTER et al.** *Proc. Natl. Acad. Sci. USA,* 1988, vol. 85, 846-850
- **SONNEWALD et al.** *Plant J.,* 1991, vol. 1, 95-106
- **WINNACKER-KÜCHLER.** Chemische Technologie. C. Hanser Verlag, 1986, vol. 7
- **VAN VALKENBURG.** Pesticides Formulations. Marcel Dekker, 1973
- **K. MARTENS.** Spray Drying Handbook. G. Goodwin Ltd, 1979
- **WATKINS.** Handbook of Insecticide Dust Diluents and Carriers. Darland Books
- **H.V. OLPHEN.** Introduction to Clay Colloid Chemistry. J. Wiley & Sons
- **MARSDEN.** Solvents Guide. Interscience, 1950
- **MCCUTCHEON'S.** Detergents and Emulsifiers Annual. MC Publ. Corp,
- **SISLEY ; WOOD.** Encyclopedia of Surface Active Egents. Chem. Publ. Co. Inc, 1964
- **SCHÖNFELDT.** Grenzflächenaktive Äthylenoxidaddukte. Wiss. Verlagsgesellschaft, 1976
- **S. R. COLBY.** *Weeds,* 1967, vol. 15, 20-22